# EUROPÄISCHE PATENTSCHRIFT

(11) **EP 4 483 480 B1**
(45) Veröffentlichungstag und Bekanntmachung des Hinweises auf die Patenterteilung: **18.06.2025**
(21) Anmeldenummer: 23723822.5
(22) Anmeldetag: 16.03.2023
(51) Int. Cl.: H02K 41/03

(54) **DREH-HUB-AKTUATOR**
ROTATING-LIFTING ACTUATOR
ACTIONNEUR À MOUVEMENT DE TRANSLATION ET ROTATION

(30) Priorität: 16.03.2022 DE 102022106169
(43) Veröffentlichungstag der Anmeldung: 01.01.2025
(73) Patentinhaber: FERTIG Motors GmbH, 97828 Marktheidenfeld (DE)
(72) Erfinder: KARNEHM, Valentin, 97080 Würzburg (DE)
(74) Vertreter: Patentanwaltskanzlei WILHELM & BECK
(86) Internationale Anmeldenummer: PCT/EP2023/025120
(87) Internationale Veröffentlichungsnummer: WO 2023/174584

(56) Entgegenhaltungen:
- EP-A1- 1 780 878
- DE-A1- 102014 105 677
- JP-A- 2004 343 903

## Beschreibung

Die Erfindung betrifft einen Dreh-Hub-Aktuator.

Bei einer Vielzahl von Anwendungen in der Automatisierungstechnik sind kombinierte Dreh- und Hubbewegungen durchzuführen. Dies gilt beispielweise für das Einschrauben einer Schraube oder das Aufschrauben eines Deckels auf einen Behälter. Auch ist es oft erforderlich, im Rahmen eines Produktions- oder Arbeitsprozesses einen Gegenstand um einen bestimmten Winkel zu drehen. Hierzu muss der Gegenstand gefasst, gehoben, gedreht und anschließend wieder abgelegt werden. Der Gesamtvorgang umfasst also zumindest eine Dreh- und mehrere Hubbewegungen.

Zum Durchführen von kombinierten Dreh- und Hubbewegungen werden vielfach Dreh-Hub-Aktuatoren eingesetzt, bei denen ein Drehmotor und ein Linearmotor mechanisch verbunden sind. Die drehende Bewegung und die lineare Bewegung der Aktuatorwelle des Dreh-Hub-Aktuators erfolgen dabei durch die mechanische Kombination der zwei eigenständigen Motoren.

So ist aus der EP 2 733 830 A1 ein Dreh-Hub-Aktuator bekannt, bei dem ein Linearmotor einem Drehmotor vorgesetzt ist. Der Drehmotor weist einen hohlen Rotor auf, durch den eine Aktuatorwelle hindurchgeführt ist und der mit der Aktuatorwelle kinematisch gekoppelt ist. Der Linearmotor umfasst einen zur Aktuatorwelle koaxial angeordneten Läufer, der mit der Aktuatorwelle kinematisch in Bezug auf die axiale Bewegung des Läufers gekoppelt ist.

In der EP 3 300 229 A1 ist ein weiterer Dreh-Hub-Aktuator beschrieben, bei dem ein Linearmotor seitlich neben einem Drehmotor angeordnet ist, wobei die Längsachse einer sich durch einen hohlen Rotor des Drehmotors hindurch erstreckenden Aktuatorwelle parallel zur Bewegungsachse eines Läufers des Linearmotors ausgerichtet ist. Die Längsenden von Aktuatorwelle und Läufer sind mechanisch so gekoppelt, dass die axiale Bewegung des Läufers auf die Aktuatorwelle übertragen wird.

Bei den bekannten Dreh-Hub-Aktuatoren sind der Drehmotor und der Linearmotor zwei eigenständige Motoren, was einen großen Bauraum erforderlich macht und außerdem zu einer hohen Trägheit beim Durchführen von kombinierten Dreh- und Hubbewegungen führt. Auch summiert sich der Verschleiß der mechanischen Teile durch die zwei Motoren auf.

Aus der EP 1780 878 A1 ist ein Dreh-Hub-Aktuator mit den Merkmalen der Oberbegriffs des Anspruch 1 bekannt. Ein weiterer Dreh-Hub-Aktuator ist in der JP 2004 343903 A beschrieben.

Es ist eine Aufgabe, einen kompakten und verschleißarmen Dreh-Hub-Aktuator mit reduzierter Trägheit bereitzustellen.

Die Aufgabe wird mit einem erfindungsgemäßen Dreh-Hub-Aktuator gemäß Anspruch 1 gelöst. Bevorzugte Weiterbildungen der Erfindung sind in den abhängigen Ansprüchen angegeben.

Ein Dreh-Hub-Aktuator weist einen hohlzylinderförmigen Stator, einen Rotor, der koaxial im hohlzylinderförmigen Stator angeordnet ist, und eine Steuereinheit auf. Der Stator umfasst eine Mehrzahl von Hohlzylinderabschnitten, wobei jeder Hohlzylinderabschnitt eine Mehrzahl von über den Hohlzylinderabschnittsumfang verteilt angeordneten Spulen umfasst. Der Rotor weist eine Mehrzahl von Wellenabschnitten auf, wobei jeder Wellenabschnitt eine Mehrzahl von über den Wellenabschnittsumfang verteilt angeordneten Permanentmagneten umfasst. Die Polung der Permanentmagnete des Rotors wechselt sich dabei derart ab, dass sich ein Schachbrettmuster ergibt. Die Steuereinheit ist ausgelegt, für die Drehbewegung des Rotors die Spulen der Hohlzylinderabschnitte des Stators so zu bestromen, dass längs der Hohlzylinderabschnitte ein magnetisches Wanderfeld erzeugt wird, wobei die bestromten Spulenreihen längs der Hohlzylinderabschnitte wenigstens teilweise abwechselnd gegenläufig bestromt werden, und /oder die Steuereinheit ist weiter ausgelegt, für die Hubbewegung des Rotors die Spulen der Hohlzylinderabschnitte des Stators so zu bestromen, dass quer zu den Hohlzylinderabschnitten ein magnetisches Wanderfeld erzeugt wird, wobei die bestromten Spulenreihen quer zu den Hohlzylinderabschnitten wenigstens teilweise abwechselnd gegenläufig bestromt werden.

Beim vorstehenden Dreh-Hub-Aktuator sind Funktionsprinzipien von Linearmotor und Drehmotor in einem gemeinsamen Motor miteinander verbunden, was zu einem reduzierten mechanischen Verschleiß führt. Der Dreh-Hub-Aktuator zeichnet sich ferner durch einen kleinen Bauraum und eine geringere Trägheit aus. Mit dem Dreh-Hub-Aktuator lassen sich hochdynamische Pick & Place-Anwendungen sowie Dreh-Hub-Aufgaben unter beengten Platzverhältnissen ausführen.

Die Permanentmagneten des Dreh-Hub-Aktuators auf dem Wellenabschnittsumfang jedes Wellenabschnitts können einen Ring bilden, wobei die Permanentmagnete auf dem Wellenabschnittsumfang des Wellenabschnitts jeweils die Form eines gekrümmten Rechtecks besitzen, wobei sich die Polung der aneinander angrenzenden Permanentmagnete auf dem Wellenabschnitt jeweils abwechselt, und wobei die Wellenabschnitte jeweils so angeordnet sind, dass sich die Polung der aneinander angrenzenden Permanentmagnete von benachbarten Wellenabschnitten abwechselt.

Diese Auslegung des Dreh-Hub-Aktuators ermöglicht eine Schraubenbewegung des Rotors mit Drehungen von mehr als 360⁰ bei gleichzeitig kompaktem Aufbau.

Bei dem Dreh-Hub-Aktuator kann die Anzahl der Spulen pro Hohlzylinderabschnitt größer als die Anzahl der Permanentmagnete pro Wellenabschnitt sein.

Mit dieser Auslegung des Dreh-Hub-Aktuators werden Rastmomente zwischen den Permanentmagneten und den Spulen bei der Drehbewegung verhindert.

Die Spulen des Dreh-Hub-Aktuators werden in einem Dreiphasen-Wechselstrom-Modus betrieben, wobei jeder Hohlzylinderabschnitt auf seinem Umfang verteilt jeweils drei Spulen oder ein N-faches von den drei Spulen aufweist, und wobei in Längsrichtung des hohlzylinderförmigen Stators drei Hohlzylinderabschnitte oder ein N-faches von den drei Hohlzylinderabschnitten vorgesehen sind.

Der Dreiphasen-Wechselstrom-Modus zum Betrieb des Dreh-Hub-Aktuators vereinfacht die Steuerung der Bestromung der Spulen des Stators.

Bei dem Dreh-Hub-Aktuator wird eine von vier Permanentmagneten in zwei Wellenabschnitten des Rotors aufgespannte äußere Umfangsfläche des Rotors von einer von den neun Spulen in drei Hohlzylinderabschnitte des Stators aufgespannten inneren Umfangsfläche des Stators abgedeckt.

Mit diesem Aufbau können Rastmomente zwischen den Permanentmagneten und den Spulen bei der Dreh-Hub-Bewegung verhindert werden. Die Bestromung der aus neun Spulen aufgespannten Umfangsfläche des Stators kann identisch auf weitere Bereiche der drei Hohlzylinderabschnitte des Stators mit neun Spulen übertragen werden.

Die Steuereinheit des Dreh-Hub-Aktuators kann ausgelegt sein, für die Drehbewegung des Rotors von den drei nebeneinanderliegenden Hohlzylinderabschnitten zwei Spulenreihen längs der Hohlzylinderabschnitten gegenläufig zu bestromen, wobei die Steuereinheit ausgelegt ist, für die Hubbewegung des Rotors in den drei nebeneinanderliegenden Hohlzylinderabschnitten zwei Spulenreihen quer zu den Hohlzylinderabschnitten gegenläufig zu bestromen.

Mit dieser Vorgehensweise kann eine Glättung der Drehbewegung bei gleichzeitiger Stromeinsparung erreicht werden.

Die Steuereinheit des Dreh-Hub-Aktuators kann ausgelegt sein, für die Drehbewegung des Rotors von den drei nebeneinanderliegenden Hohlzylinderabschnitten eine Spulenreihe längs der Hohlzylinderabschnitten nicht zu bestromen, und für die Hubbewegung des Rotors in den drei nebeneinanderliegenden Hohlzylinderabschnitten eine Spulenreihen quer zu den Hohlzylinderabschnitten nicht zu bestromen.

Mit dieser Vorgehensweise kann eine Glättung der Hubbewegung bei gleichzeitiger Stromeinsparung erreicht werden.

Die Steuereinheit des Dreh-Hub-Aktuators kann ausgelegt sein, die Spulen der Hohlzylinderabschnitte des Stators einzeln mit Wechselstrom zu beaufschlagen, um in der Spule jeweils den Phasenstrom einzustellen, der für das längs der Hohlzylinderabschnitte hervorzurufende magnetische Wanderfeld und für das quer zu den Hohlzylinderabschnitten hervorzurufende magnetische Wanderfeld zur Ausführung einer vorgegebenen Hub- und/oder Drehbewegung des Rotors notwendig ist.

Mit dieser Vorgehensweise kann eine optimierte und ruckfreie Dreh-Hub-Bewegung erreicht werden.

Die Steuereinheit des Dreh-Hub-Aktuators kann ausgelegt sein, zur Ausführung einer vorgegebenen Dreh- und Hubbewegung des Rotors Hohlzylinderabschnitte des Stators für die Drehbewegung des Rotors und weitere Hohlzylinderabschnitte des Stators für die Hubbewegung des Rotors zu bestromen.

Der getrennte Betrieb von Hohlzylinderabschnitten des Stators für die Drehbewegung des Rotors und Hohlzylinderabschnitten des Stators für die Hubbewegung des Rotors vereinfacht die Steuerung der Bestromung der Spulen des Stators.

Die Spulen des Dreh-Hub-Aktuators können so ausgeführt sein, das auf einer Gehäuseinnenwandung des Stators ein regelmäßiges Gitter von Spulenkernen ausgebildet ist, wobei jeder Spulenkern eine Drahtwicklung trägt.

Diese Ausgestaltung ermöglicht einen kompakten Aufbau des Stators im Dreh-Hub-Aktuator.

Der Dreh-Hub-Aktuator kann eine Kolbenstange und ein Zylinderrohrgehäuse, das an den beiden Enden jeweils einen Lagerdeckel aufweist, umfassen, wobei jeder Lagerdeckel einen Führungsring und einen Abstreifer mit einer Durchgangsöffnung aufweist, wobei an der Gehäuseinnenwandung die Mehrzahl von Hohlzylinderabschnitten des Stators angeordnet ist, wobei der Außenumfang der Kolbenstange die Mehrzahl von Wellenabschnitten des Rotors aufweist, und wobei die Kolbenstange sich durch die Führungsringe und die Durchgangsöffnungen in den Abstreifern der beiden Lagerdeckel erstreckt.

Diese Ausgestaltung sorgt für eine einfachen Aufbau des Dreh-Hub-Aktuators.

Im Zylinderrohrgehäuse des Dreh-Hub-Aktuators kann ein Positionsgeber zur Lageerfassung der Kolbenstange vorgesehen sein.

Mit diesem Aufbau kann auf der Grundlage eines einzelnen Positionsgebers die Steuerung der Dreh-Hub-Bewegung ausgeführt werden.

Ausführungsformen werden anhand der beigefügten Zeichnungen näher erläutert.
Figur 1 zeigt einen Dreh-Hub-Aktuator, wobei Figur 1A eine schematische Perspektivansicht, Figur 1B eine Seitenansicht, Figur 1C im linken Teil eine Aufsicht von hinten und im rechten Teil einen Querschnitt entlang der C-C-Linie in Figur 1E, Figur 1D einen Längsschnitt ohne Rotor entlang der B-B-Linie in Figur 1C und Figur 1E einen Längsschnitt entlang der A-A-Linie in Figur 1B wiedergeben.
Figuren 2A und 2B zeigen einen Ausschnitt des Dreh-Hub-Aktuators mit einem hohlzylinderförmigen Stator und einem Rotor, wobei Figur 2A eine perspektivische Seitenansicht und Figur 2B einen Querschnitt wiedergeben.
Figuren 3i bis 3iii zeigen Details der Figuren 3A bis 3H.

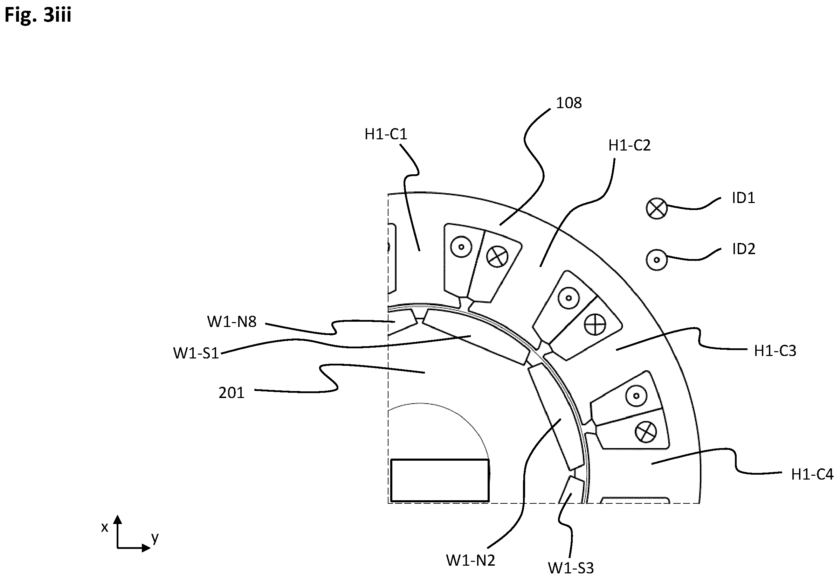

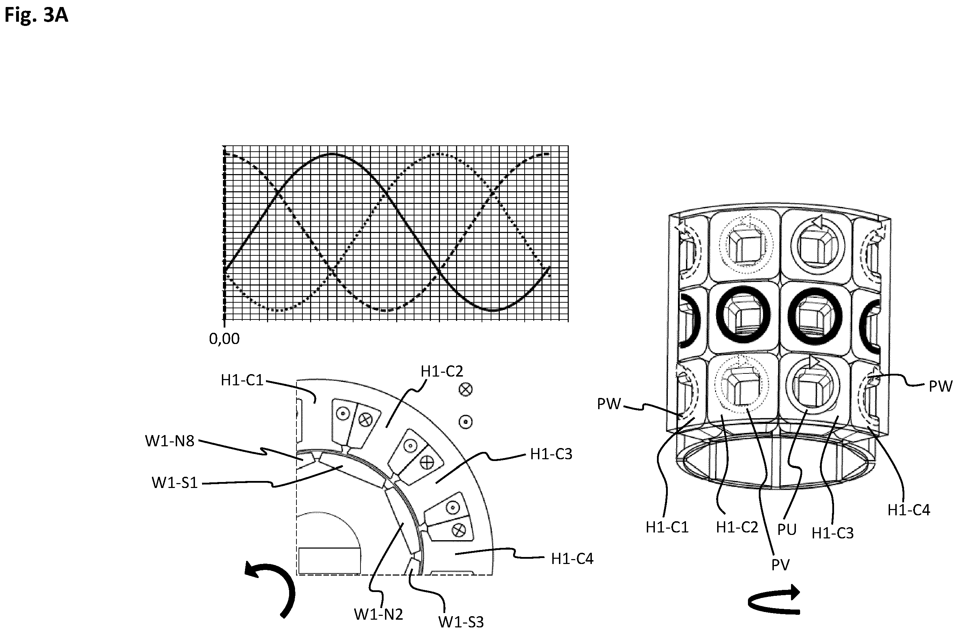

Figuren 3A bis 3H zeigen das Funktionsprinzip der Drehbewegung des Dreh-Hub-Aktuators, der in einem Dreiphasen-Wechselstrom-Modus betrieben wird, wobei eine Schrittfolge für eine Drehung um 90° gezeigt ist und jeweils ein Viertelbereich des Dreh-Hub-Aktuators in einer perspektivischen Seitenansicht und einem Querschnitt und ein Strom-Zeit-Diagramm dargestellt sind.

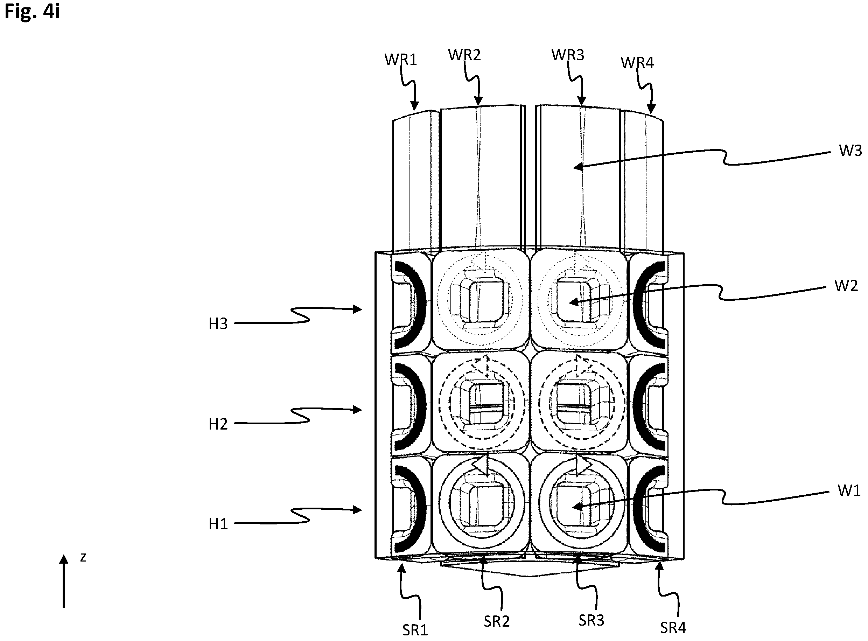

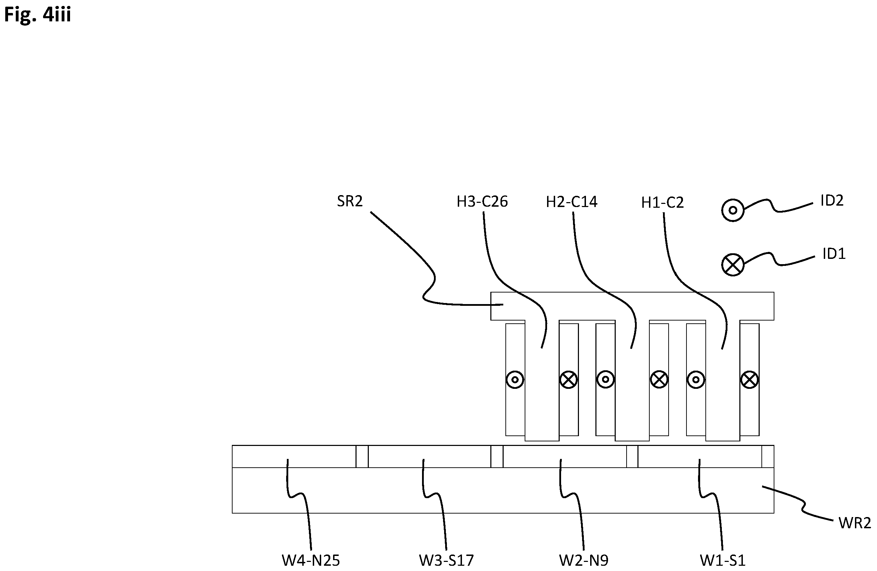

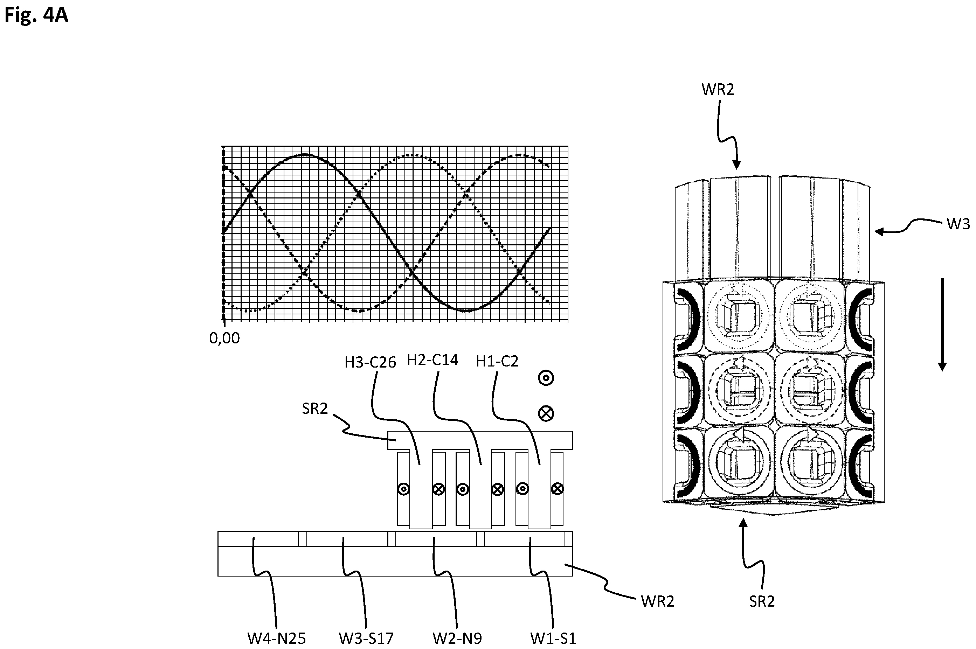

Figuren 4i bis 4iii zeigen Details der Figuren 4A bis 4H.
Figuren 4A bis 4H zeigen das Funktionsprinzip der Hubbewegung des Dreh-Hub-Aktuators, der in einem Dreiphasen-Wechselstrom-Modus betrieben wird, wobei eine Schrittfolge für einen Hub über die Länge von zwei Permanentmagneten gezeigt ist und jeweils ein Viertelbereich des Dreh-Hub-Aktuators in einer perspektivischen Seitenansicht und einem Längsschnitt und ein Strom-Zeit-Diagramm dargestellt sind.

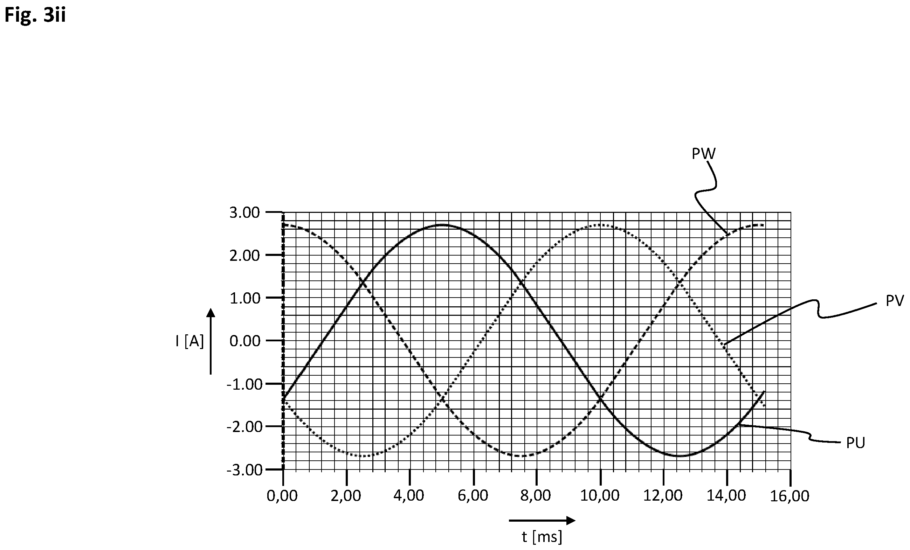

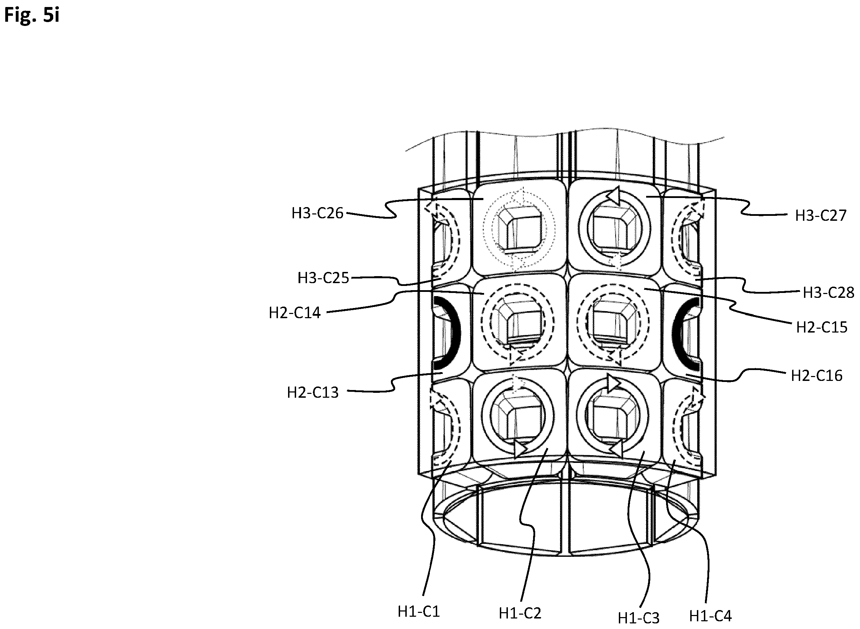

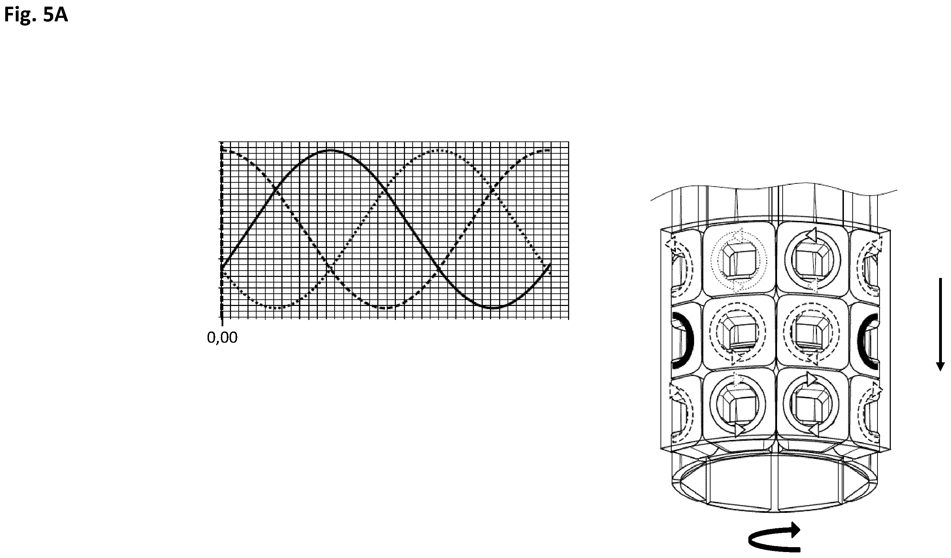

Figuren 5i und 3ii zeigen Details der Figuren 5A bis 5H.
Figuren 5A bis 5H zeigen das Funktionsprinzip der Dreh-Hub-Bewegung des Dreh-Hub-Aktuators, der in einem Dreiphasen-Wechselstrom-Modus betreiben wird, wobei eine Schrittfolge für eine Drehung um 90° und einen Hub über die Länge von zwei Permanentmagneten gezeigt und jeweils ein Viertelbereich des Dreh-Hub-Aktuators in einer perspektivischen Seitenansicht und ein Strom-Zeit-Diagramm dargestellt ist.

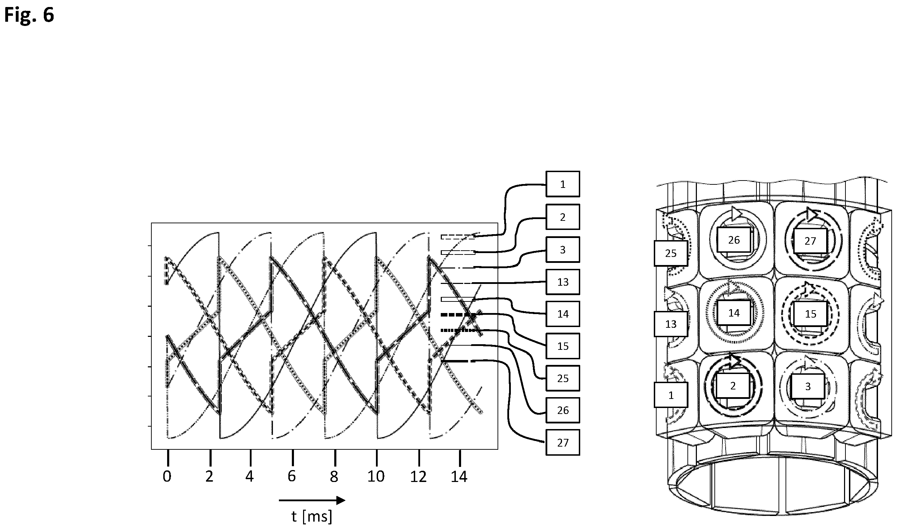

Figur 6 zeigt die Bestromung der Drahtwicklungen des Dreh-Hub-Aktuators bei der Dreh-Hub-Bewegung in den Figuren 5A bis 5H.

Ein Aktuator zum gleichzeitigen Ausführen von Dreh- und Hub-Bewegungen weist einen Motor auf, der die Funktionsprinzipien von Drehmotor und Linearmotor kombiniert.

Der Dreh-Hub-Aktuator umfasst dabei einen hohlzylinderförmigen Stator, der sich aus einer Mehrzahl von Hohlzylinderabschnitten zusammensetzt, die jeweils vorzugsweise ringförmig sind und über den Umfang verteilt angeordnete Spulen aufweisen. Im hohlzylinderförmigen Stator ist koaxial ein Rotor angeordnet, der sich aus einer Mehrzahl von Wellenabschnitten, vorzugsweise Wellenringen, zusammensetzt, wobei jeder Wellenabschnitt über den Wellenabschnittsumfang verteilt angeordnete Permanentmagnete umfasst.

Die Polung der Permanentmagnete des Rotors bezogen auf einen Wellenabschnitt und bezogen auf die Zusammensetzung über mehrere Wellenabschnitte hinweg bildet ein Schachbrettmuster. Durch die abwechselnde Magnetisierung der Permanentmagneten auf dem Rotor kann die Bestromung der Spulen des Stators so ausgeführt werden, dass eine kombinierte Dreh- und Hub-Bewegung des Rotors erfolgt.

Zum Ausführen der Drehbewegung werden die Spulenreihen der Hohlzylinderabschnitte des Stators wenigstens teilweise abwechselnd gegenläufig bestromt, um ein magnetisches Wanderfeld zu erzeugen, das auf die in Schachbrettmusterform auf den Rotor angeordneten Permanentmagneten so wirkt, dass der Rotor sich gegenüber dem Stator dreht.

Für die Hubbewegung erfolgt eine Bestromung der Spulen des Stators quer zu den Hohlzylinderabschnitten, wobei die Spulenreihen dabei wenigstens teilweise gegenläufig bestromt werden, um ein magnetisches Wanderfeld zu erzeugen, das auf die in Schachbrettmusterform auf den Rotor angeordneten Permanentmagneten so wirkt, dass der Rotor sich gegenüber dem Stator längsverschiebt.

Die sich in den Spulen des Stators überlagernden Phasenströme für die Drehbewegung beziehungsweise für die Hubbewegung sorgen dann dafür, dass der Rotor eine Dreh-Hub-Bewegung ausführt.

Durch die Ausbildung eines einzelnen Motors als Kreuzung eines Drehmotors und eines Linearmotors kann der Bauraum für den Dreh-Hub-Aktuator reduziert werden. Durch die Zusammenfassung der Funktionalitäten von Drehmotor und Linearmotor in dem einzelnen Motor, der gleichzeitig eine Drehbewegung und eine Hubbewegung ausführen kann, kann ferner eine deutlich geringere Trägheit erreicht werden, die dynamische Anwendungen ermöglicht. Auch sorgt die Kombination von Drehmotor und Linearmotor in dem einzelnen Motor für eine reduzierte Bauelementanzahl und damit für eine verbesserte Verschleißfestigkeit.

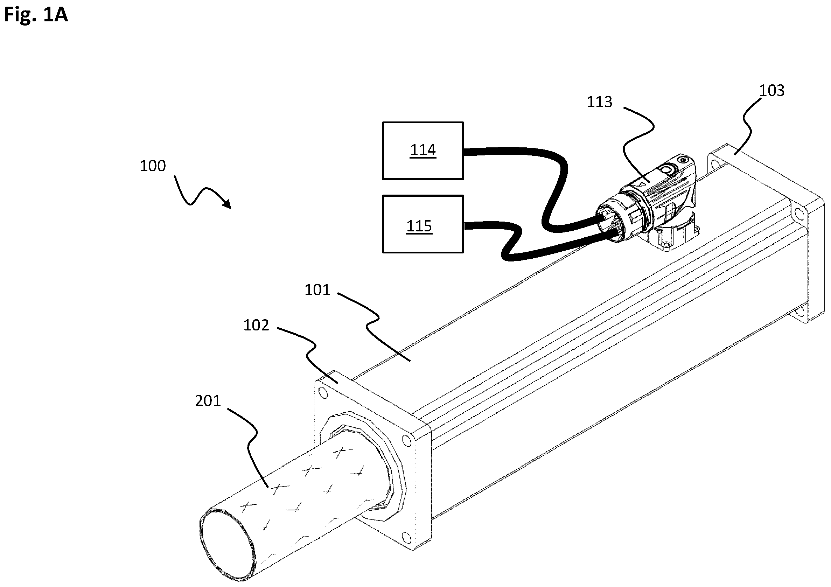

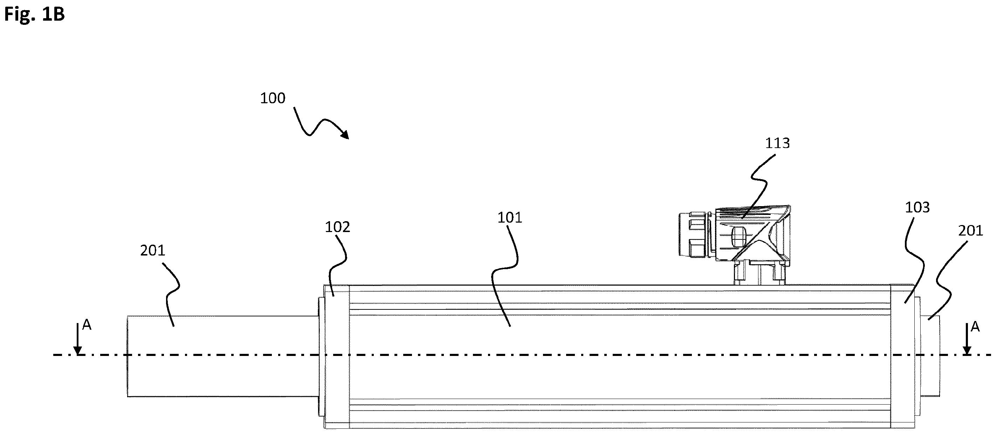

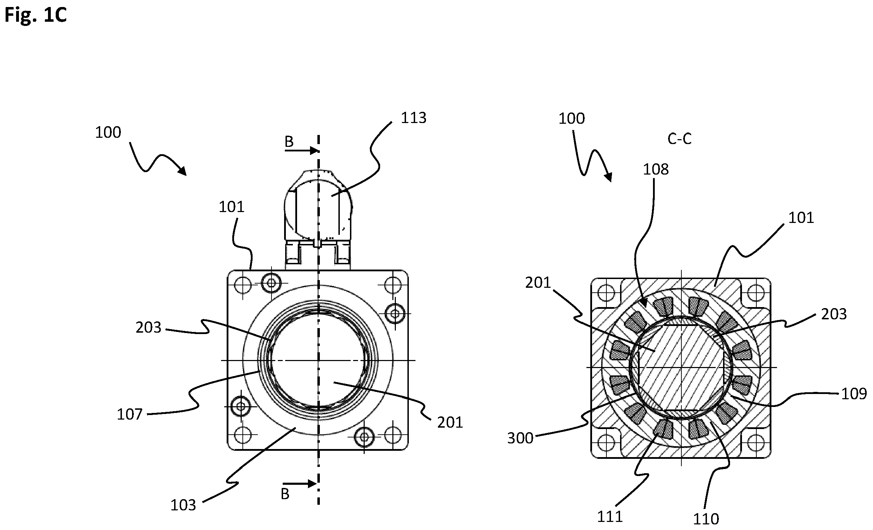

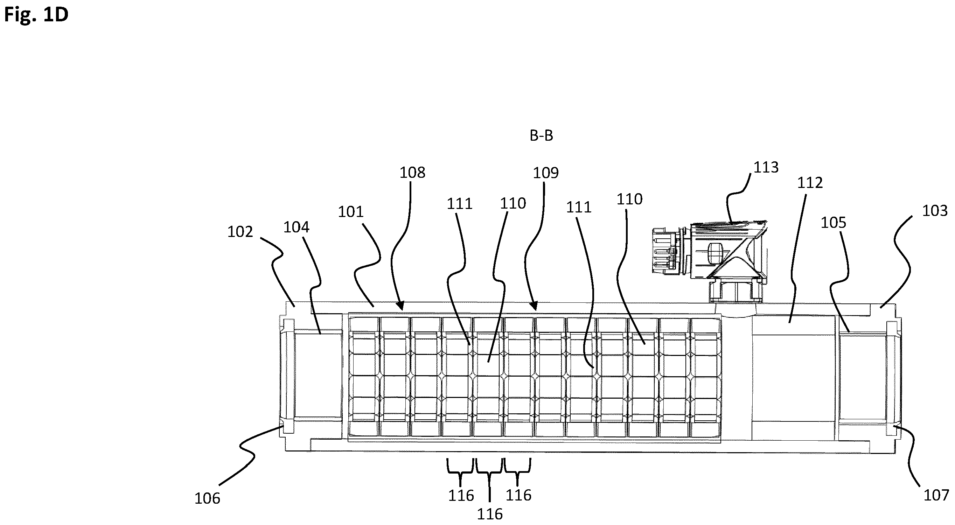

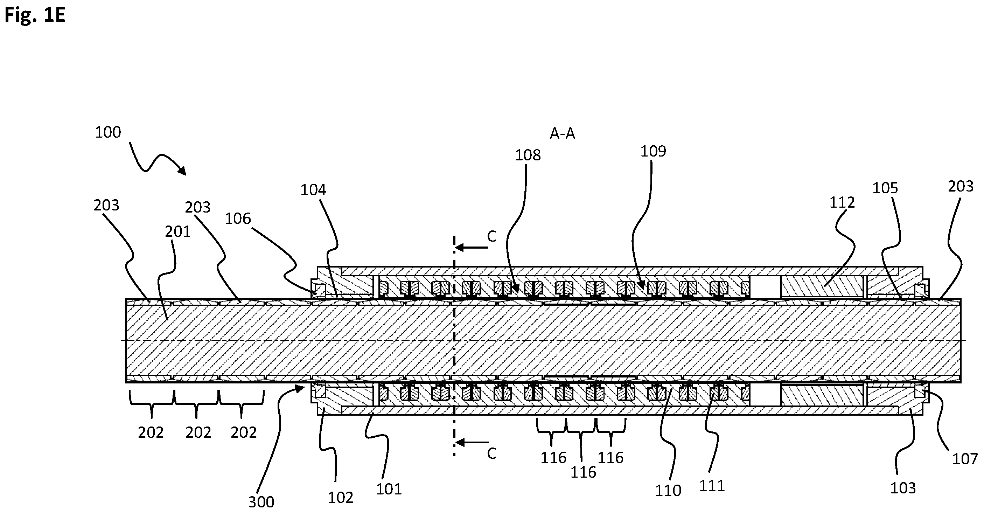

Figur 1 zeigt einen möglichen Aufbau eines solchen Dreh-Hub-Aktuators 100, wobei Figur 1A eine schematische Perspektivansicht, Figur 1B eine Seitenansicht, Figur 1C im linken Teil eine Aufsicht von hinten und im rechten Teil einen Querschnitt entlang der C-C-Linie in Figur 1E, Figur 1D einen Längsschnitt durch den Stator ohne Rotor entlang der B-B-Linie in Figur 1C und Figur 1E einen Längsschnitt entlang der A-A-Linie in Figur 1B wiedergeben. Im Folgenden werden die Figuren 1A bis 1E gemeinsam beschrieben. Aus Gründen der Übersichtlichkeit ist nicht jedes Bezugszeichen in jeder der Figuren 1A bis 1E vorhanden. Zudem wurde bei Schnittdarstellungen teils auf Schraffierungen verzichtet.

Der Dreh-Hub-Aktuator 100 weist ein Zylinderrohrgehäuse 101 auf, das an beiden Enden jeweils von einem Lagerdeckel verschlossen wird. Das Zylinderrohrgehäuse 101 ist, wie die Querschnitte in Figur 1C zeigt, rechteckig ausgeführt. Es kann aber auch eine andere Außenform gewählt werden.

Der erste Lagerdeckel 102 und der zweite Lagerdeckel 103 besitzen jeweils einen Führungsring und einen Abstreifer mit einer Durchgangsöffnung. Durch den ersten Führungsring 104 und den zweiten Führungsring 105 beziehungsweise die erste Durchgangsöffnung im ersten Abstreifer 106 und die zweite Durchgangsöffnung im zweiten Abstreifer 107 erstreckt sich ein als Kolbenstange ausgebildeter wellenförmiger Rotor 201.

Der Rotor 201 setzt sich, wie in Figur 1E gezeigt, aus achtzehn ringförmigen Wellenabschnitten 202 zusammen, deren Umfangsfläche jeweils von acht aneinandergereihten Permanentmagneten 203 bedeckt ist. Die acht aneinandergereihten Permanentmagnete 203 sind als gekrümmte Rechteckplatten ausgeführt und bilden zusammen einen Ring. Zwischen den Permanentmagnete ist dabei vorzugweise eine Nut vorgesehen, die für eine Reduzierung des Rastmoments sorgt.

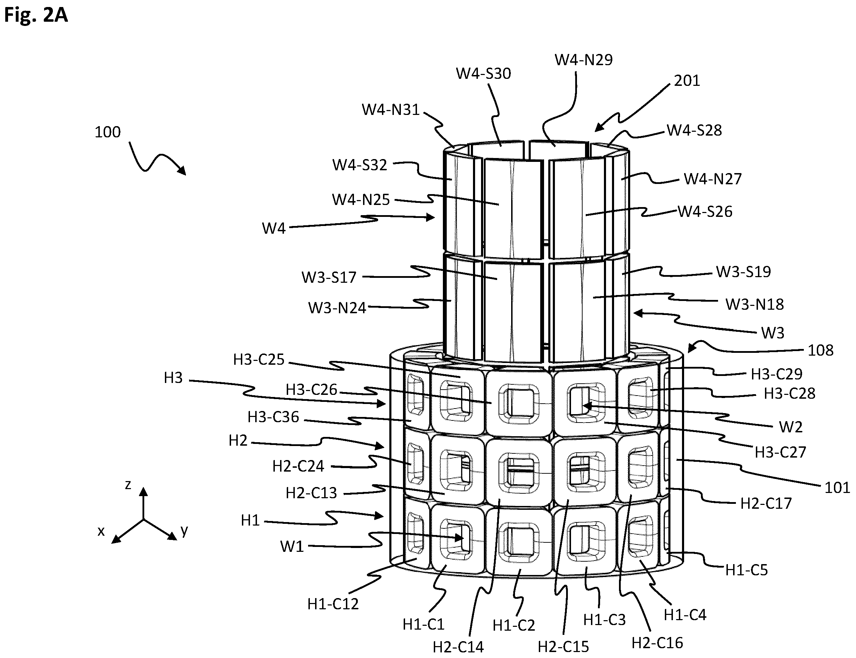

Die acht Permanentmagnete 203 eines Wellenabschnitts 202 sind dabei so angeordnet, dass sich die Polung aneinander angrenzender Permanentmagnete 203 abwechselt. Auf einen Permanentmagneten 203 mit einem Südpol folgt somit ein Permanentmagnet 203 mit einem Nordpol und umgekehrt. Die achtzehn Wellenabschnitte 202 des Rotors 201 sind dann weiter so zusammengesetzt, dass sich auch die Polung der aneinander angrenzenden Permanentmagnete 203 von benachbarten Wellenabschnitten 202 abwechselt, also auf einen Permanentmagneten 203 mit einem Südpol im angrenzenden Wellenabschnitt 202 ein Permanentmagnet 203 mit einem Nordpol und umgekehrt folgt. Die Polung der Permanentmagneten 203 auf der Umfangsfläche des Rotors 201 bildet somit als Fläche betrachtet ein Schachbrettmuster. Dies wird beispielsweise aus Figur 2A ersichtlich.

Alternativ zu einer rechteckigen Ausführung der Permanentmagneten 203 besteht auch die Möglichkeit, andere Flächenformen für die Permanentmagneten 203 zu verwenden. Bei der in Figur 1 gezeigten Ausführungsform sind die Permanentmagneten 203 darüber hinaus aneinandergereiht. Es besteht auch die Möglichkeit, zwischen den Permanentmagneten 203 Nuten beispielsweise in Form nichtmagnetische Stege vorzusehen, um das Rastmoment zu reduzieren. Statt der acht Permanentmagneten 203 pro Wellenabschnitt 202 können auch mehr oder weniger Permanentmagnete 203 vorgesehen sein, wobei die Permanentmagnete 203 bei einem Ring immer paarweise, also mit einem Permanentmagneten 203, der einen Südpol aufweist, und einem Permanentmagneten 203, der einen Nordpol aufweist, angeordnet sind.

Die Permanentmagnete 203 müssen auch nicht zwingend die gesamte Umfangsfläche des Wellenabschnitts 202 abdecken. Es kann auch nur ein Umfangsbereich des Wellenabschnitts 202 Permanentmagnete 203 aufweisen. In diesem Fall ist dann keine Volldrehung des Rotors 201, sondern nur eine Drehung entsprechend des mit den Permanentmagneten 203 abgedeckten Umfangswinkels möglich.

Bei der in Figur 1 gezeigten Ausführungsform setzt sich der Rotor 201 aus achtzehn Wellenabschnitten 202 zusammen. Die Anzahl der Wellenabschnitte 202 und damit die Länge des als Kolbenstange ausgebildeten Rotors 201 kann aber entsprechend der Anwendung, insbesondere entsprechend der gewünschten Hubbewegung, gewählt werden.

Im Zylinderrohrgehäuse 101 des Dreh-Hub-Aktuators 100 ist zwischen dem ersten Lagerdeckel 102 und dem zweiten Lagerdeckel 103 auf der Gehäuseinnenwandung ein hohlzylinderförmiger Stator 108 angeordnet. Der hohlzylinderförmige Stator 108 setzt sich aus zwölf Hohlzylinderabschnitten 116 zusammen, wobei jeder Hohlzylinderabschnitt 116 zwölf aneinandergereihte Spulen 109 umfasst. Die Spulen 109 weisen jeweils einen quadratischen Querschnitt auf und sind gekrümmt ausgeführt, wobei die zwölf Spulen 109 eines Hohlzylinderabschnitts 109 zusammengefügt einen Ring bilden.

Das Zylinderrohrgehäuse 101 und der als Kolbenstange ausgebildete Rotor 201 sind so ausgelegt, dass zwischen den Spulen 109 des Stators 108 auf der Gehäuseinnenwandung des Zylinderrohrgehäuses 101 und den Permanentmagneten 203 auf dem Rotor 201 ein Luftspalt 300 verbleibt.

Die Spulen 109 weisen in der in Figur 1 gezeigten Ausführungsform einen ferromagnetischen Spulenkern 110 auf, der in Zahnform von der Innenwandung des Zylinderrohrgehäuses 101 vorsteht und um den jeweils ein Spulendraht 111 gewickelt ist. Die zahnförmigen Spulenkerne 110 bilden dabei ein regelmäßiges Gitter auf der Innenwandung des Zylinderrohrgehäuse 101. Die Drahtwicklung des Spulendrahts 111 ist vorzugsweise mehrlagig ausgeführt, wodurch sich auch die Möglichkeit ergibt, einzelne Spulendrahtlagen voneinander zu trennen und separat zu bestromen. Statt zahnförmiger Spulenkerne 100 können auch anders ausgestaltete Spulenkerne verwendet. Die Spulen 109 können auch Luftspulen sein.

Alternativ zu einer quadratischen Ausführung der Spulen 109 besteht auch die Möglichkeit, einen anderen Spulenquerschnitt einzusetzen. Anstelle der zwölf Spulen 109 pro Hohlzylinderabschnitt 116 können auch mehr oder weniger Spulen 109 vorgesehen sein.

Die Anzahl der Spulen 109 pro Hohlzylinderabschnitt 116 im Zylinderrohrgehäuse 101 ist vorzugsweise größer als die Anzahl der Permanentmagneten 203 pro Wellenabschnitt 202 auf dem Rotor 201. Die Permanentmagneten können sich dabei aus mehreren Permanentmagnetteilen gleicher Polung zusammensetzen. Bei der in Figur 1 gezeigten Ausführungsform ist ein Wellenabschnitt 202 mit acht aneinandergereihten Permanentmagneten 203 in einem Hohlzylinderabschnitt 116 mit zwölf aneinandergereihten Spulen 109 angeordnet, so dass sich ein Verhältnis von Permanentmagneten 203 zu Spulen 109 von 2:3 ergibt. Durch das ungerade Verhältnis von Permanentmagneten-Anzahl zu Spulen-Anzahl können Rastmomente zwischen den Permanentmagneten 203 und den Spulen 109 bei der Drehbewegung verringert werden.

Um Rastmomente bei der Hubbewegung zu vermeiden, sind auch die jeweiligen Breiten von Hohlzylinderabschnitt 116 und Wellenabschnitt 202 unterschiedlich gewählt. Bei der in Figur 1 gezeigten Ausführungsform entsprechen acht Wellenabschnitte 202 des Rotors 201 den zwölf Hohlzylinderabschnitten 116 des Stators 108, was zu einem Verhältnis der Permanentmagneten 203 zu den Spulen 109 von 2:3 führt. Bezogen auf die Längsausrichtung decken dabei die Permanentmagnete 203 von zwei Wellenabschnitten 202 die Spulen 109 von drei Hohlzylinderabschnitten 116 ab. Es besteht jedoch die Möglichkeit, andere Breiten- und damit Abdeckungsverhältnisse zu verwenden.

Die Anzahl der Hohlzylinderabschnitte 116 auf der Innenwandung des Zylinderrohrgehäuses 101, die den hohlzylinderförmigen Stator 108 bildet, kann entsprechend auf die gewünschte Anwendung, also dem bei der Dreh- und Hubbewegung zu bewegenden Lastmoment abgestimmt werden.

Die Spulen 109 des Dreh-Hub-Aktuators 100 werden in einem Dreiphasen-Wechselstrom-Modus betrieben, wobei jeder Hohlzylinderabschnitt 116 drei Spulen 109 oder ein N-faches der drei Spulen 109 aufweist, und wobei drei Hohlzylinderabschnitte 116 oder ein N-faches von den drei Hohlzylinderabschnitten 116 vorgesehen sind. Alternativ zu einem Dreiphasen-Wechselstrom-Betrieb besteht auch die Möglichkeit, einen Zwei- oder Einphasen-Wechselstrom-Betrieb der Spulen 109 durchzuführen.

Grundsätzlich sind für eine Drehbewegung des Rotors 201 die Spulen 109 der Hohlzylinderabschnitte 116 des Stators 108 so zu bestromen, dass längs der Hohlzylinderabschnitte 116 ein magnetisches Wanderfeld erzeugt wird, wobei die bestromten Spulen 109 längs der Hohlzylinderabschnitte 116 wenigstens teilweise abwechselnd gegenläufig bestromt werden.

Für eine Hubbewegung des Rotors 201 sind die Spulen 109 der Hohlzylinderabschnitte 116 des Stators 108 so zu bestromen, dass quer zu den Hohlzylinderabschnitten 116 ein magnetisches Wanderfeld erzeugt wird, wobei die Bestromung quer zu den Hohlzylinderabschnitten 116 wenigstens teilweise abwechselnd gegenläufig ausgeführt wird.

Für eine kombinierte Dreh-Hub-Bewegung wird dann die Drehbewegung mit der Hubbewegung in Bezug auf die Bestromung der Spulen 109 überlagert, wodurch sich ein dreidimensionaler Fluss, also ein dreidimensionales magnetisches Wanderfeld ergibt. Zwischen dem hohlzylinderförmigen Stator 108 und dem zweiten Lagerdeckel 103 ist, wie Figur 1E zeigt, weiter ein ringförmiger Positionsgeber 112 an der Innenwandung des Zylinderrohrgehäuses 101 vorgesehen, mit dem sich die Position des Rotors 201 in Bezug auf das Zylinderrohrgehäuse 101 bestimmen lässt.

Das Zylinderrohrgehäuse 101 weist ferner einen Anschluss 113 zur elektrischen und datentechnischen Verbindung mit einer Steuereinheit 114 und einer Energieversorgung 115 auf, wie in Figur 1A schematisch angedeutet. Die Steuereinheit 114 regelt auf der Grundlage von Positionssignalen des Positionsgebers 112 die Bestromung der mit der Energieversorgung 115 verbundenen Spulen 109 im Dreh-Hub-Aktuator 100, um eine gewünschte Dreh-Bewegung, Hub-Bewegung oder Dreh-Hub-Bewegung auszuführen.

Die Steuereinheit 114 kann dabei ausgelegt sein, die Spulen 109 der Hohlzylinderabschnitte 116 des Stators 108 einzeln mit Wechselstrom zu beaufschlagen, um in der jeweiligen Spule 109 jeweils den Phasenstrom einzustellen, der für das längs der Hohlzylinderabschnitte 116 hervorzurufende magnetische Wanderfeld und für das quer zu den Hohlzylinderabschnitten 116 hervorzurufende magnetische Wanderfeld zur Ausführung einer vorgegebenen Hub- und/oder Drehbewegung des Rotors 201 notwendig ist.

Die Steuereinheit 114 kann aber auch ausgelegt sein, zur Ausführung einer vorgegebenen Dreh- und Hubbewegung des Rotors 201 Hohlzylinderabschnitte 116 des Stators 108 für die Drehbewegung des Rotors 201 und weitere Hohlzylinderabschnitte 116 des Stators 108 für die Hubbewegung des Rotors 201 zu bestromen.

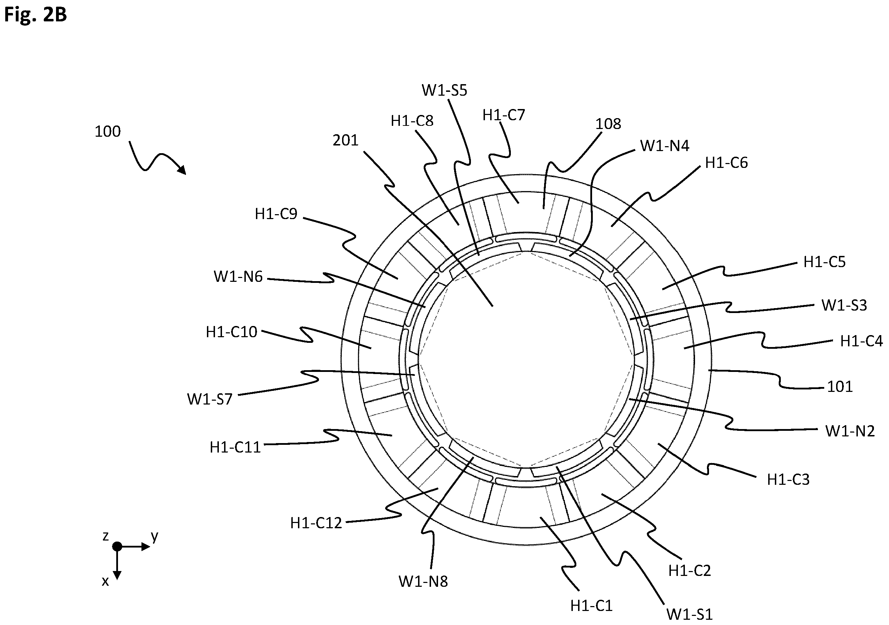

Figuren 2A und 2B zeigen schematisch einen Ausschnitt des hohlzylinderförmigen Stators 108 und des Rotors 201 im Dreh-Hub-Aktuator 100, wobei Figur 2A den Ausschnitt in einer perspektivischen Seitenansicht und Figur 2B einen Querschnitt durch den Ausschnitt zeigen. In den Figuren 2A und 2B ist weiter zur Orientierung ein kartesisches Koordinatensystem eingezeichnet.

Der hohlzylinderförmige Stator 108 und der wellenförmige Rotor 201 sind, wie Figur 2A zeigt, achsensymmetrisch zur z-Richtung ausgerichtet. Der in Figur 2B gezeigte Querschnitt liegt in der durch die x-Richtung und y-Richtung aufgespannten Ebene. Von den quadratischen Spulen sind in Figur 2 nur die Drahtwicklungen ohne Spulenkerne dargestellt. Im Bereich der Spulen ist ferner das Zylinderrohrgehäuse dargestellt.

In Figur 2A sind die vier Wellenabschnitte von unten nach oben als erster Wellenabschnitt W1, zweiter Wellenabschnitt W2, dritter Wellenabschnitt W3 und vierter Wellenabschnitt W4 gekennzeichnet. Die Polung der acht Permanentmagnete in jedem Wellenabschnitt, die einen Ring bilden, wechselt sich so ab, dass auf einen Permanentmagneten mit einem Südpol ein Permanentmagnet mit einem Nordpol und umgekehrt folgt.

Ferner sind die vier Wellenabschnitte so zusammengesetzt, dass auf einen Permanentmagneten mit einem Südpol in einem Wellenabschnitt ein Permanentmagnet mit einem Nordpol in einem benachbarten Wellenabschnitt und umgekehrt folgt.

Der untere erste Wellenabschnitt W1 weist, gesehen aus der x-Richtung in der Figur 2A gegen den Uhrzeigersinn, aneinandergereiht einen ersten Südpol-Permanentmagneten W1-S1, einen zweiten Nordpol-Permanentmagneten W1-N2, einen dritten Südpol-Permanentmagneten W1-S3, einen vierten Nordpol-Permanentmagneten W1-N4, einen fünften Südpol-Permanentmagneten W1-S5, einen sechsten Nordpol-Permanentmagneten W1-N6, einen siebten Südpol-Permanentmagneten W1-S7 und einen achten Nordpol-Permanentmagneten W1-N8 auf. Der ersten Wellenabschnitt W1 ist im Querschnitt in Figur 2B gezeigt.

Der auf den unteren ersten Wellenabschnitt W1 aufgesetzte zweite Wellenabschnitt W2 weist, gesehen aus der x-Richtung in Figur 2A gegen den Uhrzeigersinn, aneinandergereiht einen neunten Nordpol-Permanentmagneten W2-N9, einen zehnten Südpol-Permanentmagneten W2-S10, einen elften Nordpol-Permanentmagneten W2-N11, einen zwölften Südpol-Permanentmagneten W2-S12, einen dreizehnten Nordpol-Permanentmagneten W2-N13, einen vierzehnten Südpol-Permanentmagneten W2-S14, einen fünfzehnten Nordpol-Permanentmagneten W2-N15 und einen sechzehnten Südpol-Permanentmagneten W2-S16 auf.

Der auf den zweiten Wellenabschnitt W2 aufgesetzte dritte Wellenabschnitt W3 weist, gesehen aus der x-Richtung in der Figur 2A gegen den Uhrzeigersinn, aneinandergereiht einen siebzehnten Südpol-Permanentmagneten W3-S17, einen achtzehnten Nordpol-Permanentmagneten W3-N18, einen neunzehnten Südpol-Permanentmagneten W3-S19, einen zwanzigsten Nordpol-Permanentmagneten W3-N20, einen einundzwanzigsten Südpol-Permanentmagneten W3-S21, einen zweiundzwanzigsten Nordpol-Permanentmagneten W3-N22, einen dreiundzwanzigsten Südpol-Permanentmagneten W3-S23 und einen vierundzwanzigsten Nordpol-Permanentmagneten W3-N24 auf.

Der auf den dritten Wellenabschnitt W3 aufgesetzte vierte Wellenabschnitt W4 weist, gesehen aus der x-Richtung in der Figur 2A gegen den Uhrzeigersinn, aneinandergereiht einen fünfundzwanzigsten Nordpol-Permanentmagneten W4-N25, einen sechsundzwanzigsten Südpol-Permanentmagneten W4-S26, einen siebenundzwanzigsten Nordpol-Permanentmagneten W4-N27, einen achtundzwanzigsten Südpol-Permanentmagneten W4-S28, einen neunundzwanzigsten Nordpol-Permanentmagneten W4-N29, einen dreißigsten Südpol-Permanentmagneten W4-S30, einen einunddreißigsten Nordpol-Permanentmagneten W4-N31 und einen zweiunddreißigsten Südpol-Permanentmagneten W4-S32 auf.

Der untere erste Hohlzylinderabschnitt H1 weist, gesehen aus x-Richtung in der Figur 2A gegen den Uhrzeigersinn, aneinandergereiht eine erste Spule H1-C1, eine zweite Spule H1-C2, eine dritte Spule H1-C3, eine vierte Spule H1-C4, eine fünfte Spule H1-C5, eine sechste Spule H1-C6, eine siebte Spule H1-C7, eine achte Spule H1-C8, eine neunte Spule H1-C9, eine zehnte Spule H1-C10, eine elfte Spule H1-C11 und eine zwölfte Spule H1-C12 auf. Der erste Hohlzylinderabschnitt H1 ist im Querschnitt in Figur 2B gezeigt.

Der auf den unteren ersten Hohlzylinderabschnitt H1 aufgesetzte zweite Hohlzylinderabschnitt H2 weist, gesehen aus x-Richtung in der Figur 2A gegen den Uhrzeigersinn, aneinandergereiht eine dreizehnte Spule H2-C13, eine vierzehnte Spule H2-C14, eine fünfzehnte Spule H2-C15, eine sechzehnte Spule H2-C16, eine siebzehnte Spule H2-C17, eine achtzehnte Spule H2-C18, eine neunzehnte Spule H2-C19, zwanzigste Spule H2-C20, eine einundzwanzigste Spule H2-C21, eine zweiundzwanzigste Spule H2-C22, eine dreiundzwanzigste Spule H2-C23 und eine vierundzwanzigste Spule H2-C24 auf.

Der auf den zweiten Hohlzylinderabschnitt H2 aufgesetzte dritte Hohlzylinderabschnitt H3 weist, gesehen aus x-Richtung in der Figur 2A gegen den Uhrzeigersinn, aneinandergereiht eine fünfundzwanzigste Spule H3-C25, eine sechsundzwanzigste Spule H3-C26, eine siebenundzwanzigste Spule H3-C27, eine achtundzwanzigste Spule H3-C28, eine neunundzwanzigste Spule H3-C29, eine dreißigste Spule H3-C30, eine einunddreißigste Spule H3-C31, eine zweiunddreißigste Spule H3-C32, eine dreiunddreißigste Spule H3-C33, eine vierunddreißigste Spule H2-C24, eine fünfunddreißigste Spule H3-C35 und eine sechsunddreißigste Spule H3-C36 auf.

Die perspektivische Seitenansicht in Figur 2A zeigt nur einen Teil der vorstehend bezeichneten Permanentmagnete der vier Wellenabschnitte des Rotors und einen Teil der vorstehend bezeichneten Spulen der drei Hohlzylinderabschnitte des Stators.

Das Funktionsprinzip des Dreh-Hub-Aktuators 100 wird im Weiteren im Zusammenhang mit den Figuren 3A bis 3H, 4A bis 4H und 5A bis 5H anhand eines Ausschnitts von Figur 2A erläutert, der in z-Richtung betrachtet einem 90°-Winkel des Stators 108 und des Rotors 201 entspricht. Die Spulen des Dreh-Hub-Aktuators 100 werden in dem Dreiphasen-Wechselstrom-Modus betreiben, weshalb bei der weiteren Darstellung nur die Spulen in dem Viertelbereich betrachtet werden.

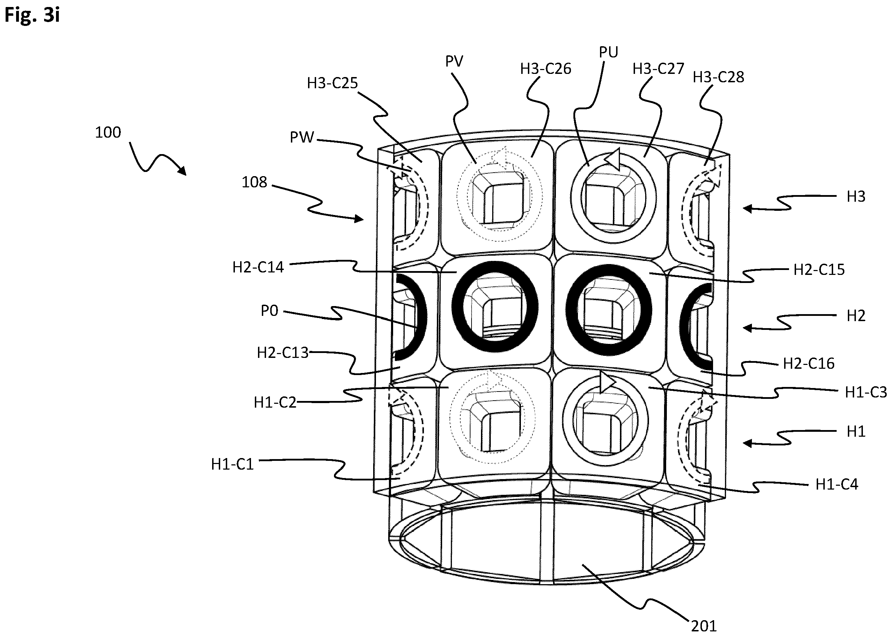

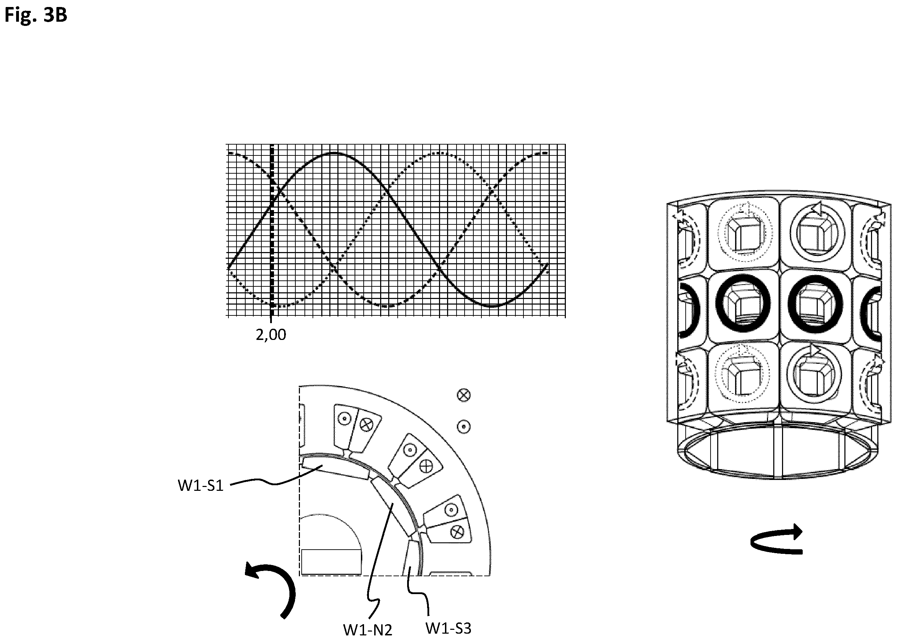

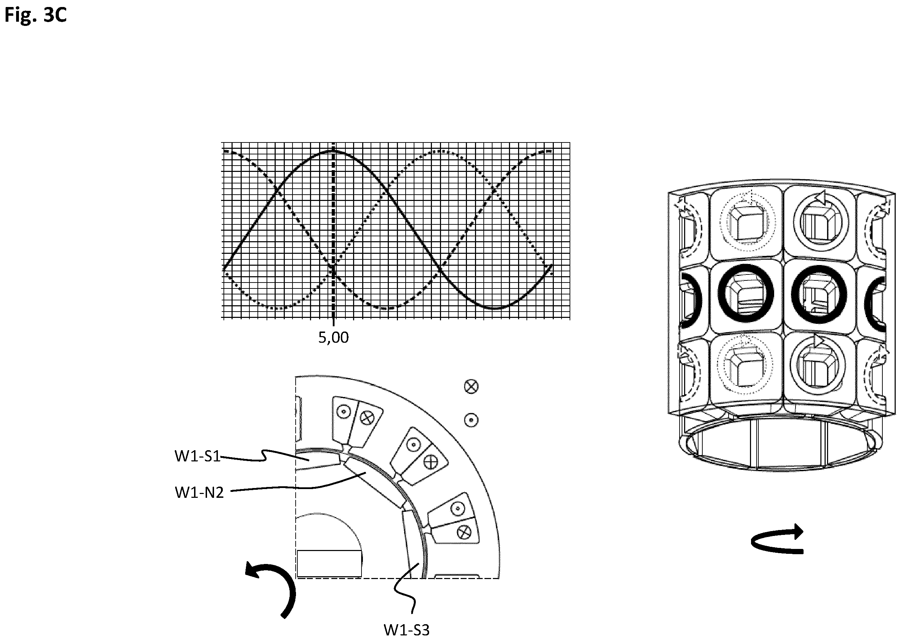

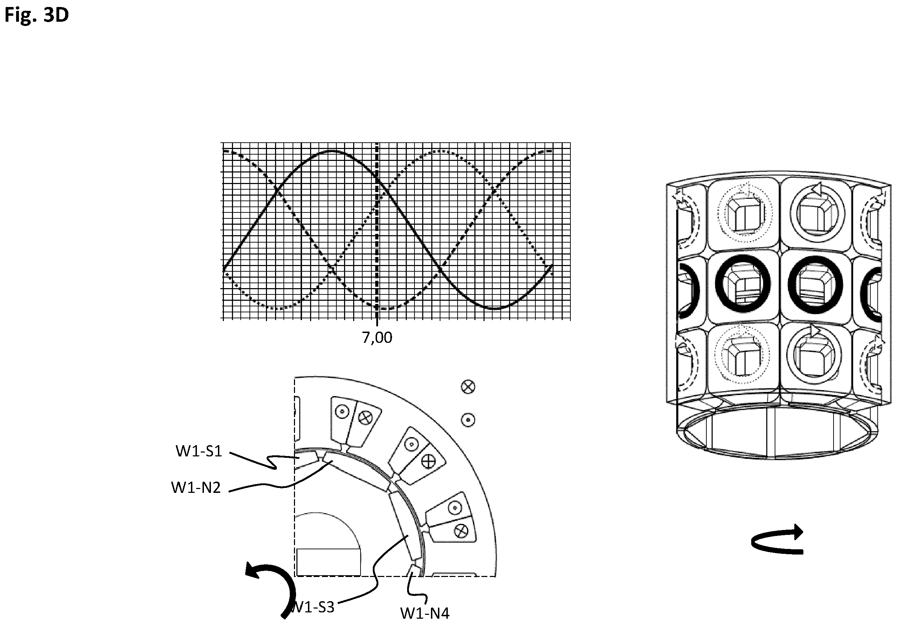

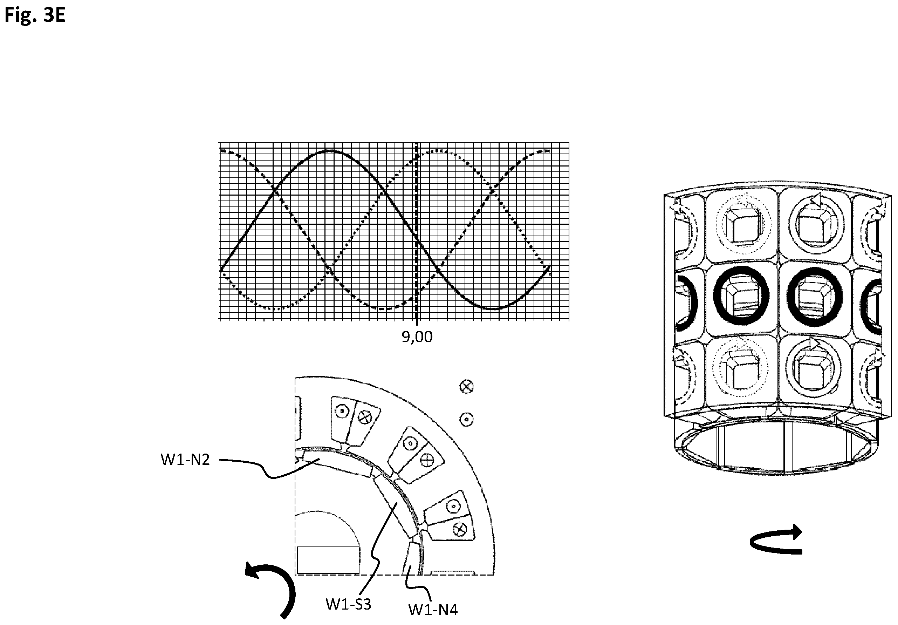

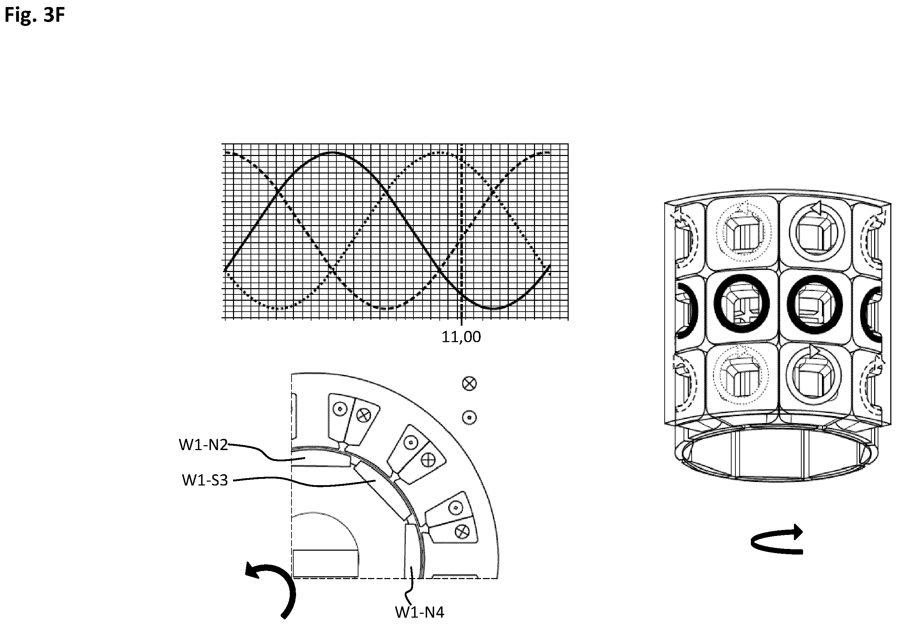

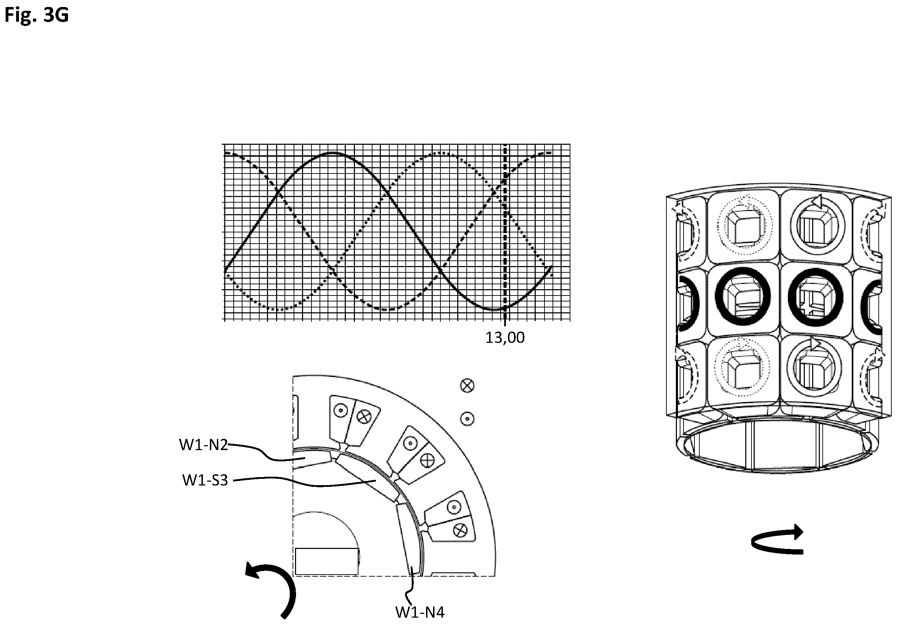

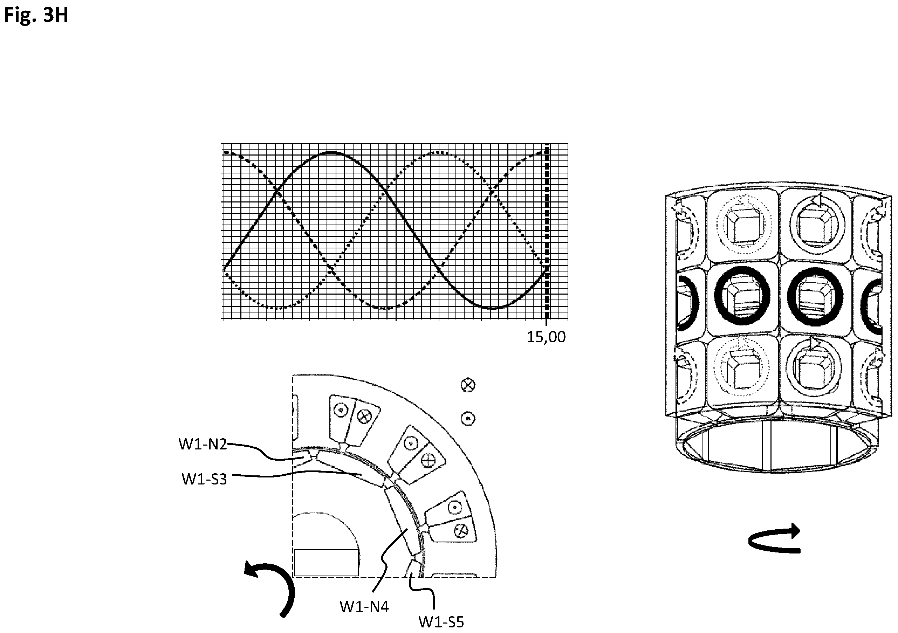

Aus Gründen der besseren Darstellung sind Details der Figur 3A in den drei Figuren 3i, 3ii und 3iii gesondert dargestellt, wobei die Beschreibung der Figuren 3A bis 3H unter Berücksichtigung der Figuren 3i bis 3iii erfolgt, ohne dass es jeweils eines gesonderten Verweises bedarf.

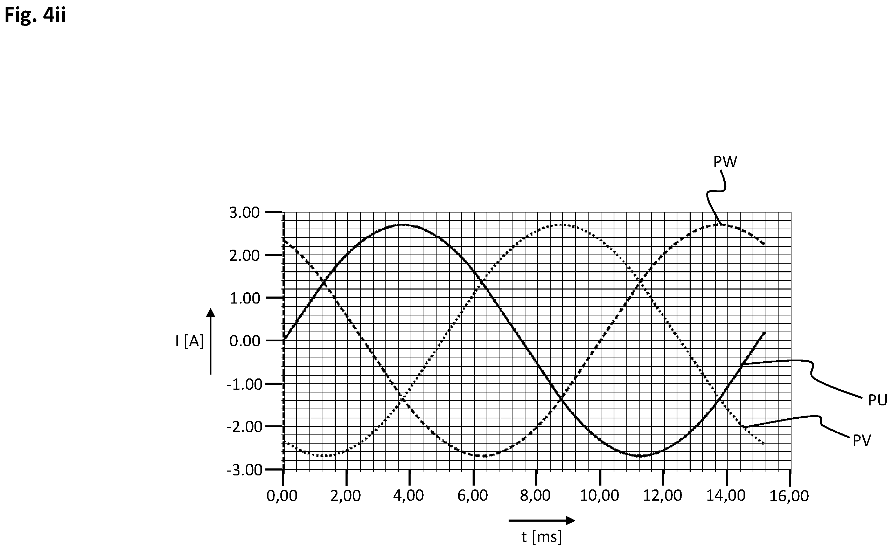

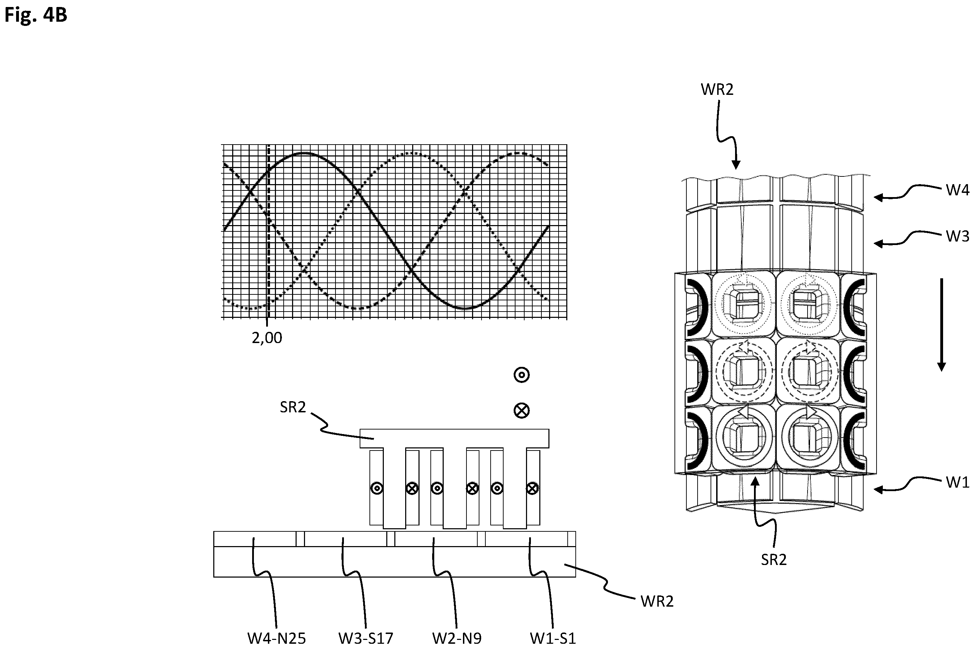

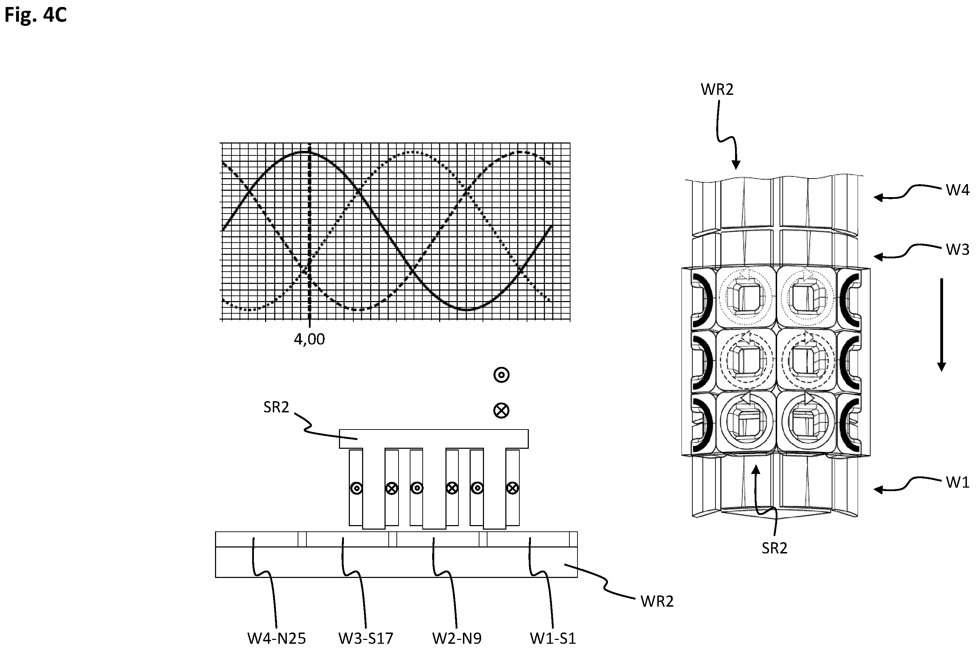

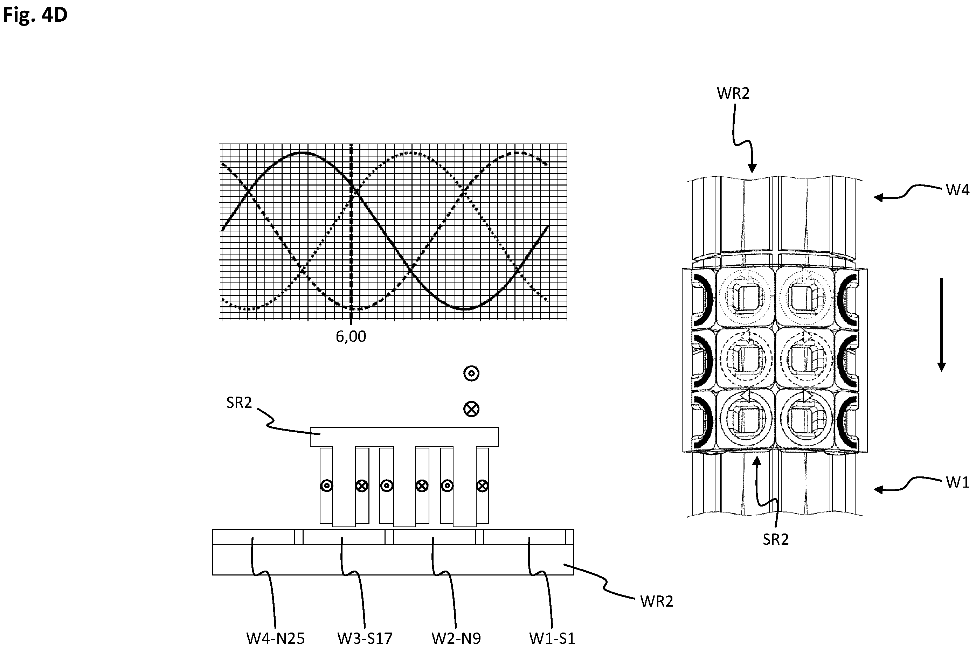

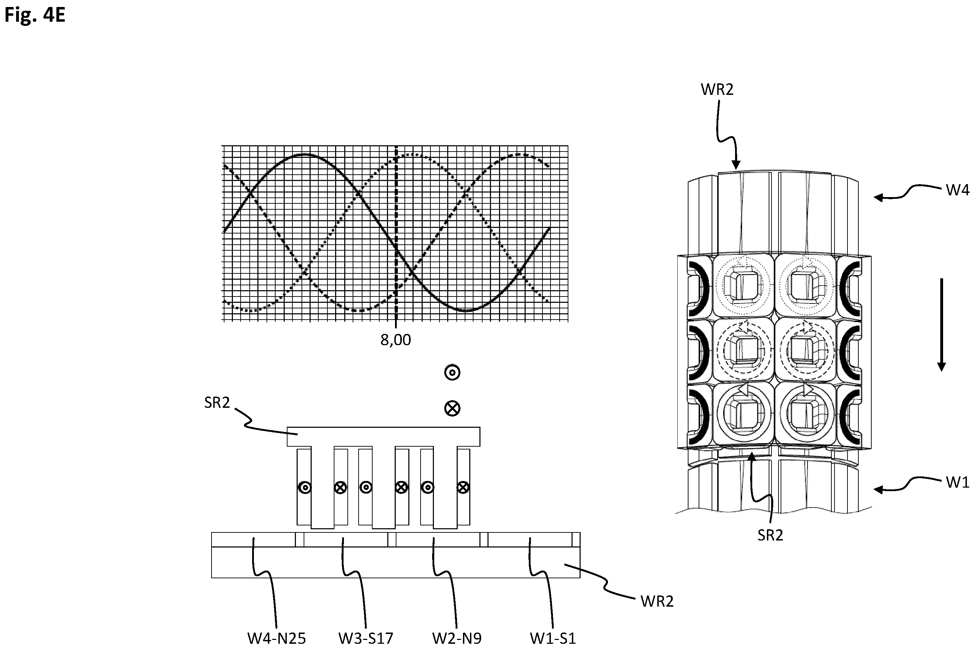

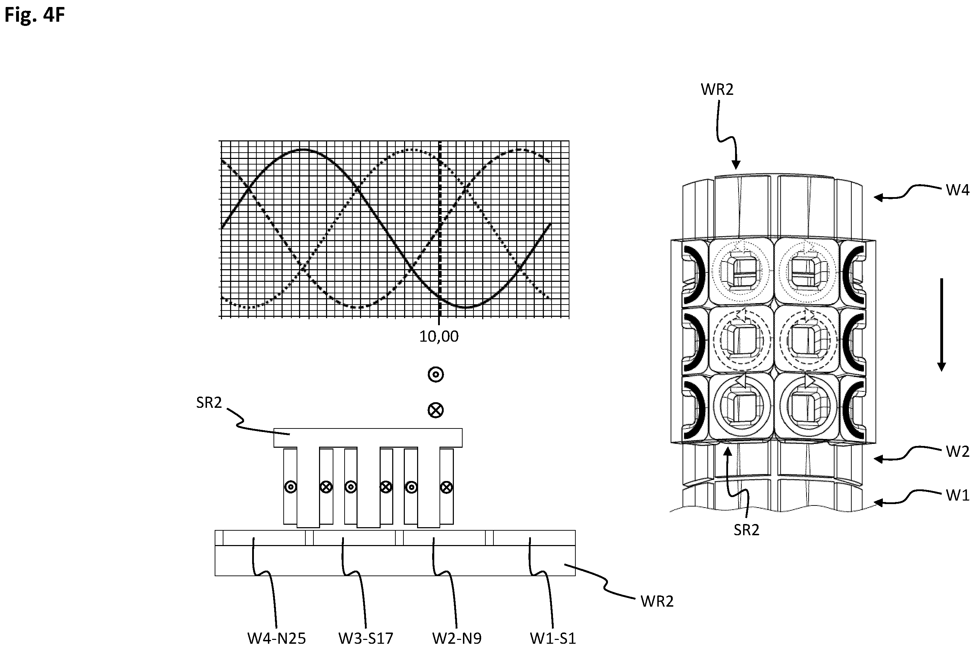

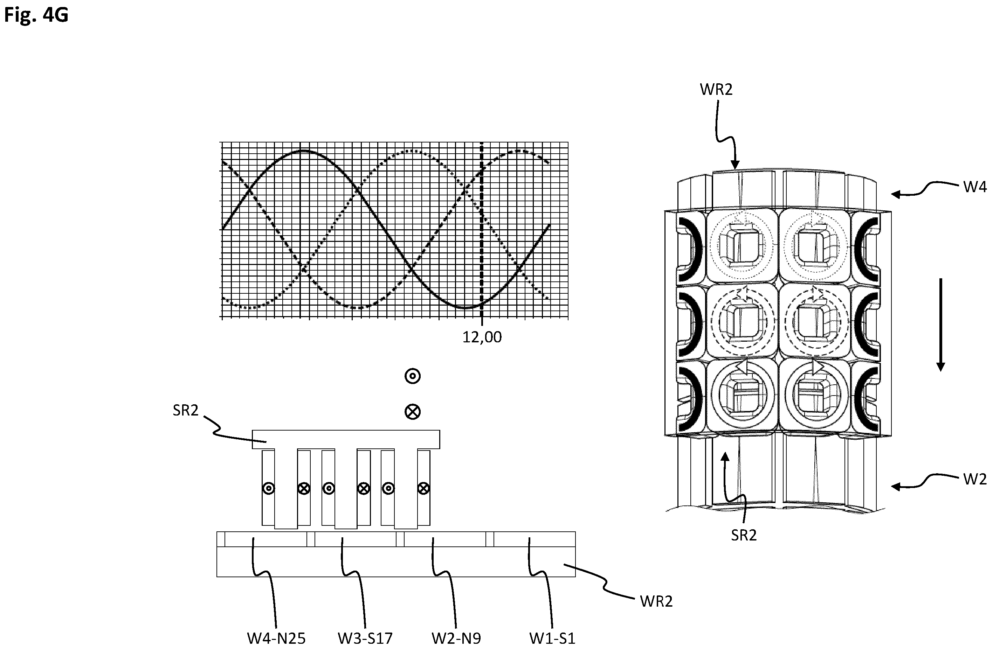

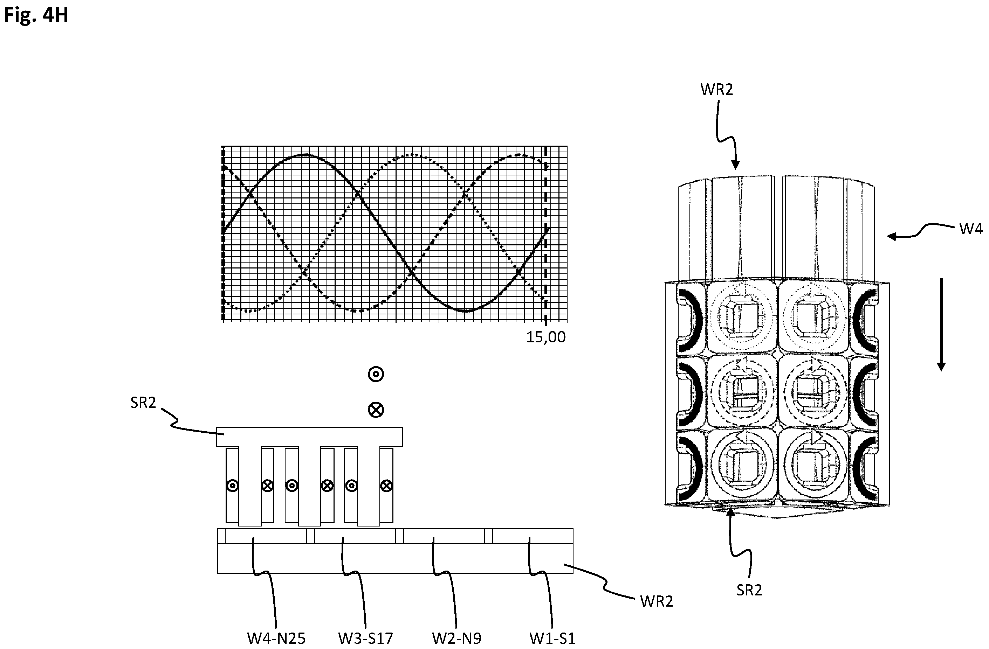

Aus Gründen der besseren Darstellung sind Details der Figur 4A in den drei Figuren 4i, 4ii und 4iii gesondert dargestellt, wobei die Beschreibung der Figuren 4A bis 4H unter Berücksichtigung der Figuren 4i bis 4iii erfolgt, ohne dass es jeweils eines gesonderten Verweises bedarf.

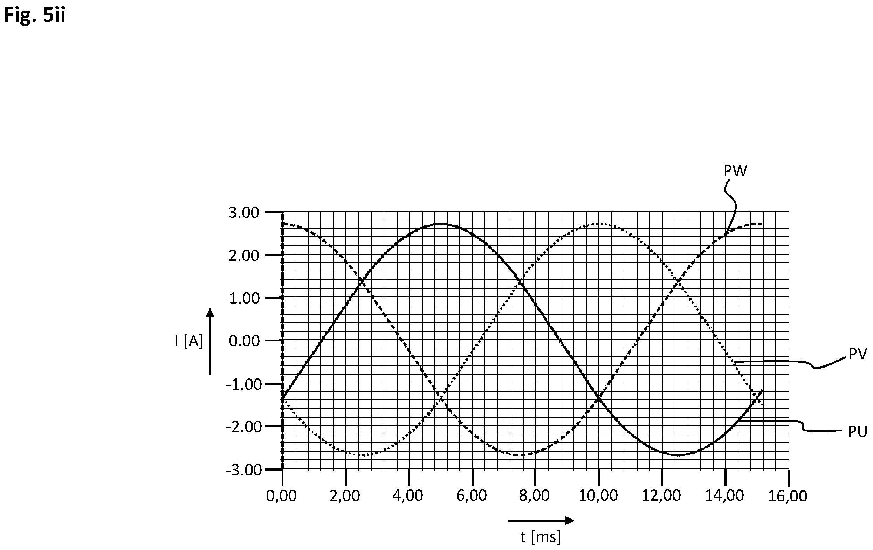

Aus Gründen der besseren Darstellung sind Details der Figur 5A in den beiden Figuren 5i und 5ii gesondert dargestellt, wobei die Beschreibung der Figuren 5A bis 5H unter Berücksichtigung der Figuren 5i und 5ii erfolgt, ohne dass es jeweils eines gesonderten Verweises bedarf.

Entsprechend zeigt Figur 3i den Ausschnitt mit zwei Wellenabschnitten des Rotors 201, die in drei Hohlzylinderabschnitten des Stators angeordnet sind. Bei der in der Figur 3i gezeigten Ausführungsform wird dabei eine von vier Permanentmagneten in zwei Wellenabschnitte des Rotors 201 aufgespannte äußere Umfangsfläche des Rotors 201 von einer von neun Spulen in den drei Hohlzylinderabschnitten des Stators 108 aufgespannten inneren Umfangsfläche des Stators 108 abgedeckt.

Jeweils drei Spulen längs jedes Hohlzylinderabschnitts beziehungsweise jeweils drei Spulen quer zu den Hohlzylinderabschnitten werden mit den drei einzelnen Wechselströmen gleicher Frequenz, das heißt einem ersten Wechselstrom PU, einem zweiten Wechselstrom PV und einem dritten Wechselstrom PW betrieben, die zueinander in Bezug auf die Phasenwinkel um 120° verschoben sind.

Die Bestromung der aus neun Spulen aufgespannten Umfangsfläche des Viertelbereichs des Stators wird identisch auf die weiteren drei Viertelbereiche der drei Hohlzylinderabschnitte des Stators übertragen. Wenn weitere Gruppen aus drei Hohlzylinderabschnitten, wie in Figur 1D gezeigt, vorgesehen sind, wird jede weitere Gruppe aus drei Hohlzylinderabschnitten dann analog zu der Gruppe aus drei Hohlzylinderabschnitten bestromt.

Im Folgenden werden das Funktionsprinzip einer Drehbewegung des Dreh-Hub-Aktuators anhand der Figuren 3A bis 3H, das Funktionsprinzip einer Hubbewegung des Dreh-Hub-Aktuators anhand der Figuren 4A bis 4H und das Funktionsprinzip einer Dreh-Hub-Bewegung des Dreh-Hub-Aktuators anhand der Figuren 5A bis 5H erläutert.

Die Erläuterungen erfolgt anhand eines Viertelbereichs aus dem in Figur 2A gezeigten Ausschnitt des Dreh-Hub-Aktuators 100 mit neun Spulen in drei Hohlzylinderabschnitten des Stators.

Aus dem unteren ersten Hohlzylinderabschnitt H1 sind, gesehen aus der x-Richtung gegen den Uhrzeigersinn, aneinandergereiht die zweite Hälfte der ersten Spule H1-C1, die zweite Spule H1-C2, die dritte Spule H1-C3 und die erste Hälfte der vierten Spule H1-C4 gezeigt.

Aus dem auf den unteren ersten Hohlzylinderabschnitt H1 aufgesetzten zweiten Hohlzylinderabschnitt H2 sind, gesehen aus der x-Richtung gegen den Uhrzeigersinn, aneinandergereiht die zweite Hälfte der dreizehnten Spule H2-C13, die vierzehnte Spule H2-C14, die fünfzehnte Spule H2-C15 und die erste Hälfte der sechzehnten Spule H2-C16 gezeigt.

Aus dem auf den zweiten Hohlzylinderabschnitt H2 aufgesetzten dritten Hohlzylinderabschnitt H3 sind, gesehen aus der x-Richtung gegen den Uhrzeigersinn, aneinandergereiht die erste Hälfte der fünfundzwanzigste Spule H3-C25, die sechsundzwanzigste Spule H3-C26, die siebenundzwanzigste Spule H3-C27 und die zweite Hälfte der achtundzwanzigsten Spule H3-C28 gezeigt.

In Figur 3ii ist in einem Strom-Zeit-Diagramm der Verlauf des ersten Wechselstroms PU, des zweiten Wechselstroms PV und des dritten Wechselstroms PW dargestellt, wobei die verschiedenen Wechselströme mit unterschiedlichen Mustern gekennzeichnet sind. Für den jeweils im Schrittbild dargestellten Drehwinkel sind mit gestrichelter Linie die aktuellen Stromwerte der drei Spulen, die längs jedes Hohlzylinderabschnitts im Dreiphasen-Wechselstrom-Modus betrieben werden, eingetragen.

In Figur 3iii wird ferner im Querschnitt der Viertelbereich des unteren ersten Hohlzylinderabschnitts H1 gezeigt. Zur besseren Darstellung ist in x- und y-Richtung jeweils ein größerer Bereich dargestellt, so dass der Viertelbereich komplett sichtbar ist. Ausgehend von der x-Richtung sind aneinandergereiht die zweite Hälfte der ersten Spule H1-C1, die zweite Spule H1-C2, die dritte Spule H1-C3 und die erste Hälfte der vierten Spule H1-C4 dargestellt. Die Drahtwicklungen sind dabei mit dem Muster des zugeordneten Wechselstroms gekennzeichnet, wobei ID1 die elektrische Stromrichtung vom Betrachter in die Ebene hinein und ein ID2 die elektrische Stromrichtung aus der Ebene heraus zum Betrachter anzeigt. Für den jeweils im Schrittbild dargestellten Drehwinkel ist weiter die Stellung der Wellenabschnitte des Rotors dargestellt.

In den Figuren 3A bis 3H ist in acht Schritten eine Drehung des Rotors um 90° gezeigt.

In jedem der acht Schrittbilder sind in dem Strom-Zeit-Diagramm der Verlauf des ersten Wechselstroms PU, des zweiten Wechselstroms PV und des dritten Wechselstroms PW dargestellt.

Weiter ist in jedem der acht Schrittbilder in perspektivischer Ausrichtung der Viertelbereich aus dem in Figur 3i gezeigten Ausschnitt des Dreh-Hub-Aktuators mit neun Spulen in drei Hohlzylinderabschnitten des Stators dargestellt.

Für den jeweils im Schrittbild gezeigten Drehwinkel ist eingetragen, welche Spulen bestromt werden, welcher Wechselstrom den jeweiligen Spulen zugeordnet ist und welche Stromrichtung der Wechselstrom hat. Wenn eine Spule bestromt wird, ist die Spule mit einem Ring mit Pfeil gekennzeichnet, wobei der Ring das Muster des zugeordneten Wechselstroms trägt und ein Pfeil im Ring die Stromrichtung anzeigt. Spulen mit nur einem schwarzen Ring ohne Pfeil zeigen nicht bestromte Spulen an. Ferner ist für den jeweils im Schrittbild dargestellten Drehwinkel die Stellung der Wellenabschnitte des Rotors angezeigt. Mittels eines Pfeils jeweils in der 2D-(entsprechend der Darstellung in Fig. 3iii) und der 3D-Ansicht (entsprechend der Darstellung in Fig. 3i) wird symbolisiert, dass in den Figuren 3A bis 3H eine Drehung des Rotors 201 gegen den Uhrzeigersinn beschrieben wird.

Bei der in den Figuren 3A bis 3H in acht Schritten gezeigten Drehung des Rotors um 90° ist der Rotor in Bezug auf den Stator so ausgerichtet, dass der erste Wellenabschnitt W1 und der zweite Wellenabschnitt W2 von der im ersten Hohlzylinderabschnitt H1, dem zweiten Hohlzylinderabschnitt H2 und dem dritten Hohlzylinderabschnitt H1 des Stators aufgespannten inneren Umfangsfläche des Stators überdeckt werden. Die Drehung erfolgt dabei in den Figuren 3A bis 3H gegen die Uhrzeigerrichtung (bezogen auf den eingezeichneten Pfeil).

Die Spulen des ersten Hohlzylinderabschnitts H1 liegen den Permanentmagneten des ersten Wellenabschnitts W1 und die Spulen des dritten Hohlzylinderabschnitts H3 liegen den Permanentmagneten des zweiten Wellenabschnitts W2 gegenüber. Da die Polung der aneinandergrenzenden Permanentmagnete von dem ersten Wellenabschnitt W1 und dem zweiten Wellenabschnitt W2 sich abwechselt, also ein Permanentmagnet mit einem Südpol an einen Permanentmagneten mit einem Nordpol anschließt und umgekehrt, wirkt das bei dem Dreiphasen-Wechselstrom in den Spulen des Hohlzylinderabschnitte erzeugte magnetische Wanderfeld gegenläufig.

Um eine gemeinsame Drehbewegung gegen den Uhrzeigersinn zu bewirken, läuft der Wechselstrom in den Spulen des ersten Hohlzylinderabschnitts H1 und den Spulen des dritten Hohlzylinderabschnitts H3 in umgekehrter Richtung um. Der Wechselstrom fließt durch die quadratischen Drahtwicklungen der Spulen des ersten Hohlzylinderabschnitts H1 in Uhrzeigerrichtung, wie in der perspektivischen Darstellung des Viertelbereichs in den Figuren 3A bis 3H die Pfeilrichtung im Ring angezeigt ist.

Bei den Spulen des dritten Hohlzylinderabschnitts H3 fließt der Wechselstrom dagegen, wie der Pfeil im Ring in der perspektivischen Darstellung des Viertelbereichs in den Figuren 3A bis 3H darstellt, durch die quadratischen Drahtwicklungen gegen die Uhrzeigerrichtung.

Bei den Spulen des zweiten Hohlzylinderabschnitts H2 deckt die untere Hälfte die Permanentmagneten des ersten Wellenabschnitts W1 und die obere Hälfte die Permanentmagneten des zweiten Wellenabschnitts W2 ab. Wegen der unterschiedlichen Polung der aneinander angrenzenden Permanentmagnete des ersten Wellenabschnitts W1 und des zweiten Wellenabschnitts W2 heben sich die Drehwirkungen auf den ersten Wellenabschnitt W1 beziehungsweise den zweiten Wellenabschnitt W2, die ein bei Anlegen eines Dreiphasen-Wechselstroms in den Spulen des zweiten Hohlzylinderabschnitts H2 erzeugtes magnetisches Wanderfeld bewirkt, auf. Die Spulen des zweiten Hohlzylinderabschnitts H2 werden deshalb, wie die Ringe ohne Pfeil in der perspektivischen Darstellung des Viertelbereichs in den Figuren 3A bis 3H anzeigen, nicht bestromt.

In den Figuren 3A bis 3H ist außerdem für die acht Schrittbilder jeweils zusätzlich im Querschnitt der Viertelbereich des unteren ersten Hohlzylinderabschnitts H1 entsprechend Figur 3iii gezeigt.

Figur 3A zeigt den Ausgangspunkt der Drehbewegung.

Der wellenförmige Rotor befindet sich im hohlzylinderförmigen Stator in Bezug auf den Viertelbereich in einer Position, bei der sich, wie der Querschnitt zeigt, der erste Südpol-Permanentmagnet W1-S1 und der zweite Nordpol-Permanentmagnet W1-N2 des unteren ersten Wellenabschnitts W1 der zweiten Hälfte der ersten Spule H1-C1, der zweiten Spule H1-C2, der dritten Spule H1-C3 und der ersten Hälfte der vierten Spule H1-C4 im unteren ersten Hohlzylinderabschnitt H1 gegenüber liegen.

Im Strom-Zeit-Diagramm, das den Verlauf des ersten Wechselstroms PU, des zweiten Wechselstroms PV und des dritten Wechselstroms PW dargestellt, werden die drei Spulen, die längs jedes Hohlzylinderabschnitts im Dreiphasen-Wechselstrom-Modus betrieben werden, mit den Stromwerten des ersten Wechselstroms PU, des zweiten Wechselstroms PV und des dritten Wechselstroms PW zum Zeitpunkt 0.00 bestromt, wie die gestrichelte Linie anzeigt.

Die perspektivische Darstellung des Viertelbereichs zeigt weiter an, dass im unteren ersten Hohlzylinderabschnitt H1 die zweite Hälfte der ersten Spule H1-C1 mit dem dritten Wechselstrom PW, die zweite Spule H1-C2 mit dem zweiten Wechselstrom PV, die dritte Spule H1-C3 mit dem ersten Wechselstrom PU und die erste Hälfte der vierten Spule H1-C4 wieder mit dem dritten Wechselstrom PW betrieben wird, wobei der Wechselstrom im Uhrzeigersinn in den Drahtwicklungen der Spulen des ersten Hohlzylinderabschnitts H1 umläuft, wie der Pfeil in den Ringen anzeigt.

Die Spulen des zweiten Hohlzylinderabschnitts H2 werden nicht bestromt.

Im dritten Hohlzylinderabschnitt H3 wird die eine Hälfte der fünfundzwanzigsten Spule H3-C25 mit dem dritten Wechselstrom PW, die sechsundzwanzigste Spule H3-C26 mit dem zweiten Wechselstrom PV, die siebundzwanzigste Spule H3-C27 mit dem ersten Wechselstrom PU und die eine Hälfte der achtundzwanzigsten Spule H3-C28 wieder mit dem dritten Wechselstrom PW bestromt. Der Wechselstrom läuft dabei gegen den Uhrzeigersinn in den Drahtwicklungen der Spulen des dritten Hohlzylinderabschnitts H3 um, wie der Pfeil in den Ringen anzeigt.

Die Bestromung des Viertelbereichs der drei Hohlzylinderabschnitte des Stators wird identisch in den weiteren drei Viertelbereichen der drei Hohlzylinderabschnitte des Stators ausgeführt. Wenn weitere Gruppen aus drei Hohlzylinderabschnitten, wie in Figur 1D gezeigt, vorgesehen sind, wird jede weitere Gruppe aus drei Hohlzylinderabschnitten dann analog zu der Gruppe aus drei Hohlzylinderabschnitten in Figur 3A bestromt.

Die Bestromung der Spulen des Viertelbereichs, wie sie in Fig. 3A gezeigt ist, bleibt während der gesamten Drehbewegung gleich. Es ändern sich nur die Stromwerte des ersten Wechselstroms PU, des zweiten Wechselstroms PV und des dritten Wechselstroms PW in den einzelnen Spulen, um das magnetische Wanderfeld zu erzeugen.

Figur 3B zeigt den Dreh-Hub-Aktuator 100 nach einem ersten Drehschritt des Rotors um 12°.

Wie der Querschnitt zeigt, liegt nicht mehr der gesamte ersten Südpol-Permanentmagnet W1-S1 im Viertelbereich des ersten Hohlzylinderabschnitt H1, dafür aber zusätzlich schon ein Abschnitt des dritten Südpol-Permanentmagnets W1-S3.

Im Strom-Zeit-Diagramm werden die drei Spulen, die längs jedes Hohlzylinderabschnitts im Dreiphasen-Wechselstrom-Modus betrieben werden, mit den Stromwerten des ersten Wechselstroms PU, des zweiten Wechselstroms PV und des dritten Wechselstroms PW zum Zeitpunkt 2.00 bestromt, wie die gestrichelte Linie anzeigt.

Figur 3C zeigt den Dreh-Hub-Aktuator 100 nach einem zweiten Drehschritt des Rotors um weitere 18° auf 30°.

Wie der Querschnitt zeigt, liegt ein weiterer Bereich des ersten Südpol-Permanentmagnets W1-S1 nicht mehr im Viertelbereich des ersten Hohlzylinderabschnitt H1, dafür aber ein weiterer Abschnitt des dritten Südpol-Permanentmagnets W1-S3.

Im Strom-Zeit-Diagramm werden die drei Spulen, die längs jedes Hohlzylinderabschnitts im Dreiphasen-Wechselstrom-Modus betrieben werden, mit den Stromwerten des ersten Wechselstroms PU, des zweiten Wechselstroms PV und des dritten Wechselstroms PW zum Zeitpunkt 5.00 bestromt, wie die gestrichelte Linie anzeigt.

Figur 3D zeigt den Dreh-Hub-Aktuator 100 nach einem dritten Drehschritt des Rotors um weitere 12° auf 42°.

Wie der Querschnitt zeigt, liegt der erste Südpol-Permanentmagnet W1-S1 nicht mehr im Viertelbereich des ersten Hohlzylinderabschnitts H1, dafür aber der dritte Südpol-Permanentmagnet W1-S3. Der wellenförmige Rotor befindet sich im hohlzylinderförmigen Stator in Bezug auf den Viertelbereich in einer Position, bei der sich der zweite Nordpol-Permanentmagnet W1-N2 und der dritte Südpol-Permanentmagnet W1-S3 des unteren ersten Wellenabschnitts W1 der zweiten Hälfte der ersten Spule H1-C1, der zweiten Spule H1-C2, der dritten Spule H1-C3 und der ersten Hälfte der vierten Spule H1-C4 im unteren ersten Hohlzylinderabschnitt H1 gegenüber liegen.

Im Strom-Zeit-Diagramm werden die drei Spulen, die längs jedes Hohlzylinderabschnitts im Dreiphasen-Wechselstrom-Modus betrieben werden, mit den Stromwerten des ersten Wechselstroms PU, des zweiten Wechselstroms PV und des dritten Wechselstroms PW zum Zeitpunkt 7.00 bestromt, wie die gestrichelte Linie anzeigt.

Figur 3E zeigt den Dreh-Hub-Aktuator 100 nach einem vierten Drehschritt des Rotors um weitere 12° auf 54°.

Wie der Querschnitt zeigt, liegt nicht mehr der gesamte zweite Nordpol-Permanentmagnet W1-N2 im Viertelbereich des ersten Hohlzylinderabschnitts H1, dafür aber ein Abschnitt des vierten Nordpol-Permanentmagnets W1-N4.

Im Strom-Zeit-Diagramm werden die drei Spulen, die längs jedes Hohlzylinderabschnitts im Dreiphasen-Wechselstrom-Modus betrieben werden, mit den Stromwerten des ersten Wechselstroms PU, des zweiten Wechselstroms PV und des dritten Wechselstroms PW zum Zeitpunkt 9.00 bestromt, wie die gestrichelte Linie anzeigt.

Figur 3F zeigt den Dreh-Hub-Aktuator 100 nach einem fünften Drehschritt des Rotors um weitere 12° auf 66°.

Wie der Querschnitt zeigt, liegt ein weiterer Bereich des zweiten Nordpol-Permanentmagnets W1-N2 nicht mehr im Viertelbereich des ersten Hohlzylinderabschnitts H1, dafür aber ein weiterer Abschnitt des vierten Nordpol-Permanentmagnets W1-N4.

Im Strom-Zeit-Diagramm werden die drei Spulen, die längs jedes Hohlzylinderabschnitts im Dreiphasen-Wechselstrom-Modus betrieben werden, mit den Stromwerten des ersten Wechselstroms PU, des zweiten Wechselstroms PV und des dritten Wechselstroms PW zum Zeitpunkt 11.00 bestromt, wie die gestrichelte Linie anzeigt.

Figur 3G zeigt den Dreh-Hub-Aktuator 100 nach einem sechsten Drehschritt des Rotors um weitere 12° auf 78°.

Wie der Querschnitt zeigt, liegt noch ein weiterer Bereich des zweiten Nordpol-Permanentmagnets W1-N2 nicht mehr im Viertelbereich des ersten Hohlzylinderabschnitts H1, dafür aber noch ein weiterer Abschnitt des vierten Nordpol-Permanentmagnets W1-N4.

Im Strom-Zeit-Diagramm werden die drei Spulen, die längs jedes Hohlzylinderabschnitts im Dreiphasen-Wechselstrom-Modus betrieben werden, mit den Stromwerten des ersten Wechselstroms PU, des zweiten Wechselstroms PV und des dritten Wechselstroms PW zum Zeitpunkt 13.00 bestromt, wie die gestrichelte Linie anzeigt.

Figur 3H zeigt den Dreh-Hub-Aktuator 100 nach einem letzten siebten Drehschritt des Rotors um weitere 12° auf 90°.

Wie der Querschnitt zeigt, liegt der zweite Nordpol-Permanentmagnet W1-N2 nicht mehr im Viertelbereich des ersten Hohlzylinderabschnitts H1, dafür aber der vierte Nordpol-Permanentmagnet W1-N4. Der wellenförmige Rotor befindet sich im hohlzylinderförmigen Stator in Bezug auf den Viertelbereich in einer Position, bei der dritte Südpol-Permanentmagnet W1-S3 und der vierte Nordpol-Permanentmagnet W1-N4 des unteren ersten Wellenabschnitts W1 der zweiten Hälfte der ersten Spule H1-C1, der zweiten Spule H1-C2, der dritten Spule H1-C3 und der ersten Hälfte der vierten Spule H1-C4 im unteren ersten Hohlzylinderabschnitt H1 gegenüber liegen.

Im Strom-Zeit-Diagramm werden die drei Spulen, die längs jedes Hohlzylinderabschnitts im Dreiphasen-Wechselstrom-Modus betrieben werden, mit den Stromwerten des ersten Wechselstroms PU, des zweiten Wechselstroms PV und des dritten Wechselstroms PW zum Zeitpunkt 15.00 bestromt, wie die gestrichelte Linie anzeigt.

Ausgehend von der Bestromung der Spulen des Viertelbereichs, wie sie in Fig. 3H gezeigt ist, kann eine weitere Drehung des Rotors um 90° ausgeführt werden, die in den Figuren 3A bis 3H dargestellt ist.

In den Figuren 4A bis 4H ist in acht Schritten ein Hub des Rotors über die Länge von zwei Permanentmagneten gezeigt.

In Fig. 4i ist in perspektivischer Ausrichtung der Viertelbereich aus dem in Figur 2A gezeigten Ausschnitt des Hub-Dreh-Aktuators 100 mit neun Spulen in drei Hohlzylinderabschnitten des Stators und drei Wellenabschnitten des Rotors dargestellt. Die Darstellung entsprechend Figur 4i ist auch in jedem der acht Schrittbilder gemäß den Figuren 4A bis 4H gezeigt. Mittels eines Pfeils wird dabei symbolisiert, dass in den Figuren 4A bis 4H eine Hubbewegung des Rotors 201 beschrieben wird.

Bei dem in den Figuren 4A bis 4H in acht Schritten gezeigten Hub des Rotors über die Länge von zwei Permanentmagneten ist der Rotor in Bezug auf den Stator so ausgerichtet, dass der erste Wellenabschnitt W1 und der zweite Wellenabschnitt W2 von der im ersten Hohlzylinderabschnitt H1, dem zweiten Hohlzylinderabschnitt H2 und dem dritten Hohlzylinderabschnitt H3 des Stators aufgespannten inneren Umfangsfläche des Stators überdeckt werden. Der dritte Wellenabschnitt W3 und der in Figur 4i und 4A noch nicht dargestellte vierte Wellenabschnitt W4 stehen, in z-Richtung gesehen, über die Hohlzylinderabschnitte vor.

Eine aus der ersten Spule H1-C1 des ersten Hohlzylinderabschnitts H1, der dreizehnten Spule H2-C13 des zweiten Hohlzylinderabschnitts H2 und der fünfundzwanzigsten Spule H3-C25 des dritten Hohlzylinderabschnitts H3 gebildete erste Spulenreihe SR1 liegt bei der Hubbewegung des Rotors jeweils der ersten Hälfte einer aus dem achten Nordpol-Permanentmagneten W1-N8 des ersten Wellenabschnitts W1, dem sechzehnten Südpol-Permanentmagneten W2-S16 des zweiten Wellenabschnitts W2, dem vierundzwanzigsten Nordpol-Permanentmagneten W3-N24 des dritten Wellenabschnitts W3 und dem zweiunddreißigsten Südpol-Permanentmagneten W4-S32 des vierten Wellenabschnitts W4 gebildeten ersten Permanentmagneten-Reihe WR1 und jeweils der zweiten Hälfte einer aus dem ersten Südpol-Permanentmagneten W1-S1 des ersten Wellenabschnitts W1, dem neunten Nordpol-Permanentmagneten W2-N9 des zweiten Wellenabschnitts W2, dem siebzehnten Südpol-Permanentmagneten W3-S17 des dritten Wellenabschnitts W3 und dem fünfundzwanzigsten Nordpol-Permanentmagneten W4-N25 des vierten Wellenabschnitts W4 gebildeten zweiten Permanentmagneten-Reihe WR2 gegenüber.

Eine aus der zweite Spule H1-C2 des ersten Hohlzylinderabschnitts H1, der vierzehnten Spule H2-C14 des zweiten Hohlzylinderabschnitts H2 und der sechsundzwanzigsten Spule H3-C26 des dritten Hohlzylinderabschnitts H3 gebildete zweite Spulenreihe SR2 liegt bei der Hubbewegung des Rotors der aus dem ersten Südpol-Permanentmagneten W1-S1 des ersten Wellenabschnitts W1, dem neunten Nordpol-Permanentmagneten W2-N9 des zweiten Wellenabschnitts W2, dem siebzehnten Südpol-Permanentmagneten W3-S17 des dritten Wellenabschnitts W3 und dem fünfundzwanzigsten Nordpol-Permanentmagneten W4-N25 des vierten Wellenabschnitts W4 gebildeten zweiten Permanentmagneten-Reihe WR2 gegenüber.

Eine aus der dritten Spule H1-C3 des ersten Hohlzylinderabschnitts H1, der fünfzehnten Spule H2-C15 des zweiten Hohlzylinderabschnitts H2 und der siebenundzwanzigsten Spule H3-C27 des dritten Hohlzylinderabschnitts H3 gebildete dritte Spulenreihe SR3 liegt bei der Hubbewegung des Rotors einer aus dem zweiten Nordpol-Permanentmagneten W1-N2 des ersten Wellenabschnitts W1, dem zehnten Südpol-Permanentmagnet W2-S10 des zweiten Wellenabschnitts W2, dem achtzehnten Nordpol-Permanentmagneten W3-N18 des dritten Wellenabschnitts W3 und dem sechsundzwanzigsten Südpol-Permanentmagneten W4-S26 des vierten Wellenabschnitts W4 gebildeten dritten Permanentmagneten-Reihe WR3 gegenüber.

Eine aus der vierten Spule H1-C4 des ersten Hohlzylinderabschnitts H1, der sechzehnten Spule H2-C16 des zweiten Hohlzylinderabschnitts H2 und der achtundzwanzigsten Spule H3-C28 des dritten Hohlzylinderabschnitts H3 gebildete vierte Spulenreihe SR4 liegt bei der Hubbewegung des Rotors jeweils der ersten Hälfte der aus dem zweiten Nordpol-Permanentmagneten W1-N2 des ersten Wellenabschnitts W1, dem zehnten Südpol-Permanentmagnet W2-S10 des zweiten Wellenabschnitts W2, dem achtzehnten Nordpol-Permanentmagneten W3-N18 des dritten Wellenabschnitts W3 und dem sechsundzwanzigsten Südpol-Permanentmagneten W4-S26 des vierten Wellenabschnitts W4 gebildeten dritten Permanentmagneten-Reihe WR3 und jeweils der zweiten Hälfte einer aus dem dritten Südpol-Permanentmagneten W1-S3 des ersten Wellenabschnitts W1, dem elften Nordpol-Permanentmagneten W2-N11 des zweiten Wellenabschnitts W2, dem neunzehnten Südpol-Permanentmagneten W3-S19 des dritten Wellenabschnitts W3 und dem siebenundzwanzigsten Nordpol-Permanentmagneten W4-N27 des vierten Wellenabschnitts W4 gebildeten vierten Permanentmagneten-Reihe WR4 gegenüber.

Da die Polung der aneinandergrenzenden Permanentmagnete in der zweiten Permanentmagneten-Reihe WR2 und der dritten Permanentmagneten-Reihe WR3 sich abwechselt, also ein Permanentmagnet mit einem Südpol an einen Permanentmagneten mit einem Nordpol anschließt und umgekehrt, wirken die bei dem Dreiphasen-Wechselstrom in der zweiten Spulenreihe SR2 und der dritten Spulenreihe SR3 quer zu den Hohlzylinderabschnitten erzeugten magnetischen Wanderfelder gegenläufig.

Um eine gemeinsame Hubbewegung entgegen der z-Richtung zu bewirken, läuft der Wechselstrom in der zweiten Spulenreihe SR2 und der dritten Spulenreihe SR3 in umgekehrter Richtung um. Der Wechselstrom fließt durch die quadratischen Drahtwicklung der Spulen der in der zweiten Spulenreihe SR2 gegen die Uhrzeigerrichtung, wie in der perspektivischen Darstellung des Viertelbereichs in den Figuren 4A bis 4H die Pfeilrichtung im Ring anzeigt.

Bei den Spulen der dritten Spulenreihe SR3 fließt der Strom, wie der Pfeil im Ring in der perspektivischen Darstellung des Viertelbereich in den Figuren 4A bis 4H darstellt, durch die quadratischen Drahtwicklung in Uhrzeigerrichtung um.

Bei den Spulen der ersten Spulenreihe SR1 deckt die erste Hälfte die Permanentmagneten der ersten Permanentmagneten-Reihe WR1 und die zweite Hälfte die Permanentmagneten der zweiten Permanentmagneten-Reihe WR2 ab. Ferner decken bei den Spulen der vierten Spulenreihe SR4 die erste Hälfte die Permanentmagneten der dritten Permanentmagneten-Reihe WR3 und die zweite Hälfte die Permanentmagneten der vierten Permanentmagneten-Reihe WR4 ab.

Wegen der unterschiedlichen Polung der aneinander angrenzenden Permanentmagnete in den Wellenabschnitten heben sich die Hubwirkungen, die ein bei Anlegen eines Dreiphasen-Wechselstroms in den Spulen ersten Spulenreihe SR1 beziehungsweise vierten Spulenreihe SR4 erzeugtes magnetisches Wanderfeld bewirkt, auf. Die Spulen der ersten Spulenreihe SR1 und der vierten Spulenreihe SR4 werden deshalb, wie die Ringe ohne Pfeil in der perspektivischen Darstellung des Viertelbereichs in den Figuren 4A bis 4H anzeigen, nicht bestromt.

In Figur 4ii ist in einem Strom-Zeit-Diagramm der Verlauf des ersten Wechselstroms PU, des zweiten Wechselstroms PV und des dritten Wechselstroms PW dargestellt, wobei die verschiedenen Wechselströme mit unterschiedlichen Mustern gekennzeichnet sind. In dem jeweiligen Schrittbild entsprechend der Figuren 4A bis 4H sind für den jeweils im Schrittbild dargestellten Hub mit gestrichelter Linie die aktuellen Stromwerte der drei Spulen, die über die drei Hohlzylinderabschnitten hinweg im Dreiphasen-Wechselstrom-Modus betrieben werden, eingetragen.

In Figur 4iii und zusätzlich dann noch in den Figuren 4A bis 4H sind außerdem für die acht Schrittbilder jeweils zusätzlich die zweite Spulenreihe SR2 und die zweiten Permanentmagneten-Reihe WR2 im Querschnitt in gedrehter Darstellung gezeigt.

Die zweite Spulenreihe SR2 besteht dabei, ausgehend von links aneinandergereiht, aus der zweiten Spule H1-C2 des ersten Hohlzylinderabschnitts H1, der vierzehnten Spule H2-C14 des zweiten Hohlzylinderabschnitts H2 und der sechsundzwanzigsten Spule H3-C26 des dritten Hohlzylinderabschnitts H3. Die zweite Permanentmagneten-Reihe WR2 umfasst, ausgehend von der links aneinandergereiht, den ersten Südpol-Permanentmagneten W1-S1 des ersten Wellenabschnitts W1, den neunten Nordpol-Permanentmagneten W2-N9 des zweiten Wellenabschnitts W2, den siebzehnten Südpol-Permanentmagneten W3-S17 des dritten Wellenabschnitts W3 und den fünfundzwanzigste Nordpol-Permanentmagneten W4-N25 des vierten Wellenabschnitts W4.

Die Drahtwicklungen der Spulen sind dabei mit dem Muster des zugeordneten Wechselstroms gekennzeichnet, wobei ID1 die elektrische Stromrichtung vom Betrachter in die Ebene hinein und ein ID2 die elektrische Stromrichtung aus der Ebene heraus zum Betrachter anzeigt. Für den jeweils im Schrittbild dargestellten Hub ist weiter die Stellung der Permanentmagneten-Reihe WR2 in Bezug auf die zweite Spulenreihe SR2 dargestellt.

Figur 4A zeigt den Ausgangspunkt der Hubbewegung.

Der wellenförmige Rotor befindet sich im hohlzylinderförmigen Stator in einer Position, bei der, wie der Querschnitt zeigt, der erste Südpol-Permanentmagnet W1-S1 des ersten Wellenabschnitts W1 und der neunte Nordpol-Permanentmagnet W2-N9 des zweiten Wellenabschnitts W2 der zweiten Spule H1-C2 des ersten Hohlzylinderabschnitts H1, der vierzehnten Spule H2-C14 des zweiten Hohlzylinderabschnitts H2 und der sechsundzwanzigsten Spule H3-C26 des dritten Hohlzylinderabschnitts H3 gegenüber liegt.

Im Strom-Zeit-Diagramm, das den Verlauf des ersten Wechselstroms PU, des zweiten Wechselstroms PV und des dritten Wechselstroms PW dargestellt, werden die drei Spulen, die längs jedes Hohlzylinderabschnitts im Dreiphasen-Wechselstrom-Modus betrieben werden, mit den Stromwerten des ersten Wechselstroms PU, des zweiten Wechselstroms PV und des dritten Wechselstroms PW zum Zeitpunkt 0.00 bestromt, wie die gestrichelte Linie anzeigt.

Die perspektivische Darstellung des Viertelbereichs zeigt weiter, dass im erste Hohlzylinderabschnitt H1 die zweite Spule H1-C2 und die dritte Spule H1-C3 mit dem ersten Wechselstrom PU, im zweiten Hohlzylinderabschnitt H2 die vierzehnte Spule H2-C14 und die fünfzehnte Spule H2-C15 mit dem dritten Wechselstrom PW und im dritten Hohlzylinderabschnitt H3 die sechsundzwanzigste Spule H3-C26 und die siebenundzwanzigste Spule H3-C27 mit dem zweiten Wechselstrom PV betrieben werden, wobei der Wechselstrom in den Drahtwicklungen der aus der zweiten Spule H1-C2, der vierzehnten Spule H2-C14 und der sechsundzwanzigsten Spule H3-C26 gebildeten zweiten Spulenreihe SR2 gegen den Uhrzeigersinn und in den Drahtwicklungen der aus der dritten Spule H1-C3, der fünfzehnten Spule H2-C15 und der siebenundzwanzigsten Spule H3-C27 gebildeten dritten Spulenreihe SR3 im Uhrzeigersinn umläuft, wie der Pfeil in den Ringen anzeigt.

Die Stromrichtung in den Drahtwicklungen der zweiten Spulenreihe SR2 ist im Querschnitt mit einem Punkt, der den Stromfluss aus der Zeichnungsebene bei den ersten Hälften der Spulen und einem Kreuz, das den Stromrichtung in die Zeichnungsebene bei den zweiten Hälften der Spulen anzeigt, gekennzeichnet.

Aus Gründen der vereinfachten Darstellung verschiebt sich bei der Darstellung in den Figuren 4A bis 4H die zweite Spulenreihe SR2 gegenüber der zweiten Permanentmagneten-Reihe WR2. Entsprechend der Beschreibung erfolgt jedoch eine Hubbewegung des Rotors gegenüber dem Stator. Somit erfolgt eine Hubbewegung der zweiten Permanentmagneten-Reihe WR2 gegenüber der feststehenden zweiten Spulenreihe SR2.

Die Spulen der ersten Spulen-Reihe SR1 und der vierten Spulen-Reihe SR4 werden nicht bestromt. Die Bestromung des Viertelbereichs der drei Hohlzylinderabschnitte des Stators wird identisch in den weiteren drei Viertelbereichen der drei Hohlzylinderabschnitte des Stators ausgeführt. Wenn weitere Gruppen aus drei Hohlzylinderabschnitten, wie in Figur 1D gezeigt, vorgesehen sind, wird jede weitere Gruppe aus drei Hohlzylinderabschnitten dann analog zu der Gruppe aus drei Hohlzylinderabschnitten in Figur 4A bestromt.

Die Bestromung der Spulen des Viertelbereichs, wie sie in Figur 4A gezeigt ist, bleibt während der gesamten Hubbewegung gleich. Es ändern sich nur die Stromwerte des ersten Wechselstroms PU, des zweiten Wechselstroms PV und des dritten Wechselstroms PW in den einzelnen Spulen, um das magnetische Wanderfeld zu erzeugen.

Figur 4B zeigt den Dreh-Hub-Aktuator 100 nach einem ersten Hubschritt mit einem Hub, der das 0,27-fache der Polteilung aufweist. Als Polteilung wird der Abstand zwischen zwei Permanentmagneten, gemessen von Mitte zu Mitte verstanden.

Wie der Querschnitt zeigt, liegt nicht mehr der gesamte erste Südpol-Permanentmagnet W1-S1 der zweiten Permanentmagneten-Reihe WR2 im Bereich der zweiten Spulenreihe SR2, dafür aber ein Abschnitt des siebzehnten Südpol-Permanentmagnets W3-S17 der zweiten Permanentmagneten-Reihe WR2.

Der erste Wellenabschnitt W1 des Rotors schiebt sich, wie die perspektivische Darstellung zeigt und mittels eines Pfeils verdeutlicht, gegen die z-Richtung aus dem Ausschnitt des Stators mit den drei Hohlzylinderabschnitten heraus, während der dritte Wellenabschnitt W3 des Rotors sich gegen die z-Richtung in den Ausschnitt des Stators mit den drei Hohlzylinderabschnitten hineinschiebt.

Im Strom-Zeit-Diagramm werden die drei Spulen der zweiten Spulenreihe SR2 beziehungsweise der dritten Spulenreihe SR3, die jeweils quer zu den Hohlzylinderabschnitten im Dreiphasen-Wechselstrom-Modus betrieben werden, mit den Stromwerten des ersten Wechselstroms PU, des zweiten Wechselstroms PV und des dritten Wechselstroms PW zum Zeitpunkt 2.00 bestromt, wie die gestrichelte Linie anzeigt.

Figur 4C zeigt den Dreh-Hub-Aktuator 100 nach einem zweiten Hubschritt des Rotors mit einem Hub, der das 0,27-fache der Polteilung aufweist, auf einen Gesamthub mit einem 0,54-fachen der Länge eines Permanentmagneten.

Wie der Querschnitt zeigt, liegt ein weiterer Bereich des ersten Südpol-Permanentmagnets W1-S1 der zweiten Permanentmagneten-Reihe WR2 außerhalb des Bereichs der zweiten Spulenreihe SR2, dafür aber ein weiterer Abschnitt des siebzehnten Südpol-Permanentmagnets W3-S17 der zweiten Permanentmagneten-Reihe WR2 im Bereich der zweiten Spulenreihe SR2.

Der erste Wellenabschnitt W1 des Rotors hat sich, wie die perspektivische Darstellung zeigt, weiter aus dem Ausschnitt des Stators mit den drei Hohlzylinderabschnitten herausgeschoben, während der dritte Wellenabschnitt W3 des Rotors sich weiter in den Ausschnitt des Stators mit den drei Hohlzylinderabschnitten hineingeschoben hat.

Im Strom-Zeit-Diagramm werden die drei Spulen der zweiten Spulenreihe SR2 beziehungsweise der dritten Spulenreihe SR3, die jeweils quer zu den Hohlzylinderabschnitten im Dreiphasen-Wechselstrom-Modus betrieben werden, mit den Stromwerten des ersten Wechselstroms PU, des zweiten Wechselstroms PV und des dritten Wechselstroms ÜW zum Zeitpunkt 4.00 bestromt, wie die gestrichelte Linie anzeigt.

Figur 4D zeigt den Dreh-Hub-Aktuator 100 nach einem dritten Hubschritt des Rotors mit einem Hub, der das 0,27-fache der Polteilung beträgt, auf einen Gesamthub mit einem 0,81-fachen der Länge eines Permanentmagneten.

Wie der Querschnitt zeigt, befindet sich der größere Teil des ersten Südpol-Permanentmagnets W1-S1 der zweiten Permanentmagneten-Reihe WR2 außerhalb des Bereichs der zweiten Spulenreihe SR2, dafür aber ein weiterer Abschnitt des siebzehnten Südpol-Permanentmagnets W3-S17 der zweiten Permanentmagneten-Reihe WR2 im Bereich der zweiten Spulenreihe SR2.

Der erste Wellenabschnitt W1 des Rotors steht, wie die perspektivische Darstellung zeigt, weitgehend über den Ausschnitt des Stators mit den drei Hohlzylinderabschnitten vor, während der dritte Wellenabschnitt W3 sich jetzt fast ganz im Bereich des Ausschnittes des Stators mit den drei Hohlzylinderabschnitten befindet.

Im Strom-Zeit-Diagramm werden die drei Spulen der zweiten Spulenreihe SR2 beziehungsweise der dritten Spulenreihe SR3, die jeweils quer zu den Hohlzylinderabschnitten im Dreiphasen-Wechselstrom-Modus betrieben werden, mit den Stromwerten des ersten Wechselstroms PU, des zweiten Wechselstroms PV und des dritten Wechselstroms PW zum Zeitpunkt 6.00 bestromt, wie die gestrichelte Linie anzeigt.

Figur 4E zeigt den Dreh-Hub-Aktuator 100 nach einem vierten Hubschritt des Rotors mit einem Hub, der das 0,27-fache der Polteilung aufweist, auf einen Gesamthub mit einer 1,08-fachen Länge eines Permanentmagneten.

Wie der Querschnitt zeigt, befindet sich der erste Südpol-Permanentmagnet W1-S1 der zweiten Permanentmagneten-Reihe WR2 außerhalb des Bereichs der zweiten Spulenreihe SR2 und der siebzehnte Südpol-Permanentmagnet W3-S17 der zweiten Permanentmagneten-Reihe WR2 befindet sich im Bereich der zweiten Spulenreihe SR2.

Der erste Wellenabschnitt W1 des Rotors steht, wie die perspektivische Darstellung zeigt, über den Ausschnitt des Stators mit den drei Hohlzylinderabschnitten vor, während der dritte Wellenabschnitt W3 des Rotors vom Bereich des Ausschnittes des Stators mit den drei Hohlzylinderabschnitten verdeckt wird.

Im Strom-Zeit-Diagramm werden die drei Spulen der zweiten Spulenreihe SR2 beziehungsweise der dritten Spulenreihe SR3, die jeweils quer zu den Hohlzylinderabschnitten im Dreiphasen-Wechselstrom-Modus betrieben werden, mit den Stromwerten des ersten Wechselstroms PU, des zweiten Wechselstroms PV und des dritten Wechselstroms PW zum Zeitpunkt 8.00 bestromt, wie die gestrichelte Linie anzeigt.

Figur 4F zeigt den Dreh-Hub-Aktuator 100 nach einem fünften Hubschritt des Rotors um einem Hub, der das 0,27-fache der Polteilung aufweist, auf einen Gesamthub mit einer 1,35fachen Länge eines Permanentmagneten.

Wie der Querschnitt zeigt, liegt nun auch ein Abschnitt des neunten Nordpol-Permanentmagnet W2-N9 der zweiten Permanentmagneten-Reihe WR2 im Bereich außerhalb der zweiten Spulenreihe SR2, dafür aber ein Abschnitt der fünfundzwanzigsten Nordpol-Permanentmagnets W4-N25 der zweiten Permanentmagneten-Reihe WR2 im Bereich innerhalb der zweiten Spulenreihe SR2.

Neben dem ersten Wellenabschnitt W1 des Rotors steht auch der zweite Wellenabschnitt W2 des Rotors, wie die perspektivische Darstellung zeigt, gegen die z-Richtung aus dem Ausschnitt des Rotors mit den drei Hohlzylinderabschnitten vor, während der vierte Wellenabschnitt W4 des Stators sich gegen die z-Richtung in den Ausschnitt des Rotors mit den drei Hohlzylinderabschnitten hineinschiebt.

Im Strom-Zeit-Diagramm werden die drei Spulen der zweiten Spulenreihe SR2 beziehungsweise der dritten Spulenreihe SR3, die jeweils quer zu den Hohlzylinderabschnitten im Dreiphasen-Wechselstrom-Modus betrieben werden, mit den Stromwerten des ersten Wechselstroms PU, des zweiten Wechselstroms PV und des dritten Wechselstroms PW zum Zeitpunkt 10.00 bestromt, wie die gestrichelte Linie anzeigt.

Figur 4G zeigt den Dreh-Hub-Aktuator 100 nach einem sechsten Hubschritt des Rotors mit einem Hub, der die 0,27-fache der Polteilung aufweist, auf einen Gesamthub mit der 1,62-fachen Länge eines Permanentmagneten.

Wie der Querschnitt zeigt, befindet sich ein weiterer Abschnitt des neunten Nordpol-Permanentmagneten W2-N9 der zweiten Permanentmagneten-Reihe WR2 im Bereich außerhalb der zweiten Spulenreihe SR2, dafür aber ein weiterer Abschnitt des fünfundzwanzigsten Nordpol-Permanentmagnets W4-N25 der zweiten Permanentmagneten-Reihe WR2 im Bereich innerhalb der zweiten Spulenreihe SR2.

Der zweite Wellenabschnitt W2 des Rotors ragt weiter, wie die perspektivische Darstellung zeigt, aus dem Ausschnitt des Rotors mit den drei Hohlzylinderabschnitten heraus, während der vierte Wellenabschnitt W4 sich weiter in den Ausschnitt des Rotors mit den drei Hohlzylinderabschnitten hineinschiebt.

Im Strom-Zeit-Diagramm werden die drei Spulen der zweiten Spulenreihe SR2 beziehungsweise der dritten Spulenreihe SR3, die jeweils quer zu den Hohlzylinderabschnitten im Dreiphasen-Wechselstrom-Modus betrieben werden, mit den Stromwerten des ersten Wechselstroms PU, des zweiten Wechselstroms PV und des dritten Wechselstroms PW zum Zeitpunkt 12.00 bestromt, wie die gestrichelte Linie anzeigt.

Figur 4H zeigt den Dreh-Hub-Aktuator 100 nach einem letzten siebten Hubschritt des Rotors mit einem Hub, der eine 0,38-fache der Polteilung aufweist, auf einen Gesamthub mit einer 2-fachen eines Permanentmagneten.

Wie der Querschnitt zeigt, befindet sich der erste Südpol-Permanentmagnet W1-S1 und der neunte Nordpol-Permanentmagnet W2-N9 der zweiten Permanentmagneten-Reihe WR2 vor dem Bereich der zweiten Spulenreihe SR2. Die zweite Spulenreihe SR2 deckt nun den siebzehnten Südpol-Permanentmagnet W3-S17 und den fünfundzwanzigsten Nordpol-Permanentmagnet W4-N25 der zweiten Permanentmagneten-Reihe WR2 ab.

Der erste Wellenabschnitt W1 und der zweite Wellenabschnitt W2 des Rotors stehen, wie die perspektivische Darstellung zeigt, über den Ausschnitt des Stators mit den drei Hohlzylinderabschnitten vor, während der dritte Wellenabschnitt W3 und der vierte Wellenabschnitt W4 sich im Bereich des Ausschnittes des Stators mit den drei Hohlzylinderabschnitten befinden.

Im Strom-Zeit-Diagramm werden die drei Spulen der zweiten Spulenreihe SR2 beziehungsweise der dritten Spulenreihe SR3, die jeweils quer zu den Hohlzylinderabschnitten im Dreiphasen-Wechselstrom-Modus betrieben werden, mit den Stromwerten des ersten Wechselstroms PU, des zweiten Wechselstroms PV und des dritten Wechselstroms PW zum Zeitpunkt 15.00 bestromt, wie die gestrichelte Linie anzeigt.

Ausgehend von der Bestromung der Spulen des Viertelbereichs, wie sie in Fig. 4H gezeigt ist, kann ein weiterer Hub des Rotors über die Länge von zwei Permanentmagneten ausgeführt werden, die in den Figuren 4A bis 4H dargestellt ist.

In den Figuren 5A bis 5H ist in acht Schrittbildern eine Kombination der Drehung des Rotors um 90°, die in den Figuren 3A bis 3H dargestellt ist, mit dem Hub des Rotors über die Länge von zwei Permanentmagneten, die in den Figuren 4A bis 4H dargestellt ist, gezeigt.

In Fig. 5i ist in perspektivischer Ausrichtung der Viertelbereich aus dem in Figur 2A gezeigten Ausschnitt des Dreh-Hub-Aktuators 100 mit neun Spulen in drei Hohlzylinderabschnitten des Stators und drei Wellenabschnitten des Rotors dargestellt. Die Darstellung entspricht dann der Darstellung in den Figuren 3i und 4i. Die Darstellung entsprechend Figur 5i ist auch in jedem der acht Schrittbilder gemäß den Figuren 5A bis 5H gezeigt. Mittels eines ersten Pfeils und eines zweiten Pfeils wird dabei symbolisiert, dass in den Figuren 5A bis 5H eine kombinierte Dreh-Hub-Bewegung des Rotors 201 beschrieben wird.

Für die jeweils im Schrittbild gezeigte Dreh-Hub-Bewegung ist im Viertelbereich eingetragen, welche Spulen bestromt werden, welcher Wechselstrom den jeweiligen Spulen zugeordnet ist und welche Stromrichtung der Wechselstrom hat. Wenn eine Spule bestromt wird, ist die Spule mit einem Ring mit Pfeil gekennzeichnet, wobei der Ring das Muster des zugeordneten Wechselstroms trägt und ein Pfeil im Ring die Stromrichtung anzeigt.

Ist der Pfeil im Ring oben angeordnet, zeigt der Pfeil eine Bestromung der Spule im Rahmen der Drehbewegung an. Wenn der Pfeil unten am Ring angeordnet ist, steht der Pfeil für eine Bestromung der Spule im Rahmen der Hubbewegung. Ist im Ring ein Pfeil sowohl oben als auch unten gezeigt, dient die Bestromung der Spule sowohl zur Drehbewegung als auch zur Hubbewegung. Wenn die Spule gleichzeitig für die Drehbewegung und die Hubbewegung bestromt wird, überlagern sich die zugeordneten Wechselströme. Der Ring an der Spule trägt dann im oberen Bereich das Muster des der Drehbewegung zugeordneten Wechselstroms und im unteren Bereich das Muster des der Hubbewegung zugeordneten Wechselstroms.

Ferner ist für die jeweils im Schrittbild dargestellte Dreh-Hub-Bewegung die Stellung der Wellenabschnitte des Rotors angezeigt.

Bei der in den Figuren 5A bis 5H in acht Schritten gezeigten gleichzeitigen Drehung des Rotors um 90° und Hubbewegung des Rotors über die Länge von zwei Permanentmagneten ist der Rotor in Bezug auf den Stator so ausgerichtet, dass der erste Wellenabschnitt W1 und der zweite Wellenabschnitt W2 von der im ersten Hohlzylinderabschnitt H1, dem zweiten Hohlzylinderabschnitt H2 und dem dritten Hohlzylinderabschnitt H3 des Stators aufgespannten inneren Umfangsfläche des Stators überdeckt wird. Der dritte Wellenabschnitt W3 und der vierte Wellenabschnitt W4 stehen in z-Richtung gesehen über die Hohlzylinderabschnitte vor.

Die Spulen des ersten Hohlzylinderabschnitts H1 liegen den Permanentmagneten des ersten Wellenabschnitts W1 und die Spulen des dritten Hohlzylinderabschnitts H3 liegen den Permanentmagneten des zweiten Wellenabschnitts W2 gegenüber. Bei den Spulen des zweiten Hohlzylinderabschnitts H2 deckt die untere Hälfte die Permanentmagneten des ersten Wellenabschnitts W1 und die obere Hälfte die Permanentmagneten des zweiten Wellenabschnitts W2 ab.

In Figur 5ii ist in einem Strom-Zeit-Diagramm der Verlauf des ersten Wechselstroms PU, des zweiten Wechselstroms PV und des dritten Wechselstroms PW dargestellt, wobei die verschiedenen Wechselströme mit unterschiedlichen Mustern gekennzeichnet sind. In jedem der acht Schrittbilder der Figuren 5A bis 5H sind jeweils in einem Strom-Zeit-Diagramm der Verlauf des ersten Wechselstroms PU, des zweiten Wechselstroms PV und des dritten Wechselstroms PW dargestellt, wobei die verschiedenen Wechselströme mit unterschiedlichen Mustern gekennzeichnet sind. Für die jeweils im Schrittbild dargestellten Dreh-Hub-Bewegung sind mit gestrichelter Linie die aktuellen Stromwerte eingetragen.

Figur 5A zeigt den Ausgangspunkt der Dreh-Hub-Bewegung.

Die Spulen des ersten Hohlzylinderabschnitts H1 liegen den Permanentmagneten des ersten Wellenabschnitts W1 und die Spulen des dritten Hohlzylinderabschnitts H3 liegen den Permanentmagneten des zweiten Wellenabschnitts W2 gegenüber. Bei den Spulen des zweiten Hohlzylinderabschnitts H2 deckt die obere Hälfte die Permanentmagneten des ersten Wellenabschnitts W1 und die untere Hälfte die Permanentmagneten des zweiten Wellenabschnitts W2 ab.

Im ersten Hohlzylinderabschnitt H1 decken gesehen aus x-Richtung gegen den Uhrzeigersinn die zweite Hälfte der ersten Spule H1-C1 und die zweite Spule H1-C2 den ersten Südpol-Permanentmagnet W1-S1 des ersten Wellenabschnitts W1 und die dritte Spule H1-C3 und die erste Hälfte der vierten Spule H1-C4 den zweiten Nordpol-Permanentmagnet W1-N2 des ersten Wellenabschnitts W1 ab.

Im zweiten Hohlzylinderabschnitt H2 decken, gesehen aus x-Richtung gegen den Uhrzeigersinn, mit dem unteren Hälften-Bereich die zweite Hälfte der dreizehnten Spule H2-C13 und die vierzehnte Spule H2-C14 den ersten Südpol-Permanentmagnet W1-S1 des ersten Wellenabschnitts W1 und die fünfzehnte Spule H2-C15 und die erste Hälfte der sechzehnten Spule H2-C16 den zweiten Nordpol-Permanentmagnet W1-N2 des ersten Wellenabschnitts W1 ab.

Ferner decken im zweiten Hohlzylinderabschnitt H2 gesehen aus der x-Richtung gegen den Uhrzeigersinn, mit dem oberen Hälften-Bereich die zweite Hälfte der dreizehnten Spule H2-C13 und die vierzehnte Spule H2-C14 den neunten Nordpol-Permanentmagnet W2-N9 des zweiten Wellenabschnitts W2 und die fünfzehnte Spule H2-C15 und die erste Hälfte der sechzehnten Spule H2-C16 den zehnten Südpol-Permanentmagnet W1-S10 des zweiten Wellenabschnitts W2 ab.

Im dritten Hohlzylinderabschnitt H3 decken, gesehen aus der x-Richtung gegen den Uhrzeigersinn, die erste Hälfte der fünfundzwanzigsten Spule H3-C25 und die sechsundzwanzigste Spule H3-C26 den neunten Nordpol-Permanentmagnet W2-N9 des zweiten Wellenabschnitts W2 und die siebenundzwanzigste Spule H3-C27 und die zweite Hälfte der achtundzwanzigsten Spule H3-C28 den zehnten Südpol-Permanentmagnet W1-S10 des zweiten Wellenabschnitts W2 ab.

In die z-Richtung gesehen, deckt die zweite Hälfte der ersten Spule H1-C1 des ersten Hohlzylinderabschnitts H1 und der untere Hälften-Bereich der zweiten Hälfte der dreizehnten Spule H2-C13 des zweiten Hohlzylinderabschnitts H2 den ersten Südpol-Permanentmagnet W1-S1 des ersten Wellenabschnitts W1 und der obere Hälften-Bereich der zweiten Hälfte der dreizehnten Spule H2-C13 des zweiten Hohlzylinderabschnitts H2 und die zweite Hälfte der fünfundzwanzigsten Spule H3-C25 des dritten Hohlzylinderabschnitts H3 den neunten Nordpol-Permanentmagneten W2-N9 des zweiten Wellenabschnitts W2 ab.

In die z-Richtung gesehen, deckt die zweite Spule H1-C2 des ersten Hohlzylinderabschnitts H1 und der untere Hälften-Bereich der vierzehnten Spule H2-C14 des zweiten Hohlzylinderabschnitts H2 den ersten Südpol-Permanentmagnet W1-S1 des ersten Wellenabschnitts W1 und der obere Hälften-Bereich der vierzehnten Spule H2-C14 des zweiten Hohlzylinderabschnitts H2 und die sechsundzwanzigste Spule H3-C26 des dritten Hohlzylinderabschnitts H3 den neunten Nordpol-Permanentmagneten W2-N9 des zweiten Wellenabschnitts W2 ab.

In die z-Richtung gesehen, deckt die dritte Spule H1-C3 des ersten Hohlzylinderabschnitts H1 und der untere Hälften-Bereich der fünfzehnten Spule H2-C15 des zweiten Hohlzylinderabschnitts H2 den zweiten Nordpol-Permanentmagnet W1-N2 des ersten Wellenabschnitts W1 und der obere Hälften-Bereich der fünfzehnten Spule H2-C15 des zweiten Hohlzylinderabschnitts H2 und die siebenundzwanzigste Spule H3-C27 des dritten Hohlzylinderabschnitts H3 den zehnten Südpol-Permanentmagneten W2-S10 des zweiten Wellenabschnitts W2 ab.

In die z-Richtung gesehen, deckt die erste Hälfte der vierten Spule H1-C4 des ersten Hohlzylinderabschnitts H1 und der untere Hälften-Bereich der ersten Hälfte der sechzehnten Spule H2-C16 des zweiten Hohlzylinderabschnitts H2 den zweiten Nordpol-Permanentmagnet W1-N2 des ersten Wellenabschnitts W1 und der obere Hälften-Bereich der ersten Hälfte der sechzehnten Spule H2-C16 des zweiten Hohlzylinderabschnitts H2 und die erste Hälfte der achtundzwanzigsten Spule H3-C28 des dritten Hohlzylinderabschnitts H3 den zehnten Südpol-Permanentmagneten W2-S10 des zweiten Wellenabschnitts W2 ab.

Im Strom-Zeit-Diagramm, das den Verlauf des ersten Wechselstroms PU, des zweiten Wechselstroms PV und des dritten Wechselstroms PW darstellt, werden die Spulen des Viertelbereichs, die im Dreiphasen-Wechselstrom-Modus betrieben werden, mit den Stromwerten des ersten Wechselstroms PU, des zweiten Wechselstroms PV und des dritten Wechselstroms PW zum Zeitpunkt 0.00 bestromt, wie die gestrichelte Linie anzeigt.

Die perspektivische Darstellung des Viertelbereichs in Figur 5A zeigt die Bestromung am Ausgangspunkt der Dreh-Hub-Bewegung.

Die zweite Hälfte der ersten Spule H1-C1 im ersten Hohlzylinderabschnitt H1 wird mit dem dritten Wechselstrom PW für die Drehbewegung betrieben, wobei der Wechselstrom in den Drahtwicklungen im Uhrzeigersinn umläuft.

Die zweite Spule H1-C2 im erstem Hohlzylinderabschnitt H1 wird sowohl mit dem ersten Wechselstrom PU als auch mit dem zweiten Wechselstrom PV betrieben, wobei die beiden Wechselströme sich in den Drahtwicklungen überlagern und der erste Wechselstrom PU für die Hubbewegung gegen den Uhrzeigersinn und der zweite Wechselstrom PV für die Drehbewegung im Uhrzeigersinn umläuft.

Die dritte Spule H1-C3 im ersten Hohlzylinderabschnitt H1 wird mit dem ersten Wechselstrom PU für die Drehbewegung und die Hubbewegung betrieben werden, wobei der Wechselstrom in den Drahtwicklungen im Uhrzeigersinn umläuft.

Die erste Hälfte der vierten Spule H1-C4 im ersten Hohlzylinderabschnitt H1 wird mit dem dritten Wechselstrom PW für die Drehbewegung betrieben, wobei der Wechselstrom in den Drahtwicklungen im Uhrzeigersinn umläuft.

Die zweite Hälfte der dreizehnten Spule H2-C13 im zweiten Hohlzylinderabschnitt H2 wird nicht bestromt.

Die vierzehnte Spule H1-C14 im zweiten Hohlzylinderabschnitt H2 wird mit dem dritten Wechselstrom PW für die Hubbewegung betrieben, wobei der Wechselstrom in den Drahtwicklungen gegen den Uhrzeigersinn umläuft.

Die fünfzehnte Spule H1-C15 im zweiten Hohlzylinderabschnitt H2 wird mit dem dritten Wechselstrom PW für die Hubbewegung betrieben, wobei der Wechselstrom in den Drahtwicklungen im Uhrzeigersinn umläuft.

Die erste Hälfte der sechzehnten Spule H2-C16 im zweiten Hohlzylinderabschnitt H2 wird nicht bestromt.

Die zweite Hälfte der fünfundzwanzigsten Spule H1-C25 im dritten Hohlzylinderabschnitt H3 wird mit dem dritten Wechselstrom PW für die Drehbewegung betrieben, wobei der Wechselstrom in den Drahtwicklungen gegen den Uhrzeigersinn umläuft.

Die sechsundzwanzigste Spule H1-C26 im dritten Hohlzylinderabschnitt H3 wird mit dem zweiten Wechselstrom PV für die Drehbewegung und die Hubbewegung betrieben, wobei der Wechselstrom in den Drahtwicklungen gegen den Uhrzeigersinn umläuft.

Die siebenundzwanzigste Spule H1-C2 im dritten Hohlzylinderabschnitt H3 wird sowohl mit dem ersten Wechselstrom PU als auch mit dem zweiten Wechselstrom PV betrieben, wobei die beiden Wechselströme sich in den Drahtwicklungen überlagern und der erste Wechselstrom PU für die Drehbewegung gegen den Uhrzeigersinn und der zweite Wechselstrom PV für die Hubbewegung im Uhrzeigersinn umläuft.

Die erste Hälfte der achtundzwanzigsten Spule H3-C28 im dritten Hohlzylinderabschnitt H3 wird mit dem dritten Wechselstrom PW für die Drehbewegung betrieben, wobei der Wechselstrom in den Drahtwicklungen gegen den Uhrzeigersinn umläuft.

Die Bestromung des Viertelbereichs der drei Hohlzylinderabschnitte des Stators wird identisch in den weiteren drei Viertelbereichen der drei Hohlzylinderabschnitte des Stators ausgeführt. Wenn weitere Gruppen aus drei Hohlzylinderabschnitten, wie in Figur 1D gezeigt, vorgesehen sind, wird jede weitere Gruppe aus drei Hohlzylinderabschnitten dann analog zu der Gruppe aus drei Hohlzylinderabschnitten in Figur 5A bestromt.

Die Bestromung der Spulen des Viertelbereichs, wie sie in Fig. 5A gezeigt ist, wird zur gleichzeitigen Drehung des Rotors um 90° und Hub des Rotors über die Länge von zwei Permanentmagneten, im Gegensatz zur reinen Drehung des Rotors um 90°, die in den Figuren 3A bis 3H dargestellt ist, beziehungsweise zum reinen Hub des Rotors über die Länge von zwei Permanentmagneten, die in den Figuren 4A bis 4H dargestellt ist, sowohl was den zugeordneten Wechselstrom und dessen Stromrichtung als auch den Stromwert betrifft, verändert ausgeführt, um das magnetische Wanderfeld für die Drehung beziehungsweise für die Hubbewegung zu erzeugen.

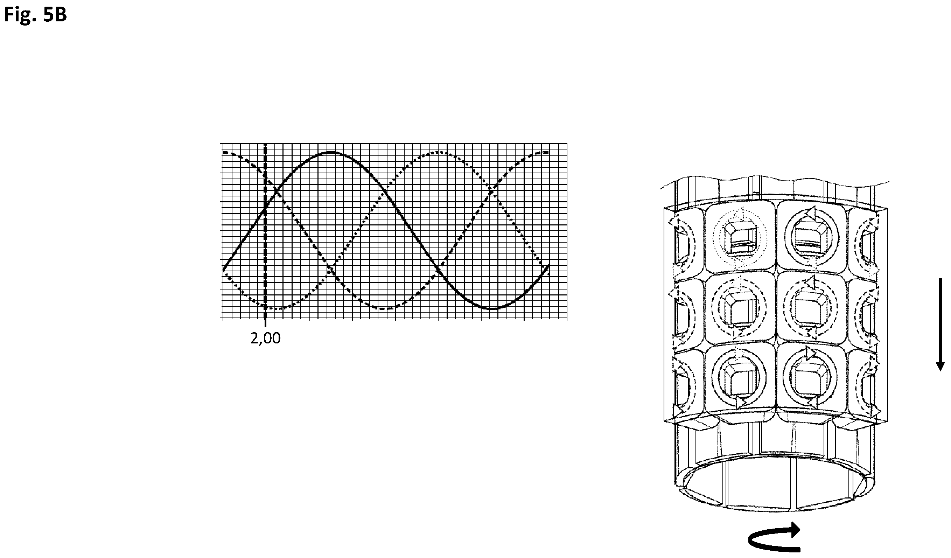

Figur 5B zeigt den Dreh-Hub-Aktuator 100 nach einem ersten Dreh-Hub-Schritt des Rotors um Drehung 12° und um einen Hub, der das 0,27-fache der Polteilung beträgt.

Der erste Wellenabschnitt W1 des Rotors hat sich, wie die perspektivische Darstellung zeigt, gegen die z-Richtung aus dem Ausschnitt des Stators mit den drei Hohlzylinderabschnitten herausgeschoben, während der dritte Wellenabschnitt W3 des Rotors sich in den Ausschnitt des Stators mit den drei Hohlzylinderabschnitten hineingeschoben hat. Ferner haben sich die aus den übereinander liegenden Permanentmagneten des ersten Wellenabschnitts W1, des zweiten Wellenabschnitts W2, des dritten Wellenabschnitts W3 und des vierten Wellenabschnitts W4 gebildeten Permanentmagneten-Reihen gegen die Uhrzeigerrichtung (bezogen auf den eingezeichneten Pfeil) gedreht.

Im Strom-Zeit-Diagramm, das den Verlauf des ersten Wechselstroms PU, des zweiten Wechselstroms PV und des dritten Wechselstroms PW dargestellt, werden die Spulen des Viertelbereichs, die im Dreiphasen-Wechselstrom-Modus betrieben werden, mit den Stromwerten des ersten Wechselstroms PU, des zweiten Wechselstroms PV und des dritten Wechselstroms PW zum Zeitpunkt 2.00 bestromt, wie die gestrichelte Linie anzeigt.

Die perspektivische Darstellung des Viertelbereichs in Figur 5B zeigt jetzt folgende Bestromung.

In der ersten Spule H1-C1 und der vierten Spule H1-C4 fließt immer derselbe Strom. Die zweite Hälfte der ersten Spule H1-C1 im ersten Hohlzylinderabschnitt H1 wird sowohl mit dem ersten Wechselstrom PU als auch dem dritten Wechselstrom PW betrieben, wobei die beiden Wechselströme sich in den Drahtwicklungen überlagern und der erste Wechselstrom PU für die Hubbewegung gegen den Uhrzeigersinn und der dritte Wechselstrom PW für die Drehbewegung im Uhrzeigersinn umläuft.

Die zweite Spule H1-C2 im erstem Hohlzylinderabschnitt H1 wird sowohl mit dem ersten Wechselstrom PU als auch dem zweiten Wechselstrom PV betrieben, wobei die beiden Wechselströme sich in den Drahtwicklungen überlagern und der erste Wechselstrom PU für die Hubbewegung gegen den Uhrzeigersinn und der zweite Wechselstrom PV für die Drehbewegung im Uhrzeigersinn umläuft.

Die dritte Spule H1-C3 im ersten Hohlzylinderabschnitt H1 wird mit dem ersten Wechselstrom PU für die Drehbewegung und die Hubbewegung betrieben werden, wobei der Wechselstrom in den Drahtwicklungen im Uhrzeigersinn umläuft.

Die erste Hälfte der vierten Spule H1-C4 im ersten Hohlzylinderabschnitt H1 wird sowohl mit dem ersten Wechselstrom PU als auch dem dritten Wechselstrom PW betrieben, wobei die beiden Wechselströme sich in den Drahtwicklungen überlagern und der erste Wechselstrom PU für die Hubbewegung gegen den Uhrzeigersinn und der dritte Wechselstrom PW für die Drehbewegung im Uhrzeigersinn umläuft.

Die zweite Hälfte der dreizehnten Spule H2-C13 im zweiten Hohlzylinderabschnitt H2 wird mit dem dritten Wechselstrom PW betrieben, wobei der Wechselstrom für die Drehbewegung und die Hubbewegung in den Drahtwicklungen gegen den Uhrzeigersinn umläuft.

Die vierzehnte Spule H2-C14 im zweiten Hohlzylinderabschnitt H2 wird sowohl mit dem zweiten Wechselstrom PV als auch mit dem dritten Wechselstrom PW betrieben, wobei die beiden Wechselströme sich in den Drahtwicklungen überlagern und der zweite Wechselstrom PV für die Drehbewegung und der dritte Wechselstrom PW für die Hubbewegung gegen den Uhrzeigersinn umläuft.

Die fünfzehnte Spule H2-C15 im zweiten Hohlzylinderabschnitt H2 wird sowohl mit dem ersten Wechselstrom PU als auch dem dritten Wechselstrom PW betrieben, wobei die beiden Wechselströme sich in den Drahtwicklungen überlagern und der erste Wechselstrom PU für die Drehbewegung gegen den Uhrzeigersinn und der dritte Wechselstrom PW für die Hubbewegung im Uhrzeigersinn umläuft.

Die erste Hälfte der sechzehnten Spule H2-C16 im zweiten Hohlzylinderabschnitt H2 wird mit dem dritten Wechselstrom PW für die Drehbewegung und die Hubbewegung betrieben, wobei der Wechselstrom in den Drahtwicklungen gegen den Uhrzeigersinn umläuft.

Die zweite Hälfte der fünfundzwanzigsten Spule H3-C25 im dritten Hohlzylinderabschnitt H3 wird sowohl mit dem dritten Wechselstrom PW als auch mit dem zweiten Wechselstrom PV betrieben, wobei die beiden Wechselströme sich in den Drahtwicklungen überlagern und der dritte Wechselstrom PW für die Drehbewegung und der zweite Wechselstrom PV für die Hubbewegung gegen den Uhrzeigersinn umläuft.

Die sechsundzwanzigste Spule H3-C26 im dritten Hohlzylinderabschnitt H3 wird mit dem zweiten Wechselstrom PV für die Drehbewegung und die Hubbewegung betrieben, wobei der Wechselstrom in den Drahtwicklungen gegen den Uhrzeigersinn umläuft.

Die siebenundzwanzigste Spule H3-C27 im dritten Hohlzylinderabschnitt H3 wird sowohl mit dem ersten Wechselstrom PU als auch mit dem zweiten Wechselstrom PV betrieben, wobei die beiden Wechselströme sich in den Drahtwicklungen überlagern und der erste Wechselstrom PU für die Drehbewegung gegen den Uhrzeigersinn und der zweite Wechselstrom PV für die Hubbewegung im Uhrzeigersinn umläuft.

Die erste Hälfte der achtundzwanzigsten Spule H3-C28 im dritten Hohlzylinderabschnitt H3 wird sowohl mit dem dritten Wechselstrom PW als auch mit dem zweiten Wechselstrom PV betrieben, wobei die beiden Wechselströme sich in den Drahtwicklungen überlagern und der dritte Wechselstrom PW für die Drehbewegung und der zweite Wechselstrom PV für die Hubbewegung gegen den Uhrzeigersinn umläuft.

Die Bestromung des Viertelbereichs der drei Hohlzylinderabschnitte des Stators wird identisch in den weiteren drei Viertelbereichen der drei Hohlzylinderabschnitte des Stators ausgeführt. Wenn weitere Gruppen aus drei Hohlzylinderabschnitten, wie in Figur 1D gezeigt, vorgesehen sind, wird jede weitere Gruppe aus drei Hohlzylinderabschnitte dann analog zu der Gruppe aus drei Hohlzylinderabschnitten in Figur 5B bestromt.

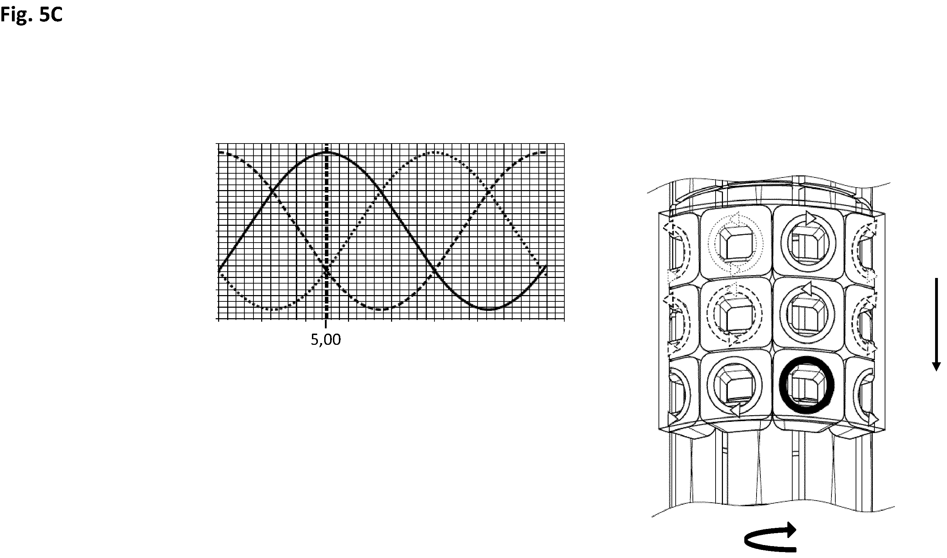

Figur 5C zeigt den Dreh-Hub-Aktuator 100 nach einem zweiten Dreh-Hub-Schritt des Rotors mit einer Drehung um 18° auf 30° und um einen Hub mit dem 0,4-fachen der Polteilung auf einen Gesamthub mit dem 0,67-fachen der Polteilung.

Der erste Wellenabschnitt W1 des Rotors hat sich, wie die perspektivische Darstellung zeigt, gegen die z-Richtung weiter aus dem Ausschnitt des Stators mit den drei Hohlzylinderabschnitten herausgeschoben, während der dritte Wellenabschnitt W3 des Rotors sich in den Ausschnitt des Stators mit den drei Hohlzylinderabschnitten hineingeschoben hat. Ferner haben sich die aus den übereinander liegenden Permanentmagneten des ersten Wellenabschnitts W1, des zweiten Wellenabschnitts W2, des dritten Wellenabschnitts W3 und des vierten Wellenabschnitts W4 gebildeten Permanentmagneten-Reihen gegen den Uhrzeigersinn weitergedreht.

Im Strom-Zeit-Diagramm, das den Verlauf des ersten Wechselstroms PU, des zweiten Wechselstroms PV und des dritten Wechselstroms PW darstellt, werden die Spulen des Viertelbereichs, die im Dreiphasen-Wechselstrom-Modus betrieben werden, mit den Stromwerten des ersten Wechselstroms PU, des zweiten Wechselstroms PV und des dritten Wechselstroms PW zum Zeitpunkt 5.00 bestromt, wie die gestrichelte Linie anzeigt.

Die perspektivische Darstellung des Viertelbereichs in Figur 5C zeigt jetzt folgende Bestromung.

Die zweite Hälfte der ersten Spule H1-C1 im ersten Hohlzylinderabschnitt H1 wird mit dem ersten Wechselstrom PU für die Hubbewegung betrieben, wobei der Wechselstrom in den Drahtwicklungen gegen den Uhrzeigersinn umläuft.

Die zweite Spule H1-C2 im erstem Hohlzylinderabschnitt H1 wird mit dem ersten Wechselstrom PU für die Hubbewegung betrieben, wobei der Wechselstrom in den Drahtwicklungen im Uhrzeigersinn umläuft.

Die dritte Spule H1-C3 im ersten Hohlzylinderabschnitt H1 wird nicht bestromt.

Die erste Hälfte der vierten Spule H1-C4 im ersten Hohlzylinderabschnitt H1 wird mit dem ersten Wechselstrom PU für die Hubbewegung betrieben, wobei der Wechselstrom in den Drahtwicklungen gegen den Uhrzeigersinn umläuft.

Die zweite Hälfte der dreizehnten Spule H2-C13 im zweiten Hohlzylinderabschnitt H2 wird mit dem dritten Wechselstrom PW für die Drehbewegung und die Hubbewegung betrieben, wobei der Wechselstrom in den Drahtwicklungen gegen den Uhrzeigersinn umläuft.

Die vierzehnte Spule H2-C14 im zweiten Hohlzylinderabschnitt H2 wird sowohl mit dem dritten Wechselstrom PW als auch mit dem zweiten Wechselstrom PV betrieben, wobei die beiden Wechselströme sich in den Drahtwicklungen überlagern und der dritte Wechselstrom PW für die Drehbewegung und der zweite Wechselstrom PV für die Hubbewegung gegen den Uhrzeigersinn umläuft.

Die fünfzehnte Spule H2-C15 im zweiten Hohlzylinderabschnitt H2 wird mit dem ersten Wechselstrom PU für die Drehbewegung betrieben, wobei der Wechselstrom in den Drahtwicklungen gegen den Uhrzeigersinn umläuft.

Die erste Hälfte der sechzehnten Spule H2-C16 im zweiten Hohlzylinderabschnitt H2 wird mit dem dritten Wechselstrom PW für die Drehbewegung und die Hubbewegung betrieben, wobei der Wechselstrom in den Drahtwicklungen gegen den Uhrzeigersinn umläuft.

Die zweite Hälfte der fünfundzwanzigsten Spule H3-C25 im dritten Hohlzylinderabschnitt H3 wird sowohl mit dem dritten Wechselstrom PW als auch mit dem zweiten Wechselstrom PV betrieben, wobei die beiden Wechselströme sich in den Drahtwicklungen überlagern und der dritte Wechselstrom PW für die Drehbewegung und der zweite Wechselstrom PV für die Hubbewegung gegen den Uhrzeigersinn umläuft.

Die sechsundzwanzigste Spule H3-C26 im dritten Hohlzylinderabschnitt H3 wird mit dem zweiten Wechselstrom PV für die Drehbewegung und die Hubbewegung betrieben, wobei der Wechselstrom in den Drahtwicklungen gegen den Uhrzeigersinn umläuft.

Die siebenundzwanzigste Spule H3-C27 im dritten Hohlzylinderabschnitt H3 wird mit dem ersten Wechselstrom PU für die Drehbewegung betrieben, wobei der Wechselstrom in den Drahtwicklungen im Uhrzeigersinn umläuft.

Die erste Hälfte der achtundzwanzigsten Spule H3-C28 im dritten Hohlzylinderabschnitt H3 wird sowohl mit dem dritten Wechselstrom PW als auch mit dem zweiten Wechselstrom PV betrieben, wobei die beiden Wechselströme sich in den Drahtwicklungen überlagern und der dritte Wechselstrom PW für die Drehbewegung und der zweite Wechselstrom PV für die Hubbewegung gegen den Uhrzeigersinn umläuft.

Die Bestromung des Viertelbereichs der drei Hohlzylinderabschnitte des Stators wird identisch in den weiteren drei Viertelbereichen der drei Hohlzylinderabschnitte des Stators ausgeführt. Wenn weitere Gruppen aus drei Hohlzylinderabschnitten, wie in Figur 1D gezeigt, vorgesehen sind, wird jede weitere Gruppe aus drei Hohlzylinderabschnitten dann analog zu der Gruppe aus drei Hohlzylinderabschnitten in Figur 5C bestromt.

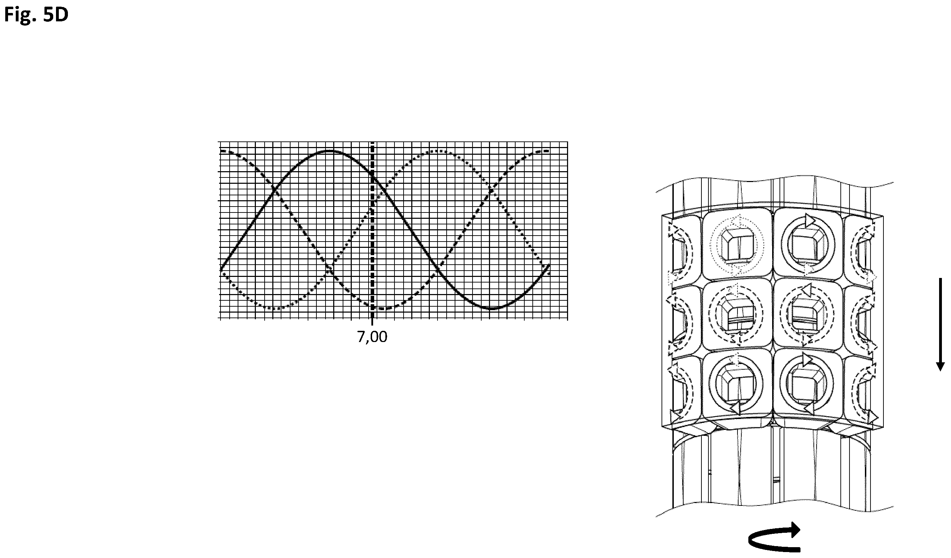

Figur 5D zeigt den Dreh-Hub-Aktuator 100 nach einem dritten Dreh-Hub-Schritt des Rotors um Drehung 12° auf 42° und um einen Hub, welcher das 0,27-fache der Polteilung aufweist, auf einen Gesamthub mit einem 0,94fachen der Polteilung.

Der erste Wellenabschnitt W1 des Rotors hat sich, wie die perspektivische Darstellung zeigt, fast ganz gegen die z-Richtung aus dem Ausschnitt des Stators mit den drei Hohlzylinderabschnitten herausgeschoben, während der dritte Wellenabschnitt W3 des Rotors sich fast ganz in den Ausschnitt des Stators mit den drei Hohlzylinderabschnitten hineingeschoben haben. Ferner haben sich die aus den übereinander liegenden Permanentmagneten des ersten Wellenabschnitts W1, des zweiten Wellenabschnitts W2, des dritten Wellenabschnitts W3 und des vierten Wellenabschnitts W4 gebildeten Permanentmagneten-Reihen gegen den Uhrzeigersinn weitergedreht.

Im Strom-Zeit-Diagramm, das den Verlauf des ersten Wechselstroms PU, des zweiten Wechselstroms PV und des dritten Wechselstroms PW dargestellt, werden die Spulen des Viertelbereichs, die im Dreiphasen-Wechselstrom-Modus betrieben werden, mit den Stromwerten des ersten Wechselstroms PU, des zweiten Wechselstroms PV und des dritten Wechselstroms PW zum Zeitpunkt 7.00 bestromt, wie die gestrichelte Linie anzeigt.

Die perspektivische Darstellung des Viertelbereichs in Figur 5D zeigt jetzt folgende Bestromung.

Die zweite Hälfte der ersten Spule H1-C1 im ersten Hohlzylinderabschnitt H1 sowohl mit dem ersten Wechselstrom PU als auch dem dritten Wechselstrom PW betrieben, wobei die beiden Wechselströme sich in den Drahtwicklungen überlagern und der erste Wechselstrom PU für die Hubbewegung gegen den Uhrzeigersinn und der dritte Wechselstrom PW für die Drehbewegung gegen den Uhrzeigersinn umläuft.

Die zweite Spule H1-C2 im erstem Hohlzylinderabschnitt H1 sowohl mit dem ersten Wechselstrom PU als auch dem zweiten Wechselstrom PV betrieben, wobei die beiden Wechselströme sich in den Drahtwicklungen überlagern und der erste Wechselstrom PU für die Hubbewegung im Uhrzeigersinn und der zweite Wechselstrom PV für die Drehbewegung gegen den Uhrzeigersinn umläuft.

Die dritte Spule H1-C3 im ersten Hohlzylinderabschnitt H1 wird mit dem ersten Wechselstrom PU für die Drehbewegung und die Hubbewegung betrieben, wobei der Wechselstrom in den Drahtwicklungen im Uhrzeigersinn umläuft.

Die erste Hälfte der vierten Spule H1-C4 wird im ersten Hohlzylinderabschnitt H1 sowohl mit dem ersten Wechselstrom PU als auch dem dritten Wechselstrom PW betrieben, wobei die beiden Wechselströme sich in den Drahtwicklungen überlagern und der erste Wechselstrom PU für die Hubbewegung gegen den Uhrzeigersinn und der dritte Wechselstrom PW für die Drehbewegung gegen den Uhrzeigersinn umläuft.

Die zweite Hälfte der dreizehnten Spule H2-C13 im zweiten Hohlzylinderabschnitt H2 wird mit dem dritten Wechselstrom PW für die Drehbewegung und die Hubbewegung betrieben, wobei der Wechselstrom in den Drahtwicklungen gegen den Uhrzeigersinn umläuft.

Die vierzehnte Spule H2-C14 im zweiten Hohlzylinderabschnitt H2 wird sowohl mit dem dritten Wechselstrom PW als auch mit dem zweiten Wechselstrom PV betrieben, wobei die beiden Wechselströme sich in den Drahtwicklungen überlagern und der dritte Wechselstrom PW für die Drehbewegung und der zweite Wechselstrom PV für die Hubbewegung im Uhrzeigersinn umläuft.

Die fünfzehnte Spule H2-C15 im zweiten Hohlzylinderabschnitt H2 wird sowohl mit dem ersten Wechselstrom PU als auch dem dritten Wechselstrom PW betrieben, wobei sich die beiden Wechselströme in den Drahtwicklungen überlagern und der erste Wechselstrom PU für die Drehbewegung gegen den Uhrzeigersinn und der dritte Wechselstrom PW für die Hubbewegung gegen den Uhrzeigersinn umläuft.

Die erste Hälfte der sechzehnten Spule H2-C16 im zweiten Hohlzylinderabschnitt H2 wird mit dem dritten Wechselstrom PW für die Drehbewegung und die Hubbewegung betrieben, wobei der Wechselstrom in den Drahtwicklungen gegen den Uhrzeigersinn umläuft.

Die zweite Hälfte der fünfundzwanzigsten Spule H3-C25 im dritten Hohlzylinderabschnitt H3 wird sowohl mit dem dritten Wechselstrom PW als auch mit dem zweiten Wechselstrom PV betrieben, wobei die beiden Wechselströme sich in den Drahtwicklungen überlagern und der dritte Wechselstrom PW für die Drehbewegung und der zweite Wechselstrom PV für die Hubbewegung gegen den Uhrzeigersinn umläuft.

Die sechsundzwanzigste Spule H3-C26 im dritten Hohlzylinderabschnitt H3 wird mit dem zweiten Wechselstrom PV für die Drehbewegung und die Hubbewegung betrieben, wobei der Wechselstrom in den Drahtwicklungen gegen den Uhrzeigersinn umläuft.

Die siebenundzwanzigste Spule H3-C27 wird im dritten Hohlzylinderabschnitt H3 sowohl mit dem ersten Wechselstrom PU als auch dem zweiten Wechselstrom PV betrieben, wobei die beiden Wechselströme sich in den Drahtwicklungen überlagern und der erste Wechselstrom PU für die Drehbewegung im Uhrzeigersinn und der zweite Wechselstrom PV für die Hubbewegung gegen den Uhrzeigersinn umläuft.

Die erste Hälfte der achtundzwanzigsten Spule H3-C28 im dritten Hohlzylinderabschnitt H3 wird sowohl mit dem dritten Wechselstrom PW als auch mit dem zweiten Wechselstrom PV betrieben, wobei die beiden Wechselströme sich in den Drahtwicklungen überlagern und der dritte Wechselstrom PW für die Drehbewegung und der zweite Wechselstrom PV für die Hubbewegung gegen den Uhrzeigersinn umläuft.

Die Bestromung des Viertelbereichs der drei Hohlzylinderabschnitte des Stators wird identisch in den weiteren drei Viertelbereichen der drei Hohlzylinderabschnitte des Stators ausgeführt. Wenn weitere Gruppen aus drei Hohlzylinderabschnitten, wie in Figur 1D gezeigt, vorgesehen sind, wird jede weitere Gruppe aus drei Hohlzylinderabschnitten dann analog zu der Gruppe aus drei Hohlzylinderabschnitten in Figur 5D bestromt.

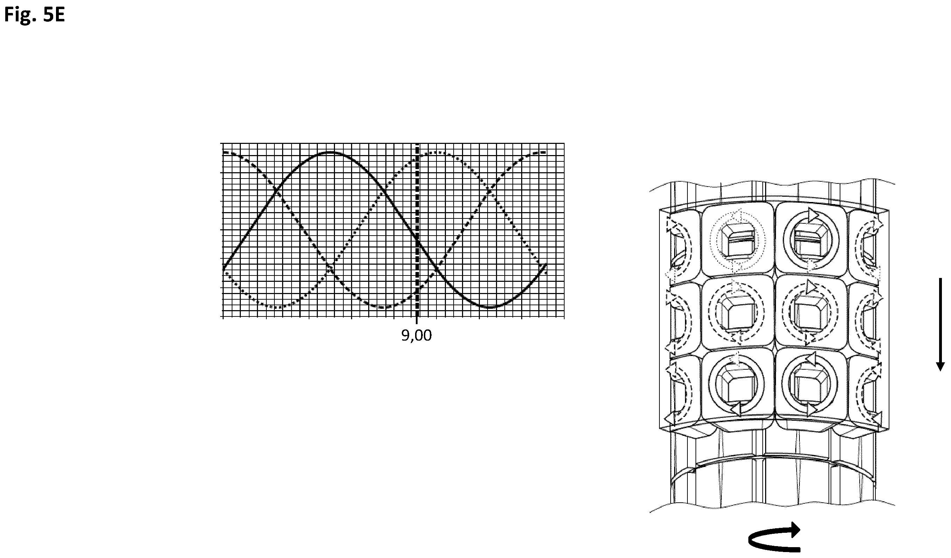

Figur 5E zeigt den Dreh-Hub-Aktuator 100 nach einem vierten Dreh-Hub-Schritt des Rotors um Drehung 12° auf 54° und um einen Hub, der das 0,27-fache der Polteilung beträgt, auf einen Gesamthub mit dem 1,2-fachen der Polteilung.

Der erste Wellenabschnitt W1 und ein Abschnitt des zweiten Wellenabschnitts W2 des Rotors haben sich, wie die perspektivische Darstellung zeigt, gegen die z-Richtung aus dem Ausschnitt des Stators mit den drei Hohlzylinderabschnitten herausgeschoben, während der dritte Wellenabschnitt W3 und ein Abschnitt des vierten Wellenabschnitts W4 des Rotors sich in den Ausschnitt des Stators mit den drei Hohlzylinderabschnitten hineingeschoben haben. Ferner haben sich die aus den übereinander liegenden Permanentmagneten des ersten Wellenabschnitts W1, des zweiten Wellenabschnitts W2, des dritten Wellenabschnitts W3 und des vierten Wellenabschnitts W4 gebildeten Permanentmagneten-Reihen gegen den Uhrzeigersinn weitergedreht.

Im Strom-Zeit-Diagramm, das den Verlauf des ersten Wechselstroms PU, des zweiten Wechselstroms PV und des dritten Wechselstroms PW darstellt, werden die Spulen des Viertelbereichs, die im Dreiphasen-Wechselstrom-Modus betrieben werden, mit den Stromwerten des ersten Wechselstroms PU, des zweiten Wechselstroms PV und des dritten Wechselstroms PW zum Zeitpunkt 9.00 bestromt, wie die gestrichelte Linie anzeigt.

Die perspektivische Darstellung des Viertelbereichs in Figur 5E zeigt jetzt folgende Bestromung.

Die zweite Hälfte der ersten Spule H1-C1 wird im ersten Hohlzylinderabschnitt H1 sowohl mit dem ersten Wechselstrom PU als auch dem dritten Wechselstrom PW betrieben, wobei die beiden Wechselströme sich in den Drahtwicklungen überlagern und der erste Wechselstrom PU für die Hubbewegung im Uhrzeigersinn und der dritte Wechselstrom PW für die Drehbewegung gegen den Uhrzeigersinn umläuft.

Die zweite Spule H1-C2 wird im erstem Hohlzylinderabschnitt H1 sowohl mit dem ersten Wechselstrom PU als auch dem zweiten Wechselstrom PV betrieben, wobei die beiden Wechselströme sich in den Drahtwicklungen überlagern und der erste Wechselstrom PU für die Hubbewegung im Uhrzeigersinn und der zweite Wechselstrom PV für die Drehbewegung gegen den Uhrzeigersinn umläuft.

Die dritte Spule H1-C3 im ersten Hohlzylinderabschnitt H1 wird mit dem ersten Wechselstrom PU für die Drehbewegung und die Hubbewegung betrieben, wobei der Wechselstrom in den Drahtwicklungen gegen den Uhrzeigersinn umläuft.

Die erste Hälfte der vierten Spule H1-C4 wird im ersten Hohlzylinderabschnitt H1 sowohl mit dem ersten Wechselstrom PU als auch dem dritten Wechselstrom PW betrieben, wobei die beiden Wechselströme sich in den Drahtwicklungen überlagern und der erste Wechselstrom PU für die Hubbewegung im Uhrzeigersinn und der dritte Wechselstrom PW für die Drehbewegung gegen den Uhrzeigersinn umläuft.

Die zweite Hälfte der dreizehnten Spule H2-C13 wird im zweiten Hohlzylinderabschnitt H2 wird mit dem dritten Wechselstrom PW für die Drehbewegung und die Hubbewegung betrieben, wobei der Wechselstrom in den Drahtwicklungen im Uhrzeigersinn umläuft.

Die vierzehnte Spule H2-C14 im zweiten Hohlzylinderabschnitt H2 wird sowohl mit dem zweiten Wechselstrom PV als auch mit dem dritten Wechselstrom PW betrieben, wobei die beiden Wechselströme sich in den Drahtwicklungen überlagern und der zweite Wechselstrom PV für die Drehbewegung und der dritte Wechselstrom PW für die Hubbewegung im Uhrzeigersinn umläuft.

Die fünfzehnte Spule H2-C15 wird im zweiten Hohlzylinderabschnitt H2 sowohl mit dem ersten Wechselstrom PU als auch dem dritten Wechselstrom PW betrieben, wobei die beiden Wechselströme sich in den Drahtwicklungen überlagern und der erste Wechselstrom PU für die Drehbewegung im Uhrzeigersinn und der dritte Wechselstrom PW für die Hubbewegung gegen den Uhrzeigersinn umläuft.

Die erste Hälfte der sechzehnte Spule H2-C16 wird im zweiten Hohlzylinderabschnitt H2 wird mit dem dritten Wechselstrom PW für die Drehbewegung und die Hubbewegung betrieben, wobei der Wechselstrom in den Drahtwicklungen im Uhrzeigersinn umläuft.

Die zweite Hälfte der fünfundzwanzigsten Spule H3-C25 wird im dritten Hohlzylinderabschnitt H3 wird sowohl mit dem zweiten Wechselstrom PV als auch mit dem dritten Wechselstrom PW betrieben, wobei die beiden Wechselströme sich in den Drahtwicklungen überlagern und der zweite Wechselstrom PV für die Drehbewegung und der dritte Wechselstrom PW für die Hubbewegung im Uhrzeigersinn umläuft.

Die sechsundzwanzigste Spule H3-C26 wird im dritten Hohlzylinderabschnitt H3 wird mit dem zweiten Wechselstrom PV für die Drehbewegung und die Hubbewegung betrieben, wobei der Wechselstrom in den Drahtwicklungen gegen den Uhrzeigersinn umläuft.

Die siebenundzwanzigste Spule H3-C27 wird im dritten Hohlzylinderabschnitt H3 sowohl mit dem ersten Wechselstrom PU als auch dem zweiten Wechselstrom PV betrieben, wobei die beiden Wechselströme sich in den Drahtwicklungen überlagern und der erste Wechselstrom PU für die Drehbewegung im Uhrzeigersinn und der zweite Wechselstrom PV für die Hubbewegung gegen den Uhrzeigersinn umläuft.

Die erste Hälfte der achtundzwanzigsten Spule H3-C28 im dritten Hohlzylinderabschnitt H3 wird sowohl mit dem zweiten Wechselstrom PV als auch mit dem dritten Wechselstrom PW betrieben, wobei die beiden Wechselströme sich in den Drahtwicklungen überlagern und der zweite Wechselstrom PV für die Drehbewegung und der dritte Wechselstrom PW für die Hubbewegung im Uhrzeigersinn umläuft.

Die Bestromung des Viertelbereichs der drei Hohlzylinderabschnitte des Stators wird identisch in den weiteren drei Viertelbereichen der drei Hohlzylinderabschnitte des Stators ausgeführt. Wenn weitere Gruppen aus drei Hohlzylinderabschnitten, wie in Figur 1D gezeigt, vorgesehen sind, wird jede weitere Gruppe aus drei Hohlzylinderabschnitten dann analog zu der Gruppe aus drei Hohlzylinderabschnitten in Figur 5E bestromt.

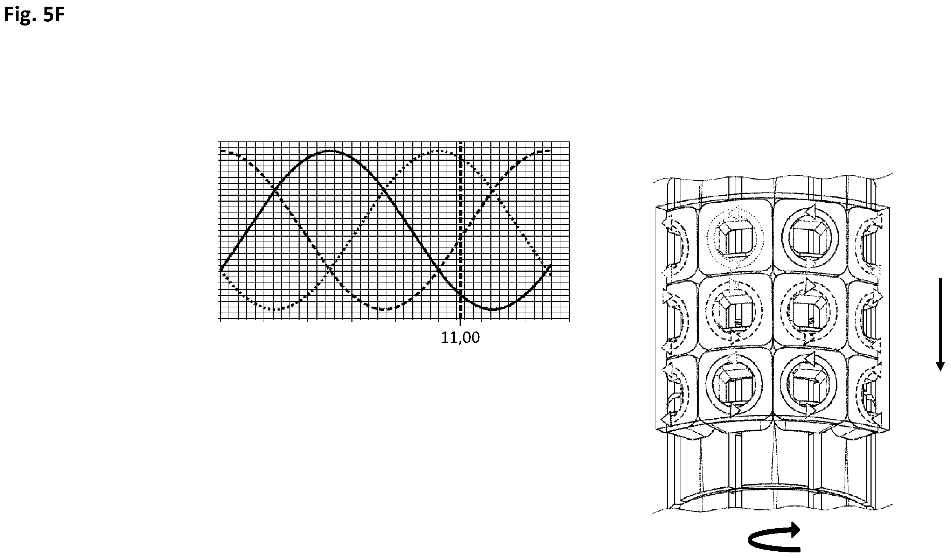

Figur 5F zeigt den Dreh-Hub-Aktuator 100 nach einem fünften Dreh-Hub-Schritt des Rotors um Drehung 12° auf 66° und um einen Hub, der das 0,27-fache der Polteilung aufweist, auf einen Gesamthub mit dem 1,47-fachen der Polteilung.

Ein weiterer Abschnitt des zweiten Wellenabschnitts W2 des Rotors hat sich, wie die perspektivische Darstellung zeigt, gegen die z-Richtung aus dem Ausschnitt des Stators mit den drei Hohlzylinderabschnitten herausgeschoben, während ein weiterer Abschnitt des vierten Wellenabschnitts W4 des Rotors sich in den Ausschnitt des Stators mit den drei Hohlzylinderabschnitten hineingeschoben hat. Ferner haben sich die aus den übereinander liegenden Permanentmagneten des ersten Wellenabschnitts W1, des zweiten Wellenabschnitts W2, des dritten Wellenabschnitts W3 und des vierten Wellenabschnitts W4 gebildeten Permanentmagneten-Reihen gegen den Uhrzeigersinn weitergedreht.

Im Strom-Zeit-Diagramm, das den Verlauf des ersten Wechselstroms PU, des zweiten Wechselstroms PV und des dritten Wechselstroms PW darstellt, werden die Spulen des Viertelbereichs, die im Dreiphasen-Wechselstrom-Modus betrieben werden, mit den Stromwerten des ersten Wechselstroms PU, des zweiten Wechselstroms PV und des dritten Wechselstroms PW zum Zeitpunkt 11.00 bestromt, wie die gestrichelte Linie anzeigt.

Die perspektivische Darstellung des Viertelbereichs in Figur 5F zeigt jetzt folgende Bestromung.

Die zweite Hälfte der ersten Spule H1-C1 wird im ersten Hohlzylinderabschnitt H1 sowohl mit dem ersten Wechselstrom PU als auch dem dritten Wechselstrom PW betrieben, wobei die beiden Wechselströme sich in den Drahtwicklungen überlagern und der erste Wechselstrom PU für die Hubbewegung im Uhrzeigersinn und der dritte Wechselstrom PW für die Drehbewegung gegen den Uhrzeigersinn umläuft.

Die zweite Spule H1-C2 wird im erstem Hohlzylinderabschnitt H1 sowohl mit dem ersten Wechselstrom PU als auch dem zweiten Wechselstrom PV betrieben, wobei die beiden Wechselströme sich in den Drahtwicklungen überlagern und der erste Wechselstrom PU für die Hubbewegung gegen den Uhrzeigersinn und der zweite Wechselstrom PV für die Drehbewegung gegen den Uhrzeigersinn umläuft.

Die dritte Spule H1-C3 im ersten Hohlzylinderabschnitt H1 wird mit dem ersten Wechselstrom PU für die Drehbewegung und die Hubbewegung betrieben, wobei der Wechselstrom in den Drahtwicklungen gegen den Uhrzeigersinn umläuft.

Die erste Hälfte der vierten Spule H1-C4 im ersten Hohlzylinderabschnitt H1 wird sowohl mit dem ersten Wechselstrom PU als auch dem dritten Wechselstrom PW betrieben, wobei die beiden Wechselströme sich in den Drahtwicklungen überlagern und der erste Wechselstrom PU für die Hubbewegung im Uhrzeigersinn und der dritte Wechselstrom PW für die Drehbewegung gegen den Uhrzeigersinn umläuft.

Die zweite Hälfte der dreizehnten Spule H2-C13 im zweiten Hohlzylinderabschnitt H2 wird mit dem dritten Wechselstrom PW für die Drehbewegung und die Hubbewegung betrieben, wobei der Wechselstrom in den Drahtwicklungen im Uhrzeigersinn umläuft.

Die vierzehnte Spule H2-C14 im zweiten Hohlzylinderabschnitt H2 wird sowohl mit dem zweiten Wechselstrom PV als auch mit dem dritten Wechselstrom PW betrieben, wobei die beiden Wechselströme sich in den Drahtwicklungen überlagern und der zweite Wechselstrom PV für die Drehbewegung und der dritte Wechselstrom PW für die Hubbewegung gegen den Uhrzeigersinn umläuft.

Die fünfzehnte Spule H2-C15 im zweiten Hohlzylinderabschnitt H2 wird sowohl mit dem ersten Wechselstrom PU als auch dem dritten Wechselstrom PW betrieben, wobei die beiden Wechselströme sich in den Drahtwicklungen überlagern und der erste Wechselstrom PU für die Drehbewegung im Uhrzeigersinn und der dritte Wechselstrom PW für die Hubbewegung gegen den Uhrzeigersinn umläuft.

Die erste Hälfte der sechzehnte Spule H2-C16 im zweiten Hohlzylinderabschnitt H2 wird mit dem dritten Wechselstrom PW für die Drehbewegung und die Hubbewegung betrieben, wobei der Wechselstrom in den Drahtwicklungen im Uhrzeigersinn umläuft.

Die zweite Hälfte der fünfundzwanzigsten Spule H2-C25 im dritten Hohlzylinderabschnitt H3 wird sowohl mit dem zweiten Wechselstrom PV als auch mit dem dritten Wechselstrom PW betrieben, wobei die beiden Wechselströme sich in den Drahtwicklungen überlagern und der zweite Wechselstrom PV für die Hubbewegung im Uhrzeigersinn und der dritte Wechselstrom PW für die Drehbewegung gegen den Uhrzeigersinn umläuft.

Die sechsundzwanzigsten Spule H3-C26 im dritten Hohlzylinderabschnitt H3 wird mit dem zweiten Wechselstrom PV für die Drehbewegung und die Hubbewegung betrieben, wobei der Wechselstrom in den Drahtwicklungen gegen den Uhrzeigersinn umläuft.

Die siebenundzwanzigste Spule H3-C27 im dritten Hohlzylinderabschnitt H3 wird sowohl mit dem ersten Wechselstrom PU als auch mit dem zweiten Wechselstrom PV betrieben, wobei die beiden Wechselströme sich in den Drahtwicklungen überlagern und der erste Wechselstrom PU für die Drehbewegung gegen den Uhrzeigersinn und der zweite Wechselstrom PV für die Hubbewegung gegen den Uhrzeigersinn umläuft.

Die erste Hälfte der achtundzwanzigsten Spule H3-C28 im dritten Hohlzylinderabschnitt H3 wird sowohl mit dem zweiten Wechselstrom PV als auch mit dem dritten Wechselstrom PW betrieben, wobei die beiden Wechselströme sich in den Drahtwicklungen überlagern und der zweite Wechselstrom PV für die Hubbewegung im Uhrzeigersinn und der dritte Wechselstrom PW für die Drehbewegung gegen den Uhrzeigersinn umläuft.

Die Bestromung des Viertelbereichs der drei Hohlzylinderabschnitte des Stators wird identisch in den weiteren drei Viertelbereichen der drei Hohlzylinderabschnitte des Stators ausgeführt. Wenn weitere Gruppen aus drei Hohlzylinderabschnitten, wie in Figur 1D gezeigt, vorgesehen sind, wird jede weitere Gruppe aus drei Hohlzylinderabschnitte dann analog zu der Gruppe aus drei Hohlzylinderabschnitten in Figur 5F bestromt.

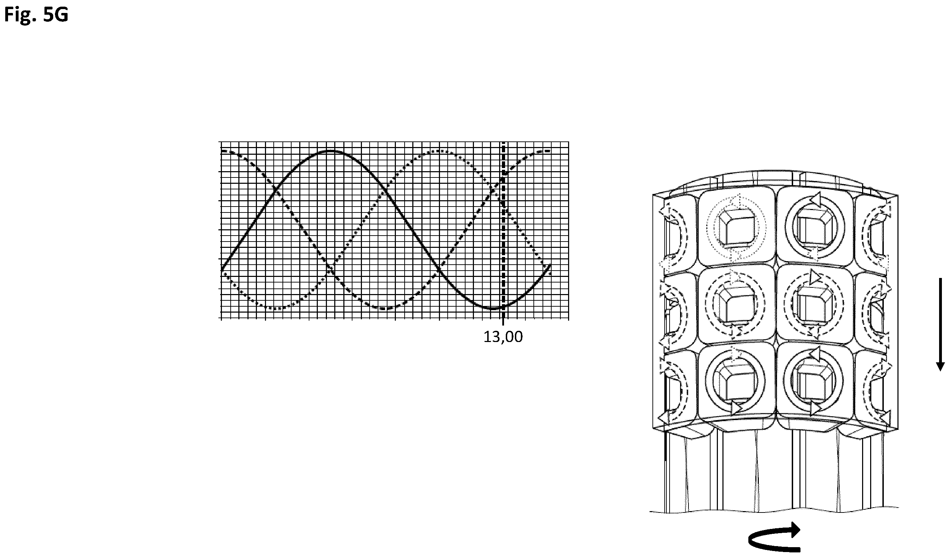

Figur 5G zeigt den Dreh-Hub-Aktuator 100 nach einem sechsten Dreh-Hub-Schritt des Rotors um Drehung 12° auf 78° und um einen Hub, der das 0,27-fache der Polteilung aufweist, auf einen Gesamthub, der das 1,73-fache der Polteilung umfasst.

Ein weiterer Abschnitt des zweiten Wellenabschnitts W2 des Rotors hat sich, wie die perspektivische Darstellung zeigt, gegen die z-Richtung aus dem Ausschnitt des Stators mit den drei Hohlzylinderabschnitten herausgeschoben, während ein weiterer Abschnitt des vierten Wellenabschnitts W4 des Rotors sich in den Ausschnitt des Stators mit den drei Hohlzylinderabschnitten hineingeschoben hat. Ferner haben sich die aus den übereinander liegenden Permanentmagneten des ersten Wellenabschnitts W1, des zweiten Wellenabschnitts W2, des dritten Wellenabschnitts W3 und des vierten Wellenabschnitts W4 gebildeten Permanentmagneten-Reihen gegen den Uhrzeigersinn weitergedreht.

Im Strom-Zeit-Diagramm, das den Verlauf des ersten Wechselstroms PU, des zweiten Wechselstroms PV und des dritten Wechselstroms PW dargestellt, werden die Spulen des Viertelbereichs, die im Dreiphasen-Wechselstrom-Modus betrieben werden, mit den Stromwerten des ersten Wechselstroms PU, des zweiten Wechselstroms PV und des dritten Wechselstroms PW zum Zeitpunkt 13.00 bestromt, wie die gestrichelte Linie anzeigt.

Die perspektivische Darstellung des Viertelbereichs in Figur 5G zeigt jetzt folgende Bestromung.

Die zweite Hälfte der ersten Spule H1-C1 im ersten Hohlzylinderabschnitt H1 wird sowohl mit dem ersten Wechselstrom PU als auch dem dritten Wechselstrom PW betrieben, wobei die beiden Wechselströme sich in den Drahtwicklungen überlagern und der erste Wechselstrom PU für die Hubbewegung im Uhrzeigersinn und der dritte Wechselstrom PW für die Drehbewegung im Uhrzeigersinn umläuft.

Die zweite Spule H1-C2 im erstem Hohlzylinderabschnitt H1 wird sowohl mit dem ersten Wechselstrom PU als auch dem zweiten Wechselstrom PV betrieben, wobei die beiden Wechselströme sich in den Drahtwicklungen überlagern und der erste Wechselstrom PU für die Hubbewegung gegen den Uhrzeigersinn und der zweite Wechselstrom PV für die Drehbewegung im Uhrzeigersinn umläuft.

Die dritte Spule H1-C3 im ersten Hohlzylinderabschnitt H1 wird mit dem ersten Wechselstrom PU für die Drehbewegung und die Hubbewegung betrieben, wobei der Wechselstrom in den Drahtwicklungen gegen den Uhrzeigersinn umläuft.

Die erste Hälfte der vierten Spule H1-C4 im ersten Hohlzylinderabschnitt H1 wird sowohl mit dem ersten Wechselstrom PU als auch mit dem dritten Wechselstrom PW betrieben, wobei die beiden Wechselströme sich in den Drahtwicklungen überlagern und der erste Wechselstrom PU für die Hubbewegung im Uhrzeigersinn und der dritte Wechselstrom PW für die Drehbewegung im Uhrzeigersinn umläuft.

Die zweite Hälfte der dreizehnten Spule H2-C13 im zweiten Hohlzylinderabschnitt H2 wird mit dem dritten Wechselstrom PW für die Drehbewegung und die Hubbewegung betrieben, wobei der Wechselstrom in den Drahtwicklungen im Uhrzeigersinn umläuft.

Die vierzehnte Spule H2-C14 im zweiten Hohlzylinderabschnitt H2 wird sowohl mit dem zweiten Wechselstrom PV als auch mit dem dritten Wechselstrom PW betrieben, wobei der zweite Wechselstrom PV für die Drehbewegung in den Drahtwicklungen im Uhrzeigersinn und der dritte Wechselstrom PW für die Hubbewegung in den Drahtwicklungen gegen den Uhrzeigersinn umläuft.

Die fünfzehnte Spule H2-C15 im zweiten Hohlzylinderabschnitt H2 wird sowohl mit dem ersten Wechselstrom PU als auch dem dritten Wechselstrom PW betrieben, wobei die beiden Wechselströme sich in den Drahtwicklungen überlagern und der erste Wechselstrom PU für die Drehbewegung im Uhrzeigersinn und der dritte Wechselstrom PW für die Hubbewegung im Uhrzeigersinn umläuft.

Die erste Hälfte der sechzehnten Spule H2-C16 im zweiten Hohlzylinderabschnitt H2 wird mit dem dritten Wechselstrom PW für die Drehbewegung und die Hubbewegung betrieben, wobei der Wechselstrom in den Drahtwicklungen im Uhrzeigersinn umläuft.

Die zweite Hälfte der fünfundzwanzigsten Spule H2-C25 im dritten Hohlzylinderabschnitt H3 wird sowohl mit dem zweiten Wechselstrom PV als auch mit dem dritten Wechselstrom PW betrieben, wobei der zweite Wechselstrom PV für die Drehbewegung in den Drahtwicklungen gegen den Uhrzeigersinn und der dritte Wechselstrom PW für die Hubbewegung in den Drahtwicklungen im Uhrzeigersinn umläuft.

Die sechsundzwanzigste Spule H3-C26 im dritten Hohlzylinderabschnitt H3 wird mit dem zweiten Wechselstrom PV für die Drehbewegung und die Hubbewegung betrieben, wobei der Wechselstrom in den Drahtwicklungen gegen den Uhrzeigersinn umläuft.

Die siebenundzwanzigste Spule H3-C27 im dritten Hohlzylinderabschnitt H3 sowohl mit dem ersten Wechselstrom PU als auch dem zweiten Wechselstrom PV betrieben, wobei die beiden Wechselströme sich in den Drahtwicklungen überlagern und der erste Wechselstrom PU für die Drehbewegung gegen den Uhrzeigersinn und der zweite Wechselstrom PV die Hubbewegung im Uhrzeigersinn umläuft.

Die erste Hälfte der achtundzwanzigsten Spule H3-C28 im dritten Hohlzylinderabschnitt H3 wird sowohl mit dem zweiten Wechselstrom PV als auch mit dem dritten Wechselstrom PW betrieben, wobei der zweite Wechselstrom PV für die Drehbewegung in den Drahtwicklungen gegen den Uhrzeigersinn und der dritte Wechselstrom PW für die Hubbewegung in den Drahtwicklungen im Uhrzeigersinn umläuft.

Die Bestromung des Viertelbereichs der drei Hohlzylinderabschnitte des Stators wird identisch in den weiteren drei Viertelbereichen der drei Hohlzylinderabschnitte des Stators ausgeführt. Wenn weitere Gruppen aus drei Hohlzylinderabschnitten, wie in Figur 1D gezeigt, vorgesehen sind, wird jede weitere Gruppe aus drei Hohlzylinderabschnitten dann analog zu der Gruppe aus drei Hohlzylinderabschnitten in Figur 5G bestromt.

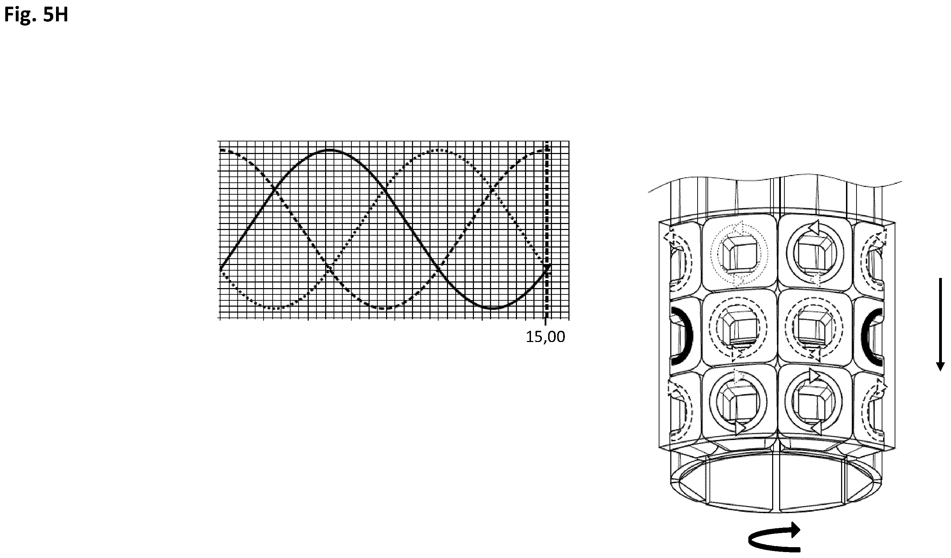

Figur 5H zeigt den Endpunkt der Dreh-Hubbewegung. Der Dreh-Hub-Aktuator 100 hat nach einem siebten Dreh-Hub-Schritt des Rotors um eine Drehung von 12° auf 90° und um einen Hub, der das 0,27-fache der Polteilung beträgt, auf einen Gesamthub mit dem 2-fachen der Polteilung erreicht.

Neben dem ersten Wellenabschnitt hat sich auch der zweite Wellenabschnitt W2 des Rotors, wie die perspektivische Darstellung zeigt, gegen die z-Richtung aus dem Ausschnitt des Stators mit den drei Hohlzylinderabschnitten herausgeschoben, während sich neben dem dritten Wellenabschnitt W3 der vierte Wellenabschnitt W4 des Rotors in den Ausschnitt des Stators mit den drei Hohlzylinderabschnitten hineingeschoben hat. Ferner haben sich die aus den übereinander liegenden Permanentmagneten des ersten Wellenabschnitts W1, des zweiten Wellenabschnitts W2, des dritten Wellenabschnitts W3 und des vierten Wellenabschnitts W4 gebildeten Permanentmagneten-Reihen gegen den Uhrzeigersinn weitergedreht.

Die Spulen des ersten Hohlzylinderabschnitts H1 liegen den Permanentmagneten des dritten Wellenabschnitts W3 und die Spulen des dritten Hohlzylinderabschnitts H3 liegen den Permanentmagneten des vierten Wellenabschnitts W4 gegenüber. Bei den Spulen des zweiten Hohlzylinderabschnitts H2 deckt die untere Hälfte die Permanentmagnete des dritten Wellenabschnitts W3 und die obere Hälfte die Permanentmagnete des vierten Wellenabschnitts W4 ab.

Im ersten Hohlzylinderabschnitt H1 decken, gesehen aus x-Richtung gegen den Uhrzeigersinn, die zweite Hälfte der ersten Spule H1-C1 und die zweite Spule H1-C2 den neunzehnten Südpol-Permanentmagnet W3-S19 des dritten Wellenabschnitts W3 und die dritte Spule H1-C3 und die erste Hälfte der vierten Spule H1-C4 den zwanzigsten Nordpol-Permanentmagnet W3-N20 des dritten Wellenabschnitts W3 ab.

Im zweiten Hohlzylinderabschnitt H2 decken, gesehen aus x-Richtung gegen den Uhrzeigersinn, mit dem unteren Hälften-Bereich die zweite Hälfte der dreizehnten Spule H2-C13 und die vierzehnte Spule H2-C14 den neunzehnten Südpol-Permanentmagnet W3-S19 des dritten Wellenabschnitts W3 und die fünfzehnte Spule H2-C15 und die erste Hälfte der sechzehnten Spule H2-C16 den zwanzigsten Nordpol-Permanentmagnet W3-N20 des dritten Wellenabschnitts W3 ab.

Ferner decken im zweiten Hohlzylinderabschnitt H2 gesehen aus der x-Richtung gegen den Uhrzeigersinn mit dem oberen Hälften-Bereich die zweite Hälfte der dreizehnten Spule H2-C13 und die vierzehnte Spule H2-C14 den siebenundzwanzigsten Nordpol-Permanentmagnet W4-N27 des vierten Wellenabschnitts W4 und die fünfzehnte Spule H2-C15 und die erste Hälfte der sechzehnten Spule H2-C16 den achtundzwanzigsten Südpol-Permanentmagnet W4-S28 des vierten Wellenabschnitts W4 ab.

Im dritten Hohlzylinderabschnitt H3 decken, gesehen aus der x-Richtung gegen den Uhrzeigersinn aneinandergereiht die erste Hälfte der fünfundzwanzigste Spule H3-C25 und die sechsundzwanzigste Spule H3-C26 den siebenundzwanzigsten Nordpol-Permanentmagnet W4-N27 des vierten Wellenabschnitts W4 und die siebenundzwanzigste Spule H3-C27 und die zweite Hälfte der achtundzwanzigsten Spule H3-C28 den achtundzwanzigsten Südpol-Permanentmagnet W4-S28 des vierten Wellenabschnitts W4 ab.

In die z-Richtung gesehen, decken die zweite Hälfte der ersten Spule H1-C1 des ersten Hohlzylinderabschnitts H1 und der untere Hälften-Bereich der zweite Hälfte der dreizehnten Spule H2-C13 des zweiten Hohlzylinderabschnitts H2 den neunzehnten Südpol-Permanentmagnet W3-S19 des dritten Wellenabschnitts W3 und der obere Hälften-Bereich der zweite Hälfte der dreizehnten Spule H2-C13 des zweiten Hohlzylinderabschnitts H2 und die zweite Hälfte der fünfundzwanzigsten Spule H3-C25 des dritten Hohlzylinderabschnitts H3 den siebenundzwanzigsten Nordpol-Permanentmagnet W4-N27 des vierten Wellenabschnitts W4 ab.

In die z-Richtung gesehen, deckt die zweite Spule H1-C2 des ersten Hohlzylinderabschnitts H1 und der untere Hälften-Bereich der vierzehnten Spule H2-C14 des zweiten Hohlzylinderabschnitts H2 den neunzehnten Südpol-Permanentmagnet W3-S19 des dritten Wellenabschnitts W3 und der obere Hälften-Bereich der vierzehnten Spule H2-C14 des zweiten Hohlzylinderabschnitts H2 und die sechsundzwanzigsten Spule H3-C26 des dritten Hohlzylinderabschnitts H3 den siebenundzwanzigsten Nordpol-Permanentmagnet W4-N27 des vierten Wellenabschnitts W4 ab.

In die z-Richtung gesehen, decken die dritte Spule H1-C3 des ersten Hohlzylinderabschnitts H1 und der untere Hälften-Bereich der fünfzehnten Spule H2-C15 des zweiten Hohlzylinderabschnitts H2 den zwanzigsten Nordpol-Permanentmagnet W3-N20 des dritten Wellenabschnitts W3 und der obere Hälften-Bereich der fünfzehnten Spule H2-C15 des zweiten Hohlzylinderabschnitts H2 und die siebenundzwanzigsten Spule H3-C27 des dritten Hohlzylinderabschnitts H3 den achtundzwanzigsten Südpol-Permanentmagneten W4-S28 des vierten Wellenabschnitts W4 ab.

In die z-Richtung gesehen, decken die erste Hälfte der vierten Spule H1-C4 des ersten Hohlzylinderabschnitts H1 und der untere Hälften-Bereich der ersten Hälfte der sechzehnten Spule H2-C16 des zweiten Hohlzylinderabschnitts H2 den zwanzigsten Nordpol-Permanentmagnet W3-N20 des dritten Wellenabschnitts W3 und der obere Hälften-Bereich der ersten Hälfte der sechzehnten Spule H2-C16 des zweiten Hohlzylinderabschnitts H2 und die erste Hälfte der achtundzwanzigste Spule H3-C28 des dritten Hohlzylinderabschnitts H3 den achtundzwanzigsten Südpol-Permanentmagneten W4-S28 des vierten Wellenabschnitts W4 ab.

Im Strom-Zeit-Diagramm, das den Verlauf des ersten Wechselstroms PU, des zweiten Wechselstroms PV und des dritten Wechselstroms PW darstellt, werden die Spulen des Viertelbereichs, die im Dreiphasen-Wechselstrom-Modus betrieben werden, mit den Stromwerten des ersten Wechselstroms PU, des zweiten Wechselstroms PV und des dritten Wechselstroms PW zum Zeitpunkt 15.00 bestromt, wie die gestrichelte Linie anzeigt.

Die perspektivische Darstellung des Viertelbereichs in Figur 5H zeigt die Bestromung am Endpunkt der Dreh-Hubbewegung, die der Bestromung am Ausgangspunkt der Dreh-Hubbewegung in Figur 5A entspricht.

Die zweite Hälfte der ersten Spule H1-C1 im ersten Hohlzylinderabschnitt H1 wird mit dem dritten Wechselstrom PW für die Drehbewegung betrieben, wobei der Wechselstrom in den Drahtwicklungen im Uhrzeigersinn umläuft.

Die zweite Spule H1-C2 im erstem Hohlzylinderabschnitt H1 wird sowohl mit dem ersten Wechselstrom PU als auch mit dem zweiten Wechselstrom PV betrieben, wobei die beiden Wechselströme sich in den Drahtwicklungen überlagern und der erste Wechselstrom PU für die Hubbewegung gegen den Uhrzeigersinn und der zweite Wechselstrom PV für die Drehbewegung im Uhrzeigersinn umläuft.

Die dritte Spule H1-C3 im ersten Hohlzylinderabschnitt H1 wird mit dem ersten Wechselstrom PU für die Drehbewegung und die Hubbewegung betrieben, wobei der Wechselstrom in den Drahtwicklungen im Uhrzeigersinn umläuft.

Die erste Hälfte der vierten Spule H1-C4 im ersten Hohlzylinderabschnitt H1 wird mit dem dritten Wechselstrom PW für die Drehbewegung betrieben, wobei der Wechselstrom in den Drahtwicklungen im Uhrzeigersinn umläuft.

Die zweite Hälfte der dreizehnten Spule H2-C13 im zweiten Hohlzylinderabschnitt H2 wird nicht bestromt.

Die vierzehnte Spule H2-C14 im zweiten Hohlzylinderabschnitt H2 wird mit dem dritten Wechselstrom PW für die Hubbewegung betrieben, wobei der Wechselstrom in den Drahtwicklungen gegen den Uhrzeigersinn umläuft.

Die fünfzehnte Spule H2-C15 im zweiten Hohlzylinderabschnitt H2 wird mit dem dritten Wechselstrom PW für die Hubbewegung betrieben, wobei der Wechselstrom in den Drahtwicklungen im Uhrzeigersinn umläuft.

Die erste Hälfte der sechzehnte Spule H2-C16 im zweiten Hohlzylinderabschnitt H2 wird nicht bestromt.

Die zweite Hälfte der fünfundzwanzigsten Spule H3-C25 im dritten Hohlzylinderabschnitt H3 wird mit dem dritten Wechselstrom PW für die Drehbewegung betrieben, wobei der Wechselstrom in den Drahtwicklungen gegen den Uhrzeigersinn umläuft.

Die sechsundzwanzigste Spule H3-C26 im dritten Hohlzylinderabschnitt H3 wird mit dem zweiten Wechselstrom PV für die Drehbewegung und die Hubbewegung betrieben, wobei der Wechselstrom in den Drahtwicklungen gegen den Uhrzeigersinn umläuft.

Die siebenundzwanzigste Spule H1-C27 im dritten Hohlzylinderabschnitt H3 wird sowohl mit dem ersten Wechselstrom PU als auch dem zweiten Wechselstrom PV betrieben, wobei die beiden Wechselströme sich in den Drahtwicklungen überlagern und der erste Wechselstrom PU für die Drehbewegung gegen den Uhrzeigersinn und der zweite Wechselstrom PV für die Hubbewegung im Uhrzeigersinn umläuft.

Die erste Hälfte der achtundzwanzigsten Spule H3-C28 im dritten Hohlzylinderabschnitt H3 wird mit dem dritten Wechselstrom PW für die Drehbewegung betrieben, wobei der Wechselstrom in den Drahtwicklungen gegen den Uhrzeigersinn umläuft.

Die Bestromung des Viertelbereichs der drei Hohlzylinderabschnitte des Stators wird identisch in den weiteren drei Viertelbereichen der drei Hohlzylinderabschnitte des Stators ausgeführt. Wenn weitere Gruppen aus drei Hohlzylinderabschnitten, wie in Figur 1D gezeigt, vorgesehen sind, wird jede weitere Gruppe aus drei Hohlzylinderabschnitten dann analog zu der Gruppe aus drei Hohlzylinderabschnitten in Figur 5H bestromt.

In Figur 6 ist der zeitliche Verlauf der Bestromung des Dreh-Hub-Aktuators 100 für die in den Figuren 5A bis 5H gezeigte Kombination der Drehung des Rotors um 90° mit dem Hub des Rotors über die Länge von zwei Permanentmagneten vom Zeitpunkt 0.00 im Strom-Zeit-Diagramm bis zum Zeitpunkt 15.00 im Strom-Zeit-Diagramm dargestellt. Der Stromverlauf ist dabei für die im Viertelbereich des Dreh-Hub-Aktuators 100 gezeigten Spulen in den drei Hohlzylinderabschnitten des Stators dargestellt.

Der Strom in ersten Spule H1-C1 und der vierten Spule H1-C4 ist identisch. Gleiches gilt für die dreizehnten Spule H2-C13 und die sechzehnte Spule H2-C16 sowie fünfundzwanzigste Spule H3-C25 und die achtundzwanzigste Spule H2-C28. Für den ersten Hohlzylinderabschnitt H1 ist der Stromverlauf der ersten Spule H1-C1 mit einer 1 gekennzeichnet und mit einem ersten Muster im Strom-Zeit-Diagramm, der zweiten Spule H1-C2 mit einer 2 gekennzeichnet und mit einem zweiten Muster im Strom-Zeit-Diagramm und der dritten Spule H1-C3 mit einer 3 gekennzeichnet und mit einem dritten Muster im Strom-Zeit-Diagramm gezeigt. Für den zweiten Hohlzylinderabschnitt H2 ist der Stromverlauf der dreizehnten Spule H2-C13 mit einer 13 gekennzeichnet und mit einem vierten Muster im Strom-Zeit-Diagramm, der vierzehnten Spule H2-C14 mit einer 14 gekennzeichnet und mit einem fünften Muster im Strom-Zeit-Diagramm und der fünfzehnten Spule H2-C15 mit einer 15 gekennzeichnet und mit einem sechsten Muster im Strom-Zeit-Diagramm gezeigt. Für den dritten Hohlzylinderabschnitt H3 ist der Stromverlauf der fünfundzwanzigsten Spule H3-C25 mit einer 25 gekennzeichnet und mit einem siebten Muster im Strom-Zeit-Diagramm, der sechsundzwanzigsten Spule H3-C26 mit einer 26 gekennzeichnet und mit einem achten Muster im Strom-Zeit-Diagramm und der siebenundzwanzigsten Spule H3-C27 mit einer 27 gekennzeichnet und mit einem neunten Muster im Strom-Zeit-Diagramm gezeigt.

Die Bestromung des Viertelbereichs der drei Hohlzylinderabschnitte des Stators wird identisch in den weiteren drei Viertelbereichen der drei Hohlzylinderabschnitte des Stators ausgeführt. Wenn weitere Gruppen aus drei Hohlzylinderabschnitten, wie in Figur 1D gezeigt, vorgesehen sind, wird jede weitere Gruppe aus drei Hohlzylinderabschnitten dann analog zu der Gruppe aus drei Hohlzylinderabschnitten bestromt.

Ausgehend von der Bestromung der Spulen des Viertelbereichs, wie sie in Fig. 5H gezeigt ist, kann eine weitere gleichzeitige Drehung des Rotors um 90° und ein Hub des Rotors über die Länge von zwei Permanentmagneten ausgeführt werden, die in den Figuren 5A bis 5H dargestellt ist.

## Patentansprüche

1. Dreh-Hub-Aktuator (100) mit
einem hohlzylinderförmigen Stator (108) und einem Rotor (201), der koaxial im hohlzylinderförmigen Stator (108) angeordnet ist, und einer Steuereinheit (114),
wobei der Stator (108) eine Mehrzahl von Hohlzylinderabschnitten (116,H1,H2,H3) aufweist, wobei jeder Hohlzylinderabschnitt (116) eine Mehrzahl von über den Hohlzylinderabschnittsumfang verteilt angeordneten Spulen (109) umfasst,
wobei der Rotor (201) eine Mehrzahl von Wellenabschnitten (202,W1,W2,W3,W4) aufweist, wobei jeder Wellenabschnitt (202) eine Mehrzahl von über den Wellenabschnittsumfang verteilt angeordnete Permanentmagnete (203) umfasst, wobei sich die Polung der Permanentmagnete (203) des Rotors (201) derart abwechselt, dass sich ein Schachbrettmuster ergibt,
wobei die Spulen (109) in einem Dreiphasen-Wechselstrom-Modus betrieben werden, wobei jeder Hohlzylinderabschnitt (116) auf seinem Umfang verteilt jeweils drei Spulen (109) oder ein N-faches von den drei Spulen (109) aufweist, und
wobei in Längsrichtung des hohlzylinderförmigen Stators (108) drei Hohlzylinderabschnitte (116) oder ein N-faches von den drei Hohlzylinderabschnitten (116) vorgesehen sind,
wobei die Steuereinheit (114) ausgelegt ist, für die Drehbewegung des Rotors (201) die Spulen (109) der Hohlzylinderabschnitte (116) des Stators (108) so zu bestromen, dass längs der Hohlzylinderabschnitte (116) ein magnetisches Wanderfeld erzeugt wird, wobei die bestromten Spulenreihen längs der Hohlzylinderabschnitte (116) wenigstens teilweise abwechselnd gegenläufig bestromt werden, und/ oder
wobei die Steuereinheit (114) ausgelegt ist, für die Hubbewegung des Rotors (201) die Spulen (109) der Hohlzylinderabschnitte (116) des Stators (108) so zu bestromen, dass quer zu den Hohlzylinderabschnitten (116) ein magnetisches Wanderfeld erzeugt wird, wobei die bestromten Spulenreihen quer zu den Hohlzylinderabschnitten (116) wenigstens teilweise abwechselnd gegenläufig bestromt werden
**dadurch gekennzeichnet, dass**
eine von vier Permanentmagneten (203) in zwei Wellenabschnitten (202,W1,W2) des Rotors (201) aufgespannte äußere Umfangsfläche des Rotors (201) von einer von den neun Spulen (109) in drei Hohlzylinderabschnitten (116,H1,H2,H3) des Stators (108) aufgespannten inneren Umfangsfläche des Stators (108) abgedeckt wird.

2. Dreh-Hub-Aktuator (100) nach Anspruch 1,
wobei die Permanentmagneten (203) auf dem Wellenabschnittsumfang jedes Wellenabschnitts (202) einen Ring bilden,
wobei die Permanentmagnete (203) auf dem Wellenabschnittsumfang des Wellenabschnitts (202) jeweils die Form eines gekrümmten Rechtecks besitzen,
wobei sich die Polung der aneinander angrenzenden Permanentmagnete (203) auf dem Wellenabschnitt (202) jeweils abwechselt, und
wobei die Wellenabschnitte (202) jeweils so angeordnet sind, dass sich die Polung der aneinander angrenzenden Permanentmagnete (203) von benachbarten Wellenabschnitten (202) abwechselt.

3. Dreh-Hub-Aktuator (100) nach Anspruch 1 oder 2,
wobei die Anzahl der Spulen (109) pro Hohlzylinderabschnitt (116) größer als die Anzahl der Permanentmagneten (203) pro Wellenabschnitt (202) ist.

4. Dreh-Hub-Aktuator (100) nach einem der Ansprüche 1 bis 3,
wobei die Steuereinheit (114) ausgelegt ist, für die Drehbewegung des Rotors (201) von den drei nebeneinanderliegenden Hohlzylinderabschnitten (116) zwei Spulenreihen längs der Hohlzylinderabschnitte (116) gegenläufig zu bestromen, und
wobei die Steuereinheit (114) ausgelegt ist, für die Hubbewegung des Rotors (201) in den drei nebeneinanderliegenden Hohlzylinderabschnitten (116) zwei Spulenreihen quer zu den Hohlzylinderabschnitten (116) gegenläufig zu bestromen.

5. Dreh-Hub-Aktuator (100) nach Anspruch 4,
wobei die Steuereinheit (114) ausgelegt ist, für die Drehbewegung des Rotors (201) von den drei nebeneinanderliegenden Hohlzylinderabschnitten (116) eine Spulenreihe längs der Hohlzylinderabschnitte (116) nicht zu bestromen, und
wobei die Steuereinheit (114) ausgelegt ist, für die Hubbewegung des Rotors (201) in den drei nebeneinanderliegenden Hohlzylinderabschnitten (116) eine Spulenreihen quer zu den Hohlzylinderabschnitten nicht zu bestromen.

6. Dreh-Hub-Aktuator (100) nach einem der Ansprüche 1 bis 5, wobei die Steuereinheit (114) ausgelegt ist, die Spulen (109) der Hohlzylinderabschnitte (116) des Stators (108) einzeln mit Wechselstrom zu beaufschlagen, um in der jeweiligen Spule (109) jeweils den Phasenstrom einzustellen, der für das längs der Hohlzylinderabschnitte (116) hervorzurufende magnetische Wanderfeld und für das quer zu den Hohlzylinderabschnitten (116) hervorzurufende magnetisches Wanderfeld zur Ausführung einer vorgegebenen Hub- und/oder Drehbewegung des Rotors (201) notwendig ist.

7. Dreh-Hub-Aktuator (100) nach einem der Ansprüche 1 bis 5, wobei die Steuereinheit (114) ausgelegt ist, zur Ausführung einer vorgegebenen Dreh- und Hubbewegung des Rotors (201) Hohlzylinderabschnitte (116) des Stators (108) für die Drehbewegung des Rotors (201) und weitere Hohlzylinderabschnitte (116) des Stators (108) für die Hubbewegung des Rotors (201) zu bestromen.

8. Dreh-Hub-Aktuator (100) nach einem der Ansprüche 1 bis 7, wobei auf einer Gehäuseinnenwandung des Stators (108) ein regelmäßiges Gitter von Spulenkernen (110) ausgeführt ist, wobei jeder Spulenkern (110) eine Drahtwicklung (111) trägt.

9. Dreh-Hub-Aktuator (100) nach einem der Ansprüche 1 bis 8 mit einer Kolbenstange, und
einem Zylinderrohrgehäuse (101), das an den beiden Enden jeweils einen Lagerdeckel (102, 103) aufweist,
wobei jeder Lagerdeckel (102, 103) einen Führungsring (104, 105) und einen Abstreifer (106, 107) mit einer Durchgangsöffnung aufweist,
wobei an der Gehäuseinnenwandung die Mehrzahl von Hohlzylinderabschnitten (116) des Stators (108) angeordnet ist,
wobei der Außenumfang der Kolbenstange die Mehrzahl von Wellenabschnitten (202) des Rotors (201) aufweist, und
wobei die Kolbenstange sich durch die Führungsringe (104, 105) und die Durchgangsöffnungen in den Abstreifern (106, 107) der beiden Lagerdeckel (102, 103) erstreckt.

10. Dreh-Hub-Aktuator (100) nach Anspruch 9,
wobei im Zylinderrohrgehäuse (101) ein Positionsgeber (112) zur Lageerfassung der Kolbenstange vorgesehen ist.

## Claims

1. A rotary lifting actuator (100) comprising
a hollow cylindrical stator (108) and a rotor (201) which is arranged coaxially in the hollow cylindrical stator (108), and
a controller (114),
wherein the stator (108) comprises a plurality of hollow cylinder sections (116, H1, H2, H3), each hollow cylinder section (116) comprising a plurality of coils (109) arranged over the hollow cylinder section circumference in a distributed manner,
wherein the rotor (201) comprises a plurality of shaft sections (202, W1, W2, W3, W4), wherein each shaft section (202) comprises a plurality of permanent magnets (203) arranged over the shaft section circumference in a distributed manner, wherein the polarity of the permanent magnets (203) of the rotor (201) alternates in such a way that a checkerboard pattern is produced,
wherein the coils (109) are operated in a three-phase alternating current mode,
wherein each hollow cylinder section (116) comprises three coils (109) or an N-fold of the three coils (109), respectively, on its circumference in a distributed manner, and
wherein three hollow cylinder sections (116) or an N-fold of the three hollow cylinder sections (116) are provided in the longitudinal direction of the hollow cylindrical stator (108)
wherein the controller (114) is embodied to energize the coils (109) of the hollow cylinder sections (116) of the stator (108) for the rotary movement of the rotor (201) in such a way that a traveling magnetic field is generated along the hollow cylinder sections (116), wherein the energized coil rows along the hollow cylinder sections (116) are at least in part energized alternately in opposite directions, and/or
wherein the controller (114) is embodied to energize the coils (109) of the hollow cylinder sections (116) of the stator (108) for the lifting movement of the rotor (201) in such a way that a traveling magnetic field is generated transversely with regard to the hollow cylinder sections (116), the energized coil rows being energized transversely with regard to the hollow cylinder sections (116) at least partially alternately in opposite directions, **characterized in that**
an outer circumferential surface of the rotor (201) spanned by four permanent magnets (203) in two shaft sections (202, W1, W2) of the rotor (201) is covered by an inner circumferential surface of the stator (108) spanned by the nine coils (109) in three hollow cylinder sections (116, H1, H2, H3) of the stator (108).

2. The rotary lifting actuator (100) according to claim 1,
wherein the permanent magnets (203) form a ring on the shaft section circumference of each shaft section (202),
wherein the permanent magnets (203) on the shaft section circumference of the shaft section (202) each have the shape of a curved rectangle,
wherein the polarity of the adjacent permanent magnets (203) on the shaft section (202) alternates in each case, and
wherein the shaft sections (202) are each arranged in such a way that the polarity of the adjacent permanent magnets (203) of neighboring shaft sections (202) alternates.

3. The rotary lifting actuator (100) according to claim 1 or 2,
wherein the number of coils (109) per hollow cylinder section (116) is larger than the number of permanent magnets (203) per shaft section (202).

4. The rotary lifting actuator (100) according to any one of claims 1 to 3,
wherein the controller (114) is embodied to energize two rows of coils in opposite directions along the hollow cylinder sections (116) for the rotary movement of the rotor (201) of the three adjacent hollow cylinder sections (116), and
wherein the controller (114) is embodied to energize two rows of coils transversely with regard to the hollow cylinder sections (116) in opposite directions for the lifting movement of the rotor (201) in the three adjacent hollow cylinder sections (116).

5. The rotary lifting actuator (100) according to claim 4,
wherein the controller (114) is embodied not to energize a coil row along the hollow cylinder sections (116) for the rotary movement of the rotor (201) of the three adjacent hollow cylinder sections (116), and
wherein the controller (114) is embodied not to energize a coil row transversely with regard to the hollow cylinder sections for the lifting movement of the rotor (201) in the three adjacent hollow cylinder sections (116).

6. The rotary lifting actuator (100) according to any one of claims 1 to 5, wherein the controller (114) is embodied to apply alternating current individually to the coils (109) of the hollow cylinder sections (116) of the stator (108) in order to adjust the phase current in the respective coil (109), which is necessary for the traveling magnetic field to be generated along the hollow cylinder sections (116) and for the traveling magnetic field to be generated transversely with regard to the hollow cylinder sections (116) in order to carry out a predetermined lifting and/or rotary movement of the rotor (201).

7. The rotary lifting actuator (100) according to any one of claims 1 to 5, wherein the controller (114) is embodied to energize hollow cylinder sections (116) of the stator (108) for the rotary movement of the rotor (201) and further hollow cylinder sections (116) of the stator (108) for the lifting movement of the rotor (201) in order to carry out a predetermined rotary and lifting movement of the rotor (201).

8. The rotary lifting actuator (100) according to any one of claims 1 to 7, wherein a regular grid of coil cores (110) is implemented on an inner housing wall of the stator (108), each coil core (110) carrying a wire winding (111).

9. The rotary lifting actuator (100) according to any one of claims 1 to 8 comprising a piston rod, and
a cylindrical tube housing (101) which comprises a bearing cap (102, 103) at each of the two ends,
wherein each bearing cap (102, 103) comprises a guide ring (104, 105) and a wiper (106, 107) having a through hole,
wherein the plurality of hollow cylinder sections (116) of the stator (108) is arranged on the inner wall of the housing,
wherein the outer circumference of the piston rod comprises the plurality of shaft sections (202) of the rotor (201), and
wherein the piston rod extends through the guide rings (104, 105) and the through holes in the wipers (106, 107) of the two bearing caps (102, 103).

10. The rotary lifting actuator (100) according to claim 9,
wherein a position sensor (112) for detecting the position of the piston rod is provided in the cylindrical tube housing (101).

## Revendications

1. Actionneur à mouvement de translation et rotation (100) comprenant
un stator (108) de forme cylindrique creuse et un rotor (201) disposé coaxialement dans le stator (108) de forme cylindrique creuse, et
une unité de commande (114),
dans lequel le stator (108) présente une pluralité de parties de cylindre creux (116, H1, H2, H3), chaque partie de cylindre creux (116) comprenant une pluralité de bobines (109) réparties sur la circonférence de la partie de cylindre creux, le rotor (201) présentant une pluralité de parties d'arbre (202, W1, W2, W3, W4), chaque partie d'arbre (202) comprenant une pluralité d'aimants permanents (203) répartis sur la circonférence de la partie d'arbre, la polarité des aimants permanents (203) du rotor (201) alternant de manière à générer un motif en damier,
dans lequel les bobines (109) sont actionnées dans un mode à courant alternatif triphasé,
dans lequel chaque partie de cylindre creux (116) comporte respectivement trois bobines (109) ou un multiple N des trois bobines (109) réparties sur sa circonférence, et
dans lequel trois parties de cylindre creux (116) ou un multiple N des trois parties de cylindre creux (116) sont prévues dans le sens longitudinal du stator (108) de forme cylindrique creuse,
dans lequel l'unité de commande (114) est conçue pour alimenter les bobines (109) des parties de cylindre creux (116) du stator (108) pour le mouvement de rotation du rotor (201) de manière à générer un champ magnétique à ondes progressives le long des parties de cylindre creux (116), les rangées de bobines alimentées en courant le long des parties de cylindre creux (116) étant alimentées au moins partiellement en alternance en sens opposé, et/ou
dans lequel l'unité de commande (114) est conçue pour alimenter les bobines (109) des parties de cylindre creux (116) du stator (108) pour le mouvement de translation du rotor (201) de telle manière qu'un champ magnétique à ondes progressives est généré perpendiculairement aux parties de cylindre creux (116),
dans lequel les rangées de bobines alimentées perpendiculairement aux parties de cylindre creux (116) sont alimentées au moins partiellement en alternance en sens opposé,
**caractérisé**
**en ce qu'**une surface circonférentielle extérieure du rotor (201) s'étendant sur quatre aimants permanents (203) dans deux parties d'arbre (202, W1, W2) du rotor (201) est recouverte par une surface circonférentielle intérieure du stator (108) s'étendant sur neuf bobines (109) dans trois parties de cylindre creux (116, H1, H2, H3) du stator (108).

2. Actionneur à mouvement de translation et rotation (100) selon la revendication 1,
dans lequel les aimants permanents (203) forment un anneau sur la circonférence de partie d'arbre de chaque partie d'arbre (202),
dans lequel les aimants permanents (203) présentent respectivement, sur la circonférence de partie d'arbre de la partie d'arbre (202), la forme d'un rectangle incurvé,
dans lequel la polarité des aimants permanents (203) adjacents les uns aux autres sur la partie d'arbre (202) alterne respectivement, et
dans lequel les parties d'arbre (202) sont respectivement disposées de telle sorte que la polarité des aimants permanents (203) adjacents les uns aux autres de parties d'arbre (202) voisines alterne.

3. Actionneur à mouvement de translation et rotation (100) selon la revendication 1 ou 2,
dans lequel le nombre de bobines (109) par partie de cylindre creux (116) est supérieur au nombre d'aimants permanents (203) par partie d'arbre (202).

4. Actionneur à mouvement de translation et rotation (100) selon l'une quelconque des revendications 1 à 3,
dans lequel l'unité de commande (114) est conçue pour alimenter en sens opposé deux rangées de bobines le long des parties de cylindre creux (116) parmi les trois parties de cylindre creux (116) adjacentes pour le mouvement de rotation du rotor (201), et
dans lequel l'unité de commande (114) est conçue pour alimenter en sens opposé deux rangées de bobines perpendiculairement aux parties de cylindre creux (116) dans les trois parties de cylindre creux (116) adjacentes pour le mouvement de translation du rotor (201).

5. Actionneur à mouvement de translation et rotation (100) selon la revendication 4,
dans lequel l'unité de commande (114) est conçue pour ne pas alimenter une rangée de bobines le long des parties de cylindre creux (116) parmi les trois parties de cylindre creux (116) adjacentes pour le mouvement de rotation du rotor (201), et
dans lequel l'unité de commande (114) est conçue pour ne pas alimenter une rangée de bobines perpendiculairement aux parties de cylindre creux dans les trois parties de cylindre creux (116) adjacentes pour le mouvement de translation du rotor (201).

6. Actionneur à mouvement de translation et rotation (100) selon l'une quelconque des revendications 1 à 5, dans lequel l'unité de commande (114) est conçue pour exciter individuellement les bobines (109) des parties de cylindre creux (116) du stator (108) avec un courant alternatif afin de régler respectivement dans la bobine (109) respective le courant de phase qui est nécessaire pour le champ magnétique à ondes progressives devant être généré le long des parties de cylindre creux (116) et pour le champ magnétique à ondes progressives devant être généré perpendiculairement aux parties de cylindre creux (116) pour l'exécution d'un mouvement de translation et/ou de rotation prédéfini du rotor (201).

7. Actionneur à mouvement de translation et rotation (100) selon l'une quelconque des revendications 1 à 5, dans lequel l'unité de commande (114) est conçue pour alimenter des parties de cylindre creux (116) du stator (108) pour le mouvement de rotation du rotor (201) et d'autres parties de cylindre creux (116) du stator (108) pour le mouvement de translation du rotor (201) afin d'exécuter un mouvement de rotation et de translation prédéfini du rotor (201).

8. Actionneur à mouvement de translation et rotation (100) selon l'une quelconque des revendications 1 à 7, dans lequel une grille régulière de noyaux de bobine (110) est réalisée sur une paroi intérieure de boîtier du stator (108), chaque noyau de bobine (110) portant un enroulement de fil (111).

9. Actionneur à mouvement de translation et rotation (100) selon l'une quelconque des revendications 1 à 8, comprenant
une tige de piston, et
un boîtier de tube cylindrique (101) présentant respectivement un capot de palier (102, 103) aux deux extrémités,
dans lequel chaque capot de palier (102, 103) présente une bague de guidage (104, 105) et un racleur (106, 107) présentant une ouverture de passage,
dans lequel la pluralité de parties de cylindre creux (116) du stator (108) est disposée sur la paroi intérieure de boîtier,
dans lequel la circonférence extérieure de la tige de piston présente la pluralité de parties d'arbre (202) du rotor (201), et
dans lequel la tige de piston s'étend à travers les bagues de guidage (104, 105) et les ouvertures de passage dans les racleurs (106, 107) des deux couvercles de palier (102, 103).

10. Actionneur à mouvement de translation et rotation (100) selon la revendication 9,
dans lequel un capteur de position (112) destiné à détecter la position de la tige de piston est prévu dans le boîtier de tube cylindrique (101).
